# EUROPEAN PATENT APPLICATION

(11) **EP 4 745 744 A1**
(43) Date of publication of application: **20.05.2026**
(21) Application number: 24839498.3
(22) Date of filing: 24.06.2024
(51) Int. Cl.: G06F 3/0488, G06F 3/0354, G06F 3/0484

(54) **INFORMATION PROCESSING DEVICE, INFORMATION PROCESSING METHOD, AND PROGRAM**

(30) Priority: 13.07.2023 JP 2023115268
(71) Applicant: Sony Group Corporation, Tokyo 108-0075 (JP)
(72) Inventor: SHIRAI, Yuichi, Tokyo 108-0075 (JP); FURUSAWA, Kohei, Tokyo 108-0075 (JP); DEGUCHI, Takumi, Tokyo 108-0075 (JP)
(74) Representative: D Young & Co LLP
(86) International application number: PCT/JP2024/022842
(87) International publication number: WO 2025/013605

(57) **Abstract**

An information processing apparatus according to the present technology includes: a UI processing unit that performs user interface processing for simultaneously bringing a plurality of fingers set as a fingerprint registration target into contact with an operation area; a reading processing unit that reads each of fingerprints of the plurality of fingers brought into contact with the operation area; and a fingerprint registration processing unit that performs, for each of the plurality of fingers, processing of making a registration of the read fingerprint and a type of the finger in association with each other.

## Description

### TECHNICAL FIELD

The present technology relates to a technology of an information processing apparatus, an information processing method, and a program that acquires a fingerprint of a finger touching an operation unit.

### BACKGROUND ART

In portable equipment such as a smartphone and a tablet terminal, a touch panel system in which a display unit is configured to also serve as an operation unit is adopted in order to omit operation buttons and operation equipment (for example, Patent Document 1).

### CITATION LIST

### PATENT DOCUMENT

Patent Document 1: Japanese Patent Application Laid-Open No. 2009-086184

### SUMMARY OF THE INVENTION

### PROBLEMS TO BE SOLVED BY THE INVENTION

In order to properly use a plurality of functions in such equipment, an operation area on a display unit is divided by preparing an icon for each function, an operation type such as a tap or a swipe is divided, or a hierarchy is divided for each function like a menu item.

However, it cannot be said that usability is necessarily high, for example, as the number of functions increases, the number of icons increases and the operation area becomes narrower, the number of operation types increases too much, or the number of times of operations for executing the functions increases too much.

Therefore, an object of the present technology is to improve usability of an operation related to a touch panel.

### SOLUTIONS TO PROBLEMS

An information processing apparatus according to the present technology includes: a UI processing unit that performs user interface processing for simultaneously bringing a plurality of fingers set as a fingerprint registration target into contact with an operation area; a reading processing unit that reads each of fingerprints of the plurality of fingers brought into contact with the operation area; and a fingerprint registration processing unit that performs, for each of the plurality of fingers, processing of making a registration of the read fingerprint and a type of the finger in association with each other.

In this configuration, it is possible to register fingerprints of the plurality of fingers at a time by bringing the plurality of fingers into contact with the operation area.

### BRIEF DESCRIPTION OF DRAWINGS

Fig. 1 is a diagram illustrating an appearance of a tablet terminal as one aspect of an information processing apparatus according to an embodiment of the present technology.
Fig. 2 is a block diagram illustrating an example of a hardware configuration of the information processing apparatus.
Fig. 3 is a functional block diagram of a tablet terminal.
Fig. 4 is a diagram for explaining an operation area set on a display unit.
Fig. 5 is an example of an image displayed in an operation area in a first example of a fingerprint registration mode.
Fig. 6 is a diagram illustrating a state in which a hand is placed in accordance with an image in the first example of the fingerprint registration mode.
Fig. 7 is an example of an image for executing a procedure of floating a palm in the first example of the fingerprint registration mode.
Fig. 8 is an example of an image for executing a procedure of bringing fingertips in contact with an operation area close to each other in the first example of the fingerprint registration mode.
Fig. 9 is a diagram of a modification in which a procedure is started without being in contact with a palm in the first example of the fingerprint registration mode.
Fig. 10 is an explanatory diagram of a procedure for sliding the thumb forward in the first example of the fingerprint registration mode.
Fig. 11 is a diagram for describing a change in a finger-side contact area for a thumb in a procedure of sliding the thumb forward in the first example of the fingerprint registration mode.
Fig. 12 is an example of an image for executing a procedure of bringing both hands into contact with an operation area in a second example of the fingerprint registration mode.
Fig. 13 is an example of an image for executing a procedure of bringing four fingers other than a thumb of a right hand into contact with an operation area in a third example of the fingerprint registration mode.
Fig. 14 is an example of an image for executing a procedure of separating a palm from the operation area and raising a fingertip in the third example of the fingerprint registration mode.
Fig. 15 is an example of an image for executing a procedure of bringing the thumb of the right hand into contact with the operation area in the third example of the fingerprint registration mode.
Fig. 16 is an example of an image for executing a procedure of bringing the thumb of the right hand into contact with the operation area with the thumb raised in the third example of the fingerprint registration mode.
Fig. 17 is an example of an image for executing a procedure of bringing four fingers other than the thumb of one of the right and left hands without designating the right and left hands into contact with the operation area in the third example of the fingerprint registration mode.
Fig. 18 is a diagram illustrating a state in which a user brings the finger into contact with the operation area in accordance with the image of Fig. 17 in the third example of the fingerprint registration mode.
Fig. 19 is a diagram illustrating a state in which a small hand is brought into contact with an image displayed in an operation area in a fourth example of the fingerprint registration mode.
Fig. 20 is a diagram illustrating a state in which an image displayed in the operation area is adjusted in accordance with the size of a hand brought into contact with the operation area in the fourth example of the fingerprint registration mode.
Fig. 21 is an example of an image for instructing to slowly move a fingertip in a modification of the fingerprint registration mode.
Fig. 22 is a diagram for notifying a user of a finger that has failed to be read in a modification of the fingerprint registration mode.
Fig. 23 is an example of an image for rereading a fingerprint of a finger that has failed to be read at a time in a modification of the fingerprint registration mode.
Fig. 24 is an example of an image for rereading fingerprints other than a thumb among fingerprints of fingers that have failed to be read in a modified example of the fingerprint registration mode.
Fig. 25 is an example of an image for rereading a fingerprint of a thumb among fingerprints of fingers that have failed to be read in a modified example of the fingerprint registration mode.
Fig. 26 is a flowchart illustrating an example of processing executed by a CPU for fingerprint registration.
Fig. 27 is a flowchart illustrating an example of rereading processing.
Fig. 28 is a flowchart illustrating another example of the rereading processing.
Fig. 29 is a flowchart illustrating another example of processing executed by a CPU for fingerprint registration.
Fig. 30 is a diagram for explaining a difference between a finger-side contact area at the time of fingerprint registration and a finger-side contact area at the time of fingerprint reading after registration.
Fig. 31 is a diagram illustrating an example of fingerprint information before and after update.
Fig. 32 is a flowchart of an example of processing executed by a CPU to realize update of fingerprint information.
Fig. 33 is a first example of an orientation of the finger operating a tablet terminal in a first example regarding the use of the fingerprint information.
Fig. 34 is a second example of an orientation of the finger operating the tablet terminal in the first example regarding the use of the fingerprint information.
Fig. 35 is a third example of an orientation of the finger operating the tablet terminal in the first example regarding the use of the fingerprint information.
Fig. 36 is a fourth example of an orientation of the finger operating the tablet terminal in the first example regarding the use of the fingerprint information.
Fig. 37 is a flowchart illustrating an example of processing executed by the CPU to realize the first example regarding the use of the fingerprint information.
Fig. 38 is an explanatory diagram in a case where the first example regarding the use of the fingerprint information is applied to a smartphone.
Fig. 39 is an explanatory diagram of a case where image capturing is performed using a tablet terminal in a second example regarding the use of the fingerprint information.
Fig. 40 is a flowchart illustrating an example of processing executed by the CPU to realize the second example regarding the use of the fingerprint information.
Fig. 41 is a diagram illustrating a relationship between an image captured in the second example regarding the use of the fingerprint information and an orientation of the image.
Fig. 42 is a diagram for describing an example of operating a smartphone with one hand in a third example regarding the use of the fingerprint information.
Fig. 43 is a diagram for describing an example of operating a smartphone with both hands in the third example regarding the use of the fingerprint information.
Fig. 44 is a flowchart illustrating an example of processing executed by the CPU to realize the third example regarding the use of the fingerprint information.
Fig. 45 is a diagram illustrating an example of a home screen of a tablet terminal in a fourth example regarding the use of the fingerprint information.
Fig. 46 is a diagram illustrating a state in which a mail application is activated in a state of being logged in with a private account in the fourth example regarding the use of the fingerprint information.
Fig. 47 is a diagram illustrating a state in which a mail application is activated in a state of being logged in with a business account in the fourth example regarding the use of the fingerprint information.
Fig. 48 is a flowchart illustrating an example of processing executed by the CPU to realize the fourth example regarding the use of the fingerprint information.
Fig. 49 is a diagram illustrating an input mode in a desk placement mode in a fifth example regarding the use of the fingerprint information.
Fig. 50 is a diagram illustrating an input mode in a two-handed mode in the fifth example regarding the use of the fingerprint information.
Fig. 51 is a diagram illustrating an example in which an operation area is set over substantially the entire display unit in the fifth example regarding the use of the fingerprint information.
Fig. 52 is a flowchart illustrating an example of processing executed by the CPU to realize the fifth example regarding the use of the fingerprint information.
Fig. 53 is a flowchart illustrating an example of processing executed by the CPU to realize guidance to fingerprint registration.
Fig. 54 is a diagram illustrating an example of an assignment screen of a first UI example of assignment processing.
Fig. 55 is a diagram illustrating a state in which a right hand index finger is assigned to a certain function in the first UI example of the assignment processing.
Fig. 56 is a diagram illustrating an example of highlight display of a finger type and a function to be assigned in the first UI example of the assignment processing.
Fig. 57 is a diagram illustrating an example of performing display of one hand at a time in the first UI example of the assignment processing.
Fig. 58 is a diagram illustrating an example of an assignment screen of a second UI example of the assignment processing.
Fig. 59 is a diagram illustrating a state in which a hand image display area is superimposed on the assignment screen of the second UI example of the assignment processing.
Fig. 60 is a flowchart illustrating an example of processing executed by the CPU to realize the assignment processing.
Fig. 61 is a diagram illustrating an example of a fingerprint setting screen.
Fig. 62 is a diagram illustrating an example of an assignment list screen.
Fig. 63 is a diagram illustrating an example of a game screen.
Fig. 64 is a diagram illustrating an example in which an assignment screen is superimposed on the game screen.

### MODE FOR CARRYING OUT THE INVENTION

Hereinafter, an embodiment will be described in the following order.
<1. Configuration of information processing apparatus>
<2. Functional configuration>
<3. Fingerprint registration>
<3-1. First example of registration mode>
<3-2. Second example of registration mode>
<3-3. Third example of registration mode>
<3-4. Fourth example of registration mode>
<3-5. Modification of registration mode>
<3-6. Processing flow for fingerprint registration>
<4. Processing after fingerprint registration>
<4-1. Update of fingerprint information>
<4-2. First example regarding use of fingerprint information>
<4-3. Second example regarding use of fingerprint information>
<4-4. Third example regarding use of fingerprint information>
<4-5. Fourth example regarding use of fingerprint information>
<4-6. Fifth example regarding use of fingerprint information>
<5. Guidance to fingerprint registration>
<6. First summary>
<7. Assignment of fingerprint>
<7-1. First UI example of assignment processing>
<7-2. Second UI example of assignment processing>
<7-3. Modification of UI example of assignment processing>
<7-4. Processing flow related to assignment processing>
<7-5. Mode of assignment screen>
<7-5-1. First example of assignment screen>
<7-5-2. Second example of assignment screen>
<7-6. Activation of function based on assignment>
<8. Second summary>
<9. Part 1 of present technology>
<10. Part 2 of present technology>

### <1. Configuration of information processing apparatus>

A configuration example of an information processing apparatus 1 according to the present technology will be described. Note that, here, a tablet terminal 1A as a portable terminal apparatus is taken as an example of the information processing apparatus 1, but the implementation of the present technology is not limited thereto.

For example, the information processing apparatus 1 may be a portable terminal apparatus such as a smartphone in addition to the tablet terminal 1A. Furthermore, the tablet terminal 1A includes a control unit and a display unit, but the present technology can also be applied to an information processing apparatus 1 such as a personal computer including a control unit and a display unit that is a separate apparatus. Furthermore, the present technology can be applied not only to the portable information processing apparatus 1 but also to the stationary information processing apparatus 1.

That is, the tablet terminal 1A is merely one mode for implementing the information processing apparatus 1 of the present technology.

Note that, in a case where a smartphone as one aspect of the information processing apparatus 1 is taken as an example, the smartphone is described as a smartphone 1B.

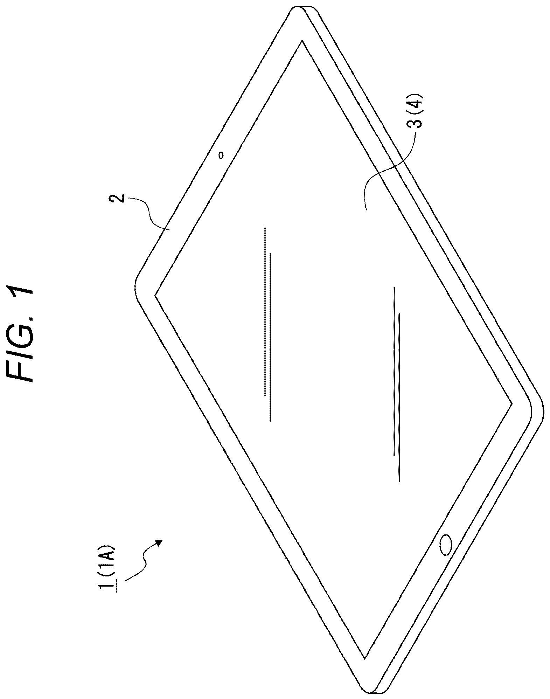

Fig. 1 illustrates an external appearance of the tablet terminal 1A as the information processing apparatus 1.

The tablet terminal 1A includes a housing unit 2 formed in a box shape in which an internal space is formed and each part is disposed inside and outside, a display unit 3 attached so as to be fitted into an opening formed in the housing unit 2, various operators (not illustrated), and the like.

Furthermore, a sensor that detects a user's operation is provided in the housing unit 2 and the display unit 3. For example, a sensor provided in the display unit 3 detects that the user has performed a touch operation or a swipe operation on the display unit 3. That is, the display unit 3 functions as the operation unit 4 such as a so-called touch panel.

Note that the display unit 3 as an operation unit 4 is a touch panel having a full-screen fingerprint authentication function.

In the tablet terminal 1A, it is possible to read a fingerprint of a finger in contact with the operation unit 4 in a case where a fingertip is in contact with the operation unit 4.

The tablet terminal 1A appropriately performs fingerprint registration processing of registering the read fingerprint, processing of collating the read fingerprint with fingerprint registration information, and the like.

In the fingerprint reading processing, a light emitting unit and a light receiving unit disposed below the display unit 3 are used.

The light emitting unit emits light such as visible light or infrared light from the inside of the housing unit 2 toward the surface of the display unit 3. The light receiving unit receives reflected light reflected on the surface of the display unit 3 toward the inside of the tablet terminal 1A. A ridge line forming the fingerprint of the fingertip or a valley portion between the ridge lines is detected according to the light amount of the reflected light in the light receiving unit.

In the following description, a series of processing related to light emission by the light emitting unit and light reception by the light receiving unit will be referred to as "fingerprint imaging processing" for convenience. Furthermore, fingerprint information obtained by the fingerprint imaging processing may be referred to as a "fingerprint image". Note that the fingerprint image does not need to be expressed in a predetermined image format as long as irregularity information as a fingerprint is expressed.

Note that the full-screen fingerprint authentication function included in the display unit 3 may not be realized by including the light emitting unit and the light receiving unit.

For example, the full-screen fingerprint authentication function included in the display unit 3 may be realized by a capacitance method or an ultrasonic method.

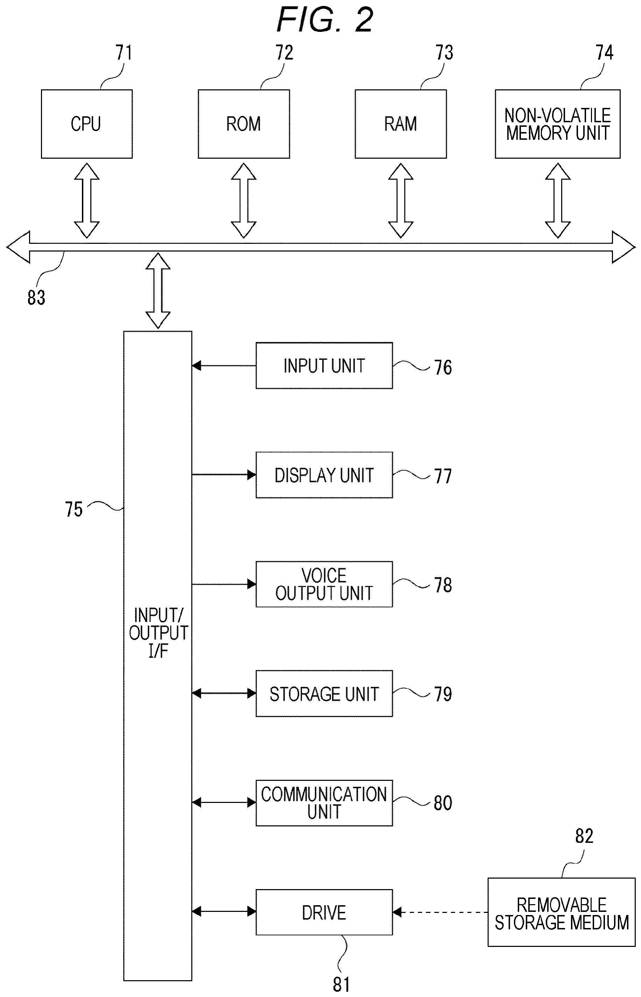

A hardware configuration of the information processing apparatus 1 such as the tablet terminal 1A will be described with reference to Fig. 2. Note that the information processing apparatus 1 does not need to include all the following configurations, and may include only some of them.

A central processing unit (CPU) 71 of the information processing apparatus 1 executes various types of processing in accordance with a program stored in a read only memory (ROM) 72, or a non-volatile memory unit 74, for example, an electrically erasable programmable read only memory (EEP-ROM) or the like, or a program loaded from a storage unit 79 to a RAM 73. Furthermore, the RAM 73 also stores, as appropriate, data and the like necessary for the CPU 71 to execute the various types of processing.

The CPU 71, the ROM 72, the RAM 73, and the non-volatile memory unit 74 are connected to one another via a bus 83. Furthermore, an input/output interface 75 is also connected to the bus 83.

An input unit 76 including an operator or an operation device is connected to the input/output interface 75.

For example, as the input unit 76, various operators and operation devices such as a keyboard, a mouse, a key, a dial, the above-described touch panel, a touch pad, and a remote controller are assumed.

A user operation is detected by the input unit 76, and a signal corresponding to an input operation is interpreted by the CPU 71.

Furthermore, a display unit 77 (including the display unit 3 in Fig. 1) including an LCD, an organic EL panel, or the like, and a voice output unit 78 including a speaker or the like are integrally or separately connected to the input/output interface 75.

A display unit 77 is a display unit that performs various types of display, and includes, for example, a display device provided in a housing of the computer apparatus, a separate display device connected to the computer apparatus, or the like.

The display unit 77 executes display of an image for various types of image processing, a moving image to be processed, or the like on a display screen on the basis of an instruction from the CPU 71. Furthermore, the display unit 77 performs display of various operation menus, icons, messages and the like, that is, performs display as a graphical user interface (GUI) on the basis of an instruction from the CPU 71. That is, the CPU 71 functions as a display control unit that causes the display unit 77 to display a predetermined image.

There is also a case where the storage unit 79 including a hard disk, a solid-state memory, or the like, and a communication unit 80 including a modem or the like are connected to the input/output interface 75.

The communication unit 80 performs communication processing via a transmission path such as the Internet, wired/wireless communication with various equipment, and communication based on bus communication or the like.

A drive 81 is also connected to the input/output interface 75 as needed, and a removable storage medium 82 is mounted such as a magnetic disk, an optical disc, a magneto-optical disk, or a semiconductor memory.

A data file such as an image file, various computer programs, and the like can be read from the removable storage medium 82 by the drive 81. The read data file is stored in the storage unit 79, and images and voices included in the data file are output by the display unit 77 and the voice output unit 78. Furthermore, a computer program and the like read from the removable storage medium 82 are installed in the storage unit 79 as needed.

In such a computer apparatus, for example, software for the processing of the present embodiment can be installed via network communication by the communication unit 80 or the removable storage medium 82. Alternatively, the software may be stored in advance in the ROM 72, the storage unit 79, or the like.

The CPU 71 performs processing operation on the basis of various programs, thereby realizing screen display to be described later in the tablet terminal 1A.

Note that the information processing apparatus 1 is not limited to including a single computer apparatus as illustrated in Fig. 2, and may include a plurality of computer apparatuses systematized. The plurality of computer apparatuses may be systematized by a LAN or the like, or may be disposed in a remote place by a VPN or the like using the Internet or the like. The plurality of computer apparatuses may include a computer apparatus as a server group (cloud) that can be used by a cloud computing service.

### <2. Functional configuration>

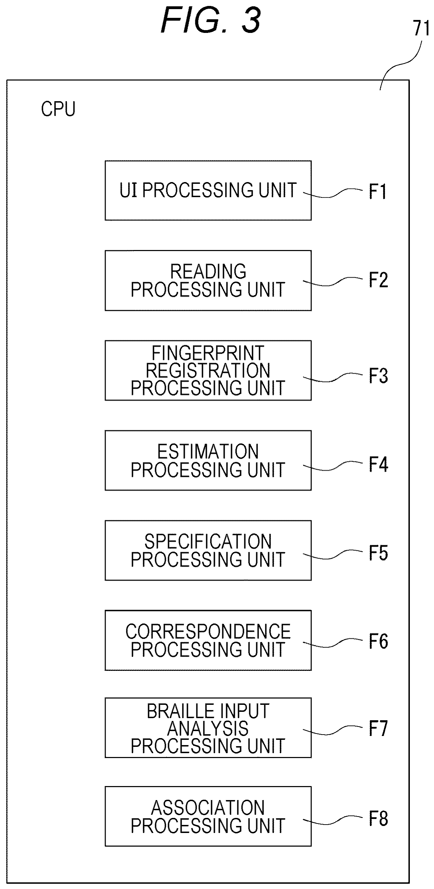

Fig. 3 illustrates a configuration of functions realized by the CPU 71 of the tablet terminal 1A executing a program.

The CPU 71 executes the program to function as a user interface (UI) processing unit F1, a reading processing unit F2, a fingerprint registration processing unit F3, an estimation processing unit F4, a specification processing unit F5, a correspondence processing unit F6, a braille input analysis processing unit F7, and an association processing unit F8.

The UI processing unit F1 performs user interface processing of displaying various operators (buttons), notifications, and the like on the display unit 3.

The UI processing unit F1 performs processing of providing a user interface for fingerprint registration.

The UI processing unit F1 performs processing of providing a user interface for performing a braille input using the registered fingerprint.

The UI processing unit F1 performs user interface processing for performing notification for prompting fingerprint registration.

The UI processing unit F1 performs processing of providing a user interface for associating the registered fingerprint with the function to be executed.

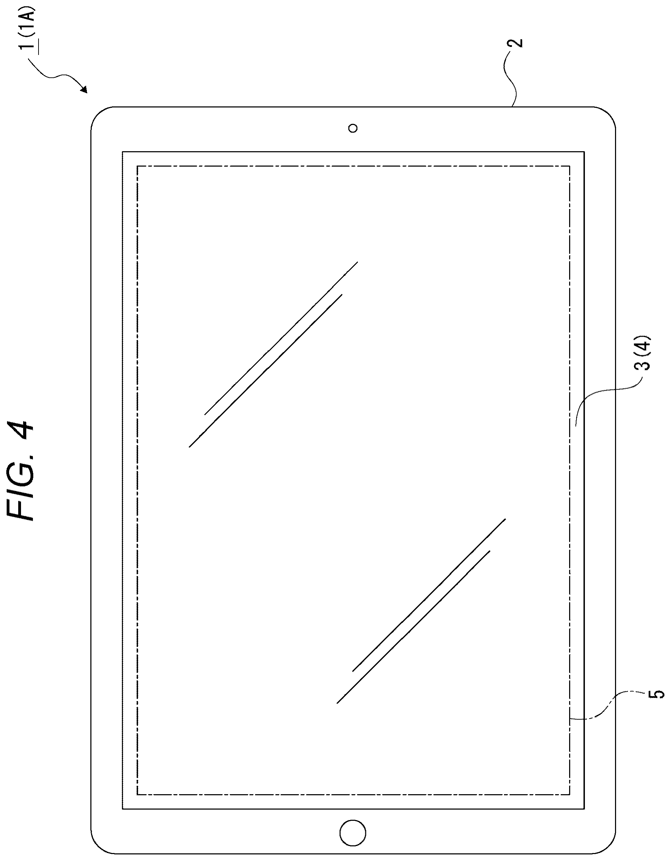

The reading processing unit F2 performs the above-described fingerprint imaging processing for reading the fingerprint of the finger brought into contact with the operation area 5 (see Fig. 4) set on the display unit 3. The reading processing unit F2 can read fingerprints of a plurality of fingers brought into contact with the operation area 5.

Note that the operation area 5 is substantially the same area as the display unit 3. However, the embodiment described below is not limited thereto.

The fingerprint registration processing unit F3 performs processing of registering the fingerprint image read by the reading processing unit F2 and the finger type in the storage unit 79 in association with each other. The finger type indicates a type of a finger such as a thumb or an index finger, but in the present example, it is assumed that the finger type further includes a distinction between right and left hands such as a thumb of the right hand HR and a thumb of the left hand HL. That is, the thumb of the right hand HR and the thumb of the left hand HL have different finger types.

In the following description, information registered by associating a fingerprint (fingerprint image) with a finger type will be described as "fingerprint information".

The estimation processing unit F4 performs processing of estimating the size of the hand on the basis of the detection result of the finger or palm brought into contact with the operation area 5 at the time of fingerprint registration. The estimated hand size information is provided to the UI processing unit F1 and used for adjusting the UI display for fingerprint registration.

The specification processing unit F5 collates the fingerprint read by the reading processing unit F2 after the fingerprint registration with the fingerprint information to specify the finger type. Note that, in the specification of the finger type, not only the type of the finger but also the user may be collated. In other words, the thumb of the right hand HR of a user X and the thumb of the right hand HR of a user Y may be detected separately.

The specification processing unit F5 specifies not only the finger type but also the angle of the fingerprint. That is, the specification processing unit F5 specifies the angle of the finger in contact with the operation area 5 by collating the read fingerprint with the registered fingerprint information.

The specification processing unit F5 further specifies an operation mode such as one-hand operation or two-hand operation according to a finger type specification result.

The correspondence processing unit F6 adaptively executes processing by changing the processing contents according to the finger type or the angle of the finger specified by the specification processing unit F5.

For example, the correspondence processing unit F6 determines an orientation of the image to be displayed on the display unit 3 according to the angle of the finger.

The correspondence processing unit F6 performs processing of setting the orientation of the captured image to the metadata according to the angle of the finger at the time of imaging using a camera function.

The correspondence processing unit F6 performs processing of changing a display area of the image on the display unit 3 on the basis of the specified operation mode such as one-hand operation or two-hand operation.

In a case where a tap operation is performed on the icon image of the application, the correspondence processing unit F6 performs processing of changing the activation mode of the application according to the specified finger type.

The braille input analysis processing unit F7 performs processing of analyzing (specifying) the input braille on the basis of the finger type specification result of the specification processing unit F5 for the input operation to the braille input interface provided by the UI processing unit F1.

This function is unnecessary in a case where the information processing apparatus 1 does not have a braille input function to be described later.

The association processing unit F8 performs association (assignment of the finger type used for the operation and the function executed according to the finger type with each other for each use case. Specifically, the association processing unit F8 performs association processing (assignment processing) between the finger type and the function for each application.

### <3. Fingerprint registration>

Some examples of the fingerprint registration will be described with reference to the drawings.

Note that, in the tablet terminal 1A, fingerprints and finger types of a plurality of fingers can be registered in association with each other.

### <3-1. First example of registration mode>

In the first example of the registration mode, the fingerprints of five fingers are simultaneously registered by simultaneously bringing five fingers of one hand into contact with the operation area 5 set on the display unit 3.

That is, in this example, it is possible to simultaneously register the fingerprint of the thumb and the fingerprints of other fingers.

Furthermore, an image for guiding each finger of the right hand HR to be placed at a predetermined position is displayed in the operation area 5.

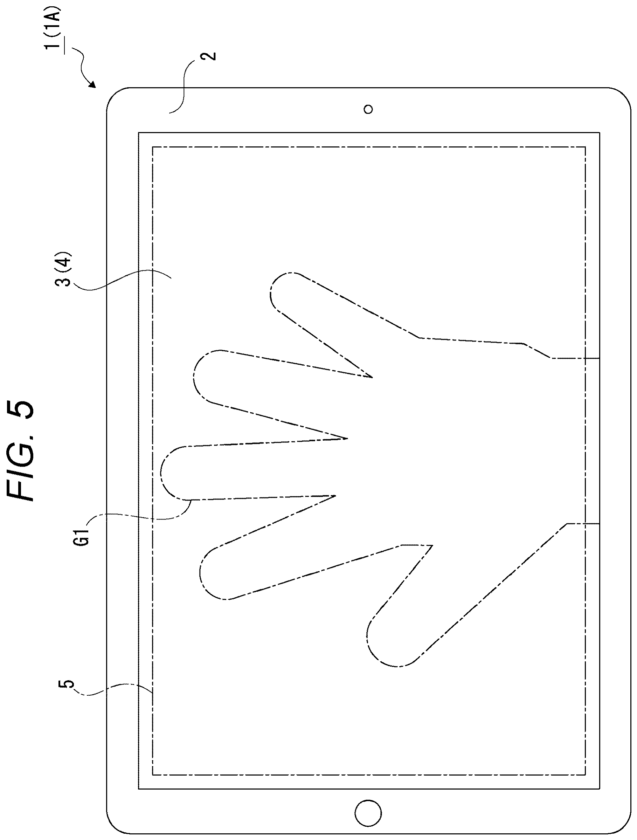

Fig. 5 illustrates an example of an image displayed in the operation area 5 at the start of the fingerprint registration.

Note that, in Fig. 5 and the following description, an image that is displayed in the operation area 5 and imitates the outer shape of the hand or the shape of the fingertip is indicated by a one-dot chain line. Furthermore, the hand of the user placed in the operation area 5 for the fingerprint registration is indicated by a solid line.

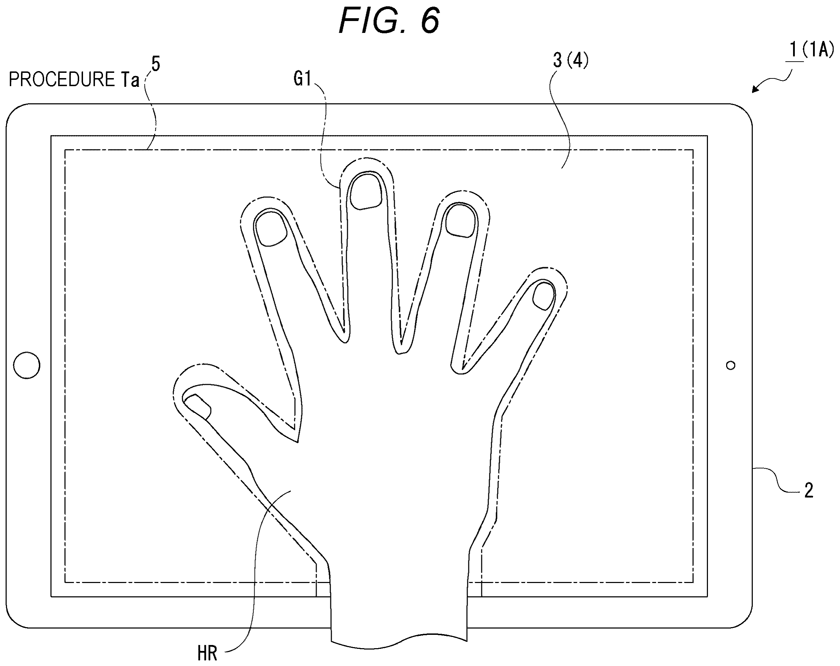

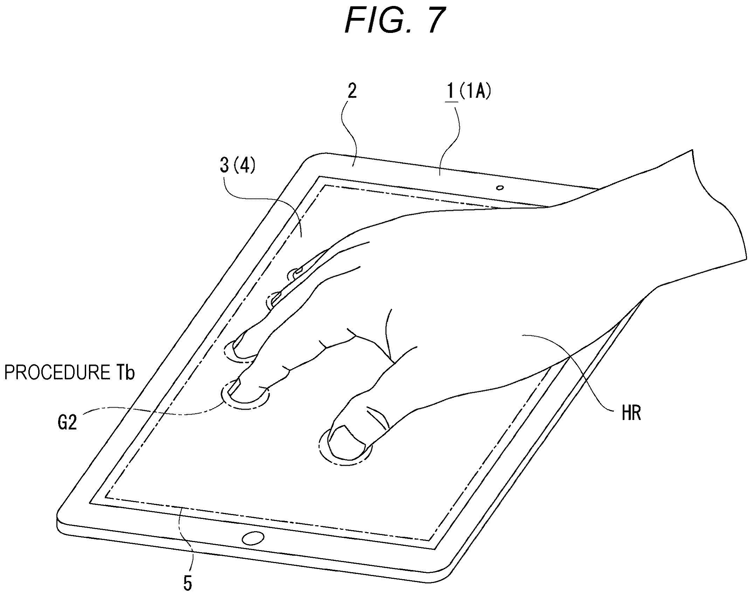

As illustrated, an image G1 imitating the outer shape of the hand is displayed in the operation area 5. When the user executes the procedure Ta of placing the right hand HR in the operation area 5 so as to position the hand on the image G1 (see Fig. 6), an image G2 prompting the procedure Tb of changing the posture of the hand so as to purse the fingers while raising the palm is displayed as illustrated in Fig. 7. The procedure Tb is a procedure of sliding the fingertip on the operation area 5. The image G2 is an image including five circles or ellipses indicating the position of the fingertip.

Note that the palm here is a portion excluding fingers.

In a case where the right hand HR is placed in accordance with the image G1 as illustrated in Fig. 6, it is possible to read the fingerprint of a ball portion by bringing the ball portion of the finger into contact with the operation area 5.

Furthermore, in the course of the instruction shifting from Fig. 6 to Fig. 7, an area closer to the tip than the ball portion of the finger comes into contact with the operation area 5, so that the fingerprint of the tip portion of the finger can be read.

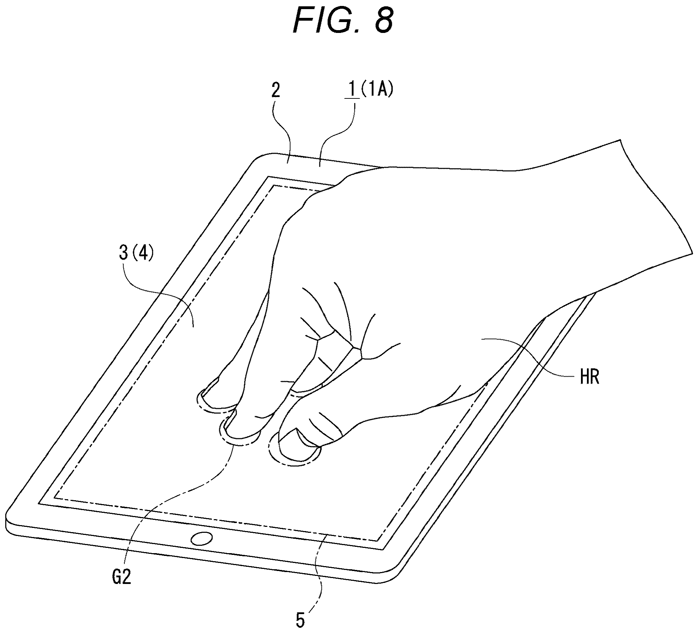

Moreover, as illustrated in Fig. 7 to Fig. 8, by deforming the image G2 in order to prompt the operation of bringing the fingertips closer to each other, it is possible to read the fingerprint of the tip portion of the finger.

As illustrated in each drawing, by displaying an image that imitates the outer shape of the hand and is guided to be in contact with different areas for each finger in the operation area 5, it is possible to automatically specify the correspondence between each fingerprint and the finger type.

Note that, even if the fingertip portion in each image is different from the contact area on the screen side where the finger is actually in contact with, in the case of the right hand HR, it is possible to specify the correspondence between the fingerprint and the finger type by estimating that the thumb, the index finger, the middle finger, the ring finger, and the little finger are in contact in this order from the left.

Therefore, even in a case where the user roughly places the hand on the operation area 5, the fingerprint can be read in a state where the finger type is specified.

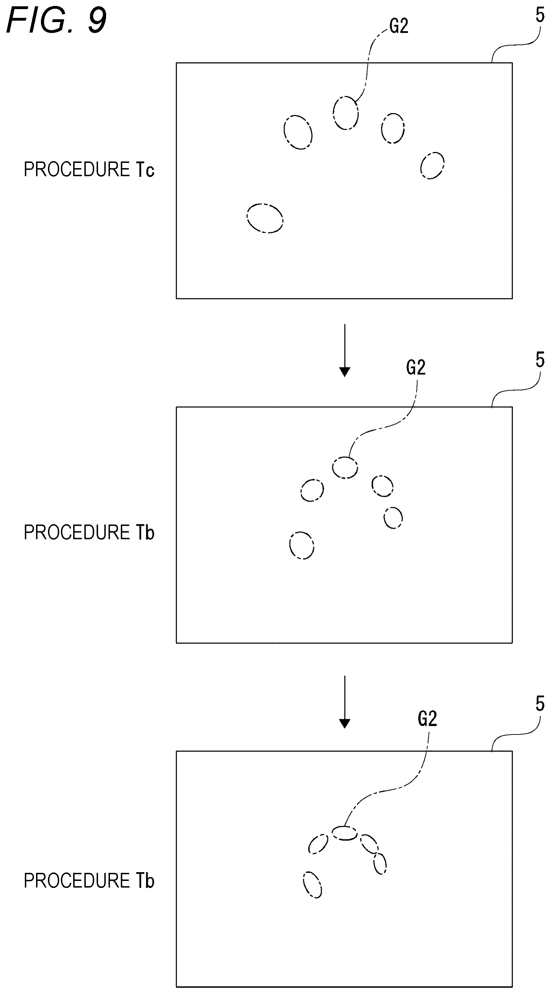

Note that, as illustrated in Fig. 9, by first displaying the image G2 without using the image G1 and subsequently deforming the image G2, guidance may be performed such that only the ball portion of the finger comes into contact with the operation area 5 throughout.

That is, the procedure Tc for bringing only the ball portion of the finger into contact with the operation area 5 may be prompted, and then the procedure Tb for pursing the finger may be prompted.

By reducing the contact area between the operation area 5 and the hand, the burden of the fingerprint reading processing can be reduced.

Note that, in the following description, an area that is a part of the operation area 5 and is brought into contact with by a finger or a palm will be referred to as a "screen-side contact area ArG". Furthermore, an area that is a part of the finger and comes into contact with the operation area 5 will be referred to as a "finger-side contact area ArD".

In order to cause the user to recognize that the finger-side contact area ArD is shifted to the fingertip side in the process of performing the operation such that the finger is pursed, as illustrated in Fig. 9, a circle or an ellipse imitating the fingertip in the image G2 may be deformed into a crushed shape.

Furthermore, after the procedure Tc, a procedure Td in which only the thumb is slid or only the thumb and the little finger is slid may be prompted, and then the procedure Tb may be executed.

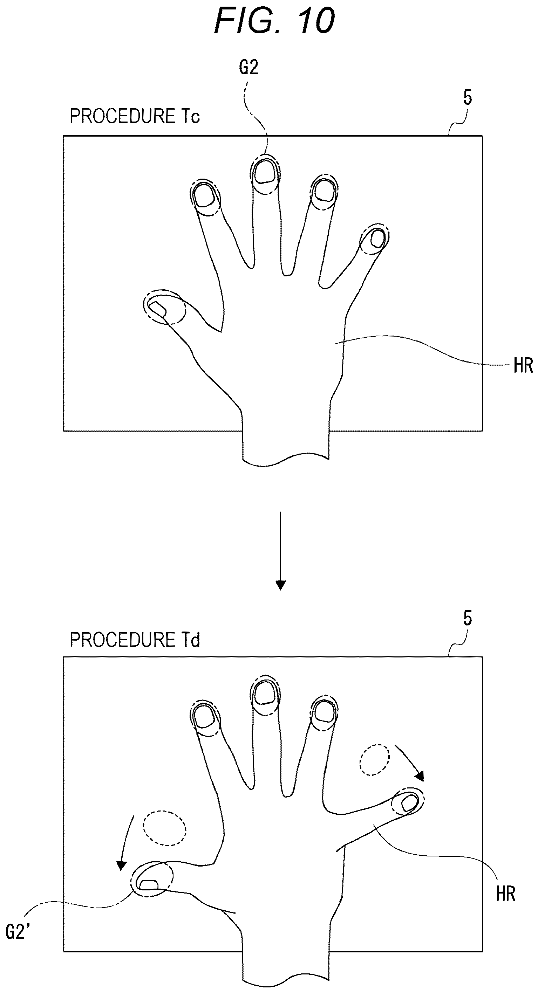

That is, in the operation area 5, after the image G2 is displayed, the image G2' in which only the position of the thumb (or the little finger) is changed may be displayed (see Fig. 10), and the deformed image G2' may be further displayed.

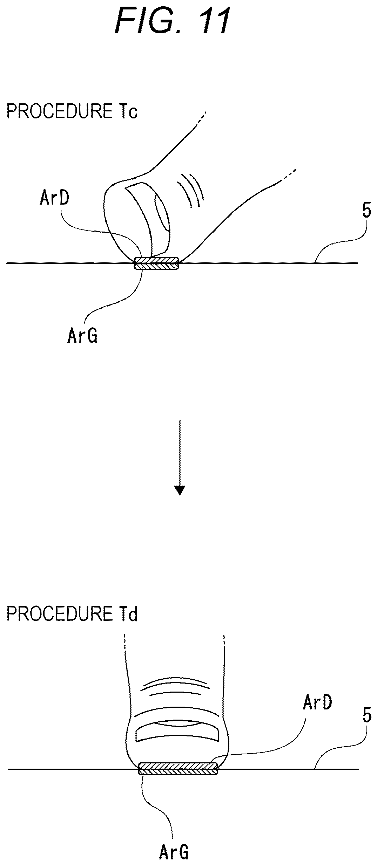

By executing such a procedure, the user is in a state where, for example, the angle formed by the thumb and the little finger of the right hand HR is extended from about 20 degrees to about 90 degrees. At this time, in the thumb, as illustrated in Fig. 11, the state changes from a state in which the side surface portion of the ball of the finger serves as the finger-side contact area ArD to a state in which even the center portion of the ball of the finger serves as the finger-side contact area ArD.

This makes it possible to suitably read the fingerprint of the thumb.

Furthermore, by reading the fingerprints one hand at a time, it is possible to simultaneously register fingerprints for a plurality of fingers even in the information processing apparatus 1 having a small display unit 3 as in the smartphone 1B, for example.

### <3-2. Second example of registration mode>

A second example of the registration mode is an example in which a UI display for simultaneously registering fingerprints of 10 fingers of both hands is performed.

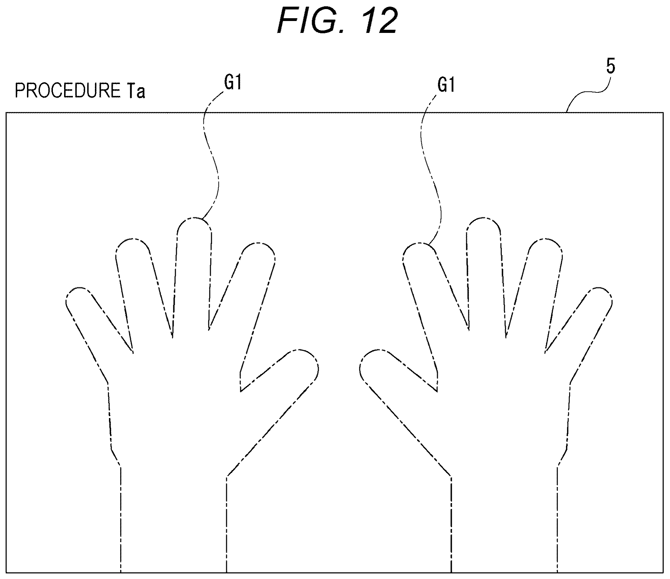

Fig. 12 illustrates an example in which the procedure Tb is executed after the procedure Ta. As illustrated in the drawing, an image G1 for the left hand HL and an image G1 for the right hand HR are displayed in the operation area 5 in a state of being arranged side by side.

Although not illustrated later, by displaying the image G2 for executing the procedure Tb, the user can simultaneously register the fingerprints of 10 fingers of both hands.

Note that, similarly to the first example, it may be suggested that the procedure Tb using both hands is performed after the procedure Tc using both hands, or it may be suggested that the procedure Td using both hands is performed between the procedure Tc and the procedure Tb.

### <3-3. Third example of registration mode>

A third example of the registration mode is an example in which a procedure of reading the fingerprint of only the thumb and a procedure of reading the fingerprint other than the thumb are separately provided. In this example, an example in which a procedure of reading the fingerprints of four fingers other than the thumb of the right hand HR and a procedure of reading the fingerprint of only the thumb of the right hand HR are sequentially performed will be described. Furthermore, since a procedure for the fingerprint of the left hand HL is a similar procedure, the description thereof will be omitted.

However, the present invention is not limited to this example, and a procedure of reading the fingerprints of the two thumbs of both hands may be executed after the procedure of reading the fingerprints of the eight fingers except the thumbs of both hands.

Furthermore, after the procedure of reading the four fingerprints other than the thumb of the right hand HR and the procedure of reading the four fingerprints other than the thumb of the left hand HL are executed, the procedure of reading the fingerprints of the two thumbs of both hands may be executed.

Note that by reading the fingerprints one hand at a time, the reading processing can be suitably performed even in the information processing apparatus 1 having the small display unit 3 like the smartphone 1B.

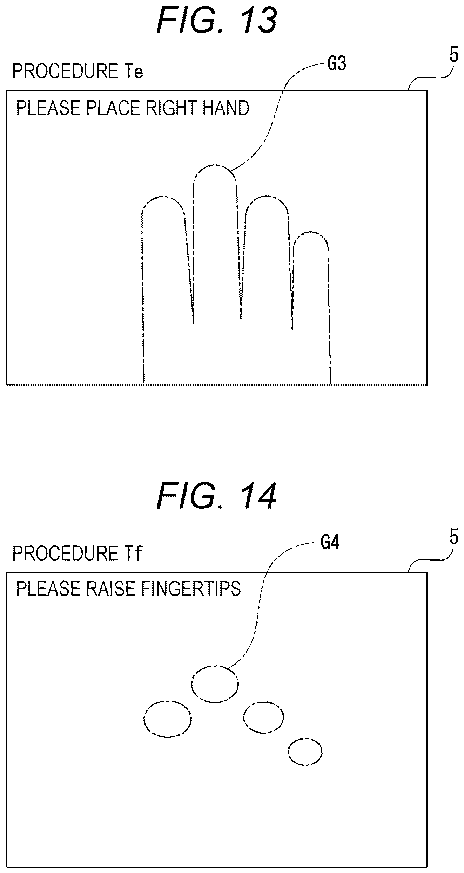

In this example, first, as illustrated in Fig. 13, an image G3 for placing four fingers other than the thumb together with words for executing the procedure Te for placing the right hand HR in the operation area 5 is displayed in the operation area 5.

Thereafter, an image G4 for executing the procedure Tf of releasing the palm from the operation area 5 and raising the fingertips is displayed in the operation area 5 (see Fig. 14). Note that, after that, the user may be guided to execute a procedure of further pursing four fingers.

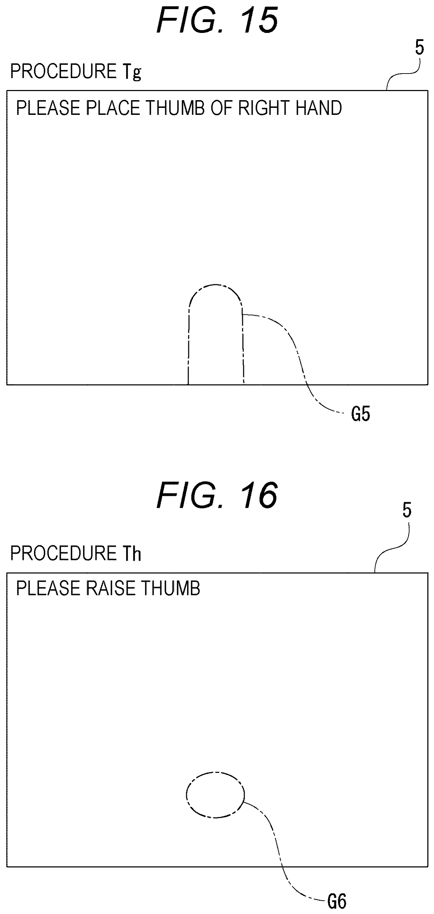

Subsequently, together with the words for executing the procedure Tg of placing the thumb of the right hand HR on the operation area 5, an image G5 for placing the thumb is displayed on the operation area 5 (see Fig. 15).

Finally, an image G6 for executing the procedure Th of bringing the thumb into contact with the operation area 5 with the fingertip of the thumb raised is displayed in the operation area 5 (see Fig. 16).

Note that, in the examples illustrated in Figs. 13 and 14, which of the right hand HR and the left hand HL the fingerprint is to be read is designated, but there is no need to designate the left and right hands. That is, the fingerprint of each finger may be read without designating the left and right hands, and the fingerprint information may be registered in association with the finger type.

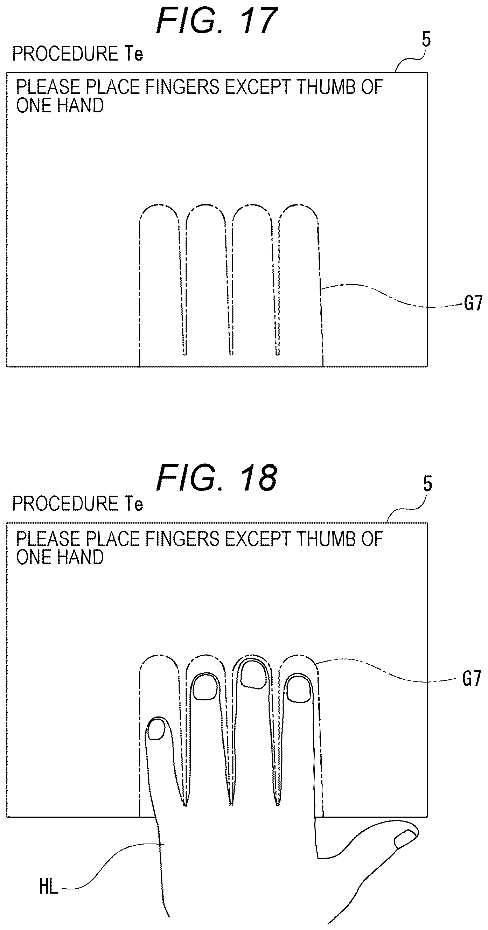

Specifically, as illustrated in Fig. 17, an image G7 for executing the procedure Te and having the same length of the index finger, the middle finger, the ring finger, and the little finger is displayed.

As illustrated in Fig. 18, the user places four fingers other than the thumb in the operation area 5 in accordance with the image G7, and compares the lengths of the two fingers at the left and right ends at this time, that is, the index finger and the little finger, and specifies the longer finger as the index finger, thereby specifying which one of the right hand HR and the left hand HL it is.

In the example illustrated in Fig. 18, when the left end finger and the right end finger are compared, since the right end finger is longer, it is specified that the finger placed in the right end area is the index finger, and it is further specified that the left hand HL is placed.

Therefore, the user simply places the hand without worrying about the right hand HR and the left hand HL, and the fingerprint image and the finger type are associated and stored as the fingerprint information. At this time, whether the specified hand is the right hand HR or the left hand HL may be notified to the user, or words for notifying the user of the specified hand or an illustration in which a difference between the right hand HR and the left hand HL can be recognized may be displayed on the display unit 3.

Furthermore, not only the specification result but also the fingerprint registration result may be notified. In this case, not only that the fingerprint registration has been completed but also that the fingerprint registration has not been completed may be notified.

The timing of each notification may be performed not only at the time of registration completion but also at other timings.

Furthermore, in a case where the left hand HR and the right hand HL cannot be specified, an option for allowing the user to select the hand in contact with the operation area 5 may be presented. Note that the display of the options may be performed at a timing when the user releases the hand from the operation area 5.

Note that, for fingerprints of the thumbs, whether each thumb is of the right hand HR or the left hand HL may be automatically determined by simultaneously bringing the right and left thumbs into contact with the operation area 5.

Furthermore, as the image for executing each procedure, a diagram for suggesting how to place a hand, for example, a perspective view illustrating a state in which a hand is actually placed with respect to the image, and the like may be displayed in the operation area 5.

Therefore, the user can easily grasp the procedure content, and the work efficiency can be improved.

Note that, in Fig. 13, the image imitating the entire finger is displayed to indicate the contact position of the entire finger, but an image designating only the position of the fingerprint (the position of the fingertip) may be displayed in addition to this.

Furthermore, it is difficult to take a posture in which all five fingers of one hand are simultaneously brought into contact with the operation area 5, but it is relatively easy to take a posture in which four fingers other than the thumb of one hand (for example, the right hand HR) and the thumb of the other hand (for example, the left hand HL) are simultaneously brought into contact with the operation area 5.

Consequently, an image for simultaneously bringing the four fingers other than the thumb of one hand and the thumb of the other hand into contact with the operation area 5 may be displayed in the operation area 5.

In this case, it is sufficient that an area for placing five fingers in the operation area 5 is secured, and the fingerprint can be suitably read even in a case where an area of the display unit 3 is small.

### <3-4. Fourth example of registration mode>

The fourth example of the registration mode can be combined with each example described above.

In this example, in a case where the hand is brought into contact with the operation area 5, the size of the hand is determined to change the size of the image displayed in the operation area 5.

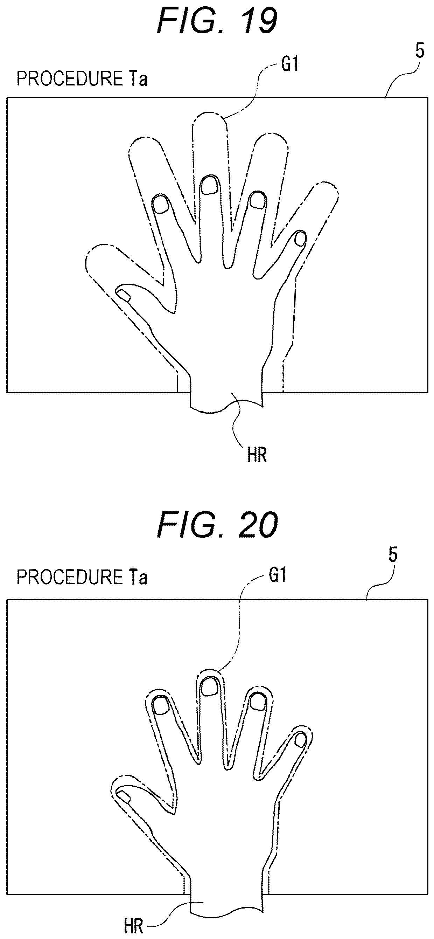

For example, in a case where the size of the placed hand is smaller than the size of the image G1 displayed in the operation area 5 in the procedure Ta as illustrated in Fig. 19, the image G1 whose size has been adjusted in accordance with the size of the hand is displayed in the operation area 5 as illustrated in Fig. 20.

Therefore, the user can easily proceed with the procedure in accordance with the image, and work efficiency can be improved.

Note that the size of the hand may be estimated by detecting the position of the tip portion of the finger in contact with the display unit 3 having the full-screen fingerprint authentication function, or may be estimated by detecting the screen-side contact area ArG where the entire hand including the palm is in contact with.

Alternatively, since the interval between the ridges of the fingerprint varies depending on the size of the hand, the size of the hand may be estimated by detecting the interval between the ridges.

Note that the size of the image may be adjusted such that a portion imitating a hand or a finger in each image to be displayed in the operation area 5 is slightly larger than the screen-side contact area ArG actually brought into contact with.

Therefore, the image is easily visually recognized in a state where the hand or the fingertip is placed in the operation area 5, and it is possible to make the user follow a suitable procedure and improve ease of work.

Note that Figs. 19 and 20 illustrate an example in which the image imitating the outer shape of the hand is displayed in the operation area 5, but an image indicating the position of the fingerprint of the finger may be displayed in the operation area 5.

Furthermore, in a case where the size of the hand is different from the assumed size, the size may be handled by enlarging or reducing the image, or may be handled by changing the display position of the image of the fingertip portion indicating the position of the fingerprint.

Furthermore, the mode of displaying the image imitating the outer shape of the hand and the mode of displaying the image of the fingertip portion for designating the fingerprint position may be appropriately switched.

### <3-5. Modification of registration mode>

By performing the UI display illustrated in the above-described example, the posture of the hand is changed in a state where the hand or the fingertip is placed on the operation area 5 at the time of fingerprint registration. At this time, in a case where the movement of the user's finger is fast, there is a case where the fingerprint cannot be appropriately read.

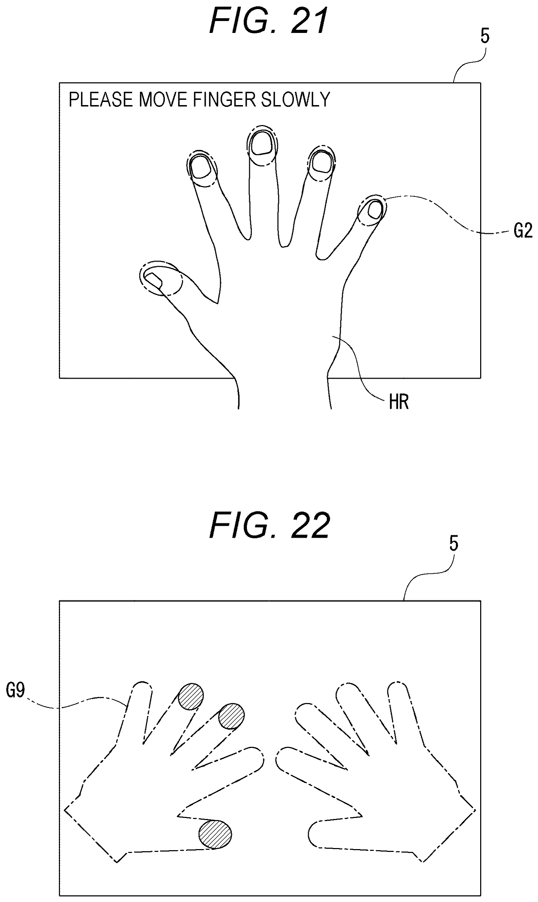

Consequently, in a case where the movement of the finger is fast or the read fingerprint is unclear, a display instructing to slowly move the fingertip may be displayed in the operation area 5 or other areas of the display unit 3 (see Fig. 21).

In a case where the reading of the fingerprint fails, it is conceivable to execute the procedure for fingerprint registration again using only the finger whose reading has failed.

For example, in a case where the reading of the fingerprint of the specific finger fails due to fast movement of the finger or the like, as illustrated in Fig. 22, an image G9 in which the failed finger is emphasized is displayed in the operation area 5, so that the user can recognize the finger type used for the registration operation again.

The image G9 may be displayed for a predetermined number of seconds before the procedure for fingerprint registration is executed again.

The example illustrated in Fig. 22 is an example in which the fingerprint reading of the thumb, the middle finger, and the ring finger of the left hand HL has failed.

Two types of methods are conceivable for redoing the fingerprint registration.

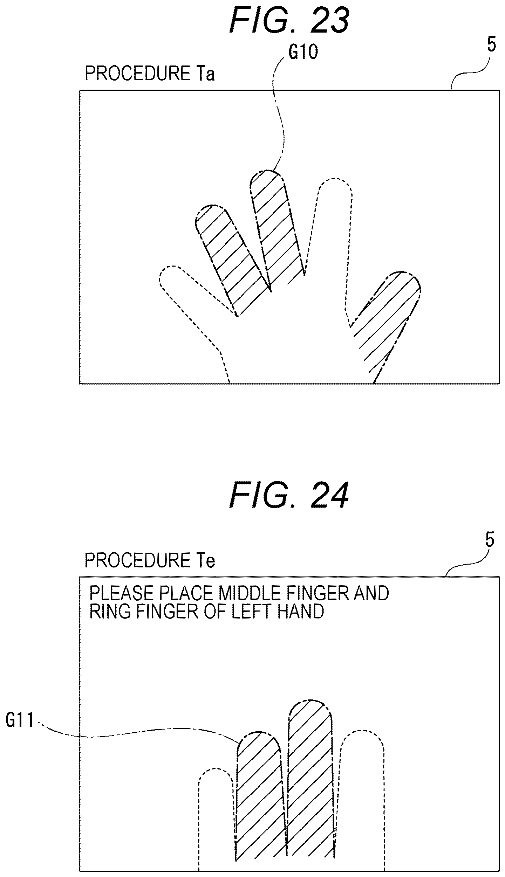

The first method is a method of reading fingerprints of fingers that have failed to be read, including a thumb, all at once. In this case, for example, an image G10 as illustrated in Fig. 23 is displayed in the operation area 5 to prompt execution of the procedure Ta.

In the image G10 illustrated in Fig. 23, only the finger type to be read is displayed by a one-dot chain line (actually, may be a solid line), and the finger type that has already been successfully read is displayed by a broken line.

Furthermore, for easier understanding, the finger type to be read may be filled with a predetermined color (represented by hatching in Fig. 23).

Thereafter, an image for executing the procedure Tb is displayed in the operation area 5. At this time, in a case where the movement of the finger is fast, it may be notified that the fingertip is slowly moved.

The second method is a method of separately reading the thumb and the other fingers. In this case, first, as illustrated in Fig. 24, an image G11 for executing the procedure Te of placing the middle finger and the ring finger other than the thumb is displayed in the operation area 5. At this time, as illustrated in Fig. 24, the user may be notified of the finger to be read in text.

Thereafter, an image for executing the procedure Tf is displayed in the operation area 5. At this time, in a case where the movement of the finger is fast, it may be notified that the fingertip is slowly moved.

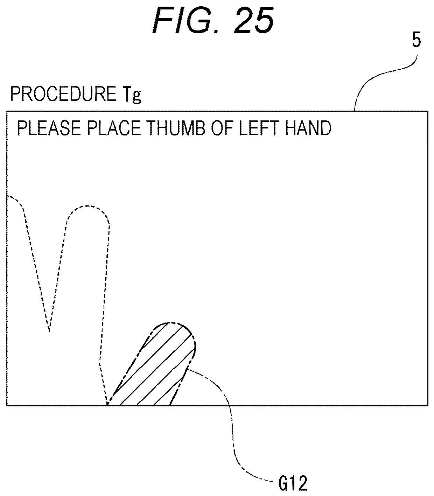

Then, after the reading of the fingerprints of the middle finger and the ring finger is normally completed, as illustrated in Fig. 25, an image G12 for executing the procedure Tg of placing the thumb of the left hand HL is displayed in the operation area 5. In the image G12, as illustrated in Fig. 25, for example, an index finger other than the thumb may be indicated in an inconspicuous manner such as a broken line to notify the user that the thumb of the left hand HL is the finger type to be read.

Furthermore, as illustrated in Fig. 25, the user may be notified of the finger to be read by a text.

Thereafter, an image for executing the procedure Th is displayed in the operation area 5. At this time, in a case where the movement of the finger is fast, it may be notified that the fingertip is slowly moved.

Note that, in order to more reliably succeed in reading the fingerprint, images may be displayed in the operation area 5 so as to read the fingers that have failed in reading the fingerprint one by one. That is, the registration method may be different between the first reading and the second or subsequent rereading.

For example, at the time of the first reading, four or five fingers may be urged to be simultaneously brought into contact with the operation area 5, and in a case where the reading of any finger fails, the failed fingers may be urged to be brought into contact with the operation area 5 one by one.

Furthermore, depending on the type of the finger, a plurality of fingers may be urged to be simultaneously brought into contact with the operation area 5 even at the time of rereading. For example, in a case where the fingerprints of the index finger and the middle finger are reread, the fingerprints are simultaneously read, and in a case where the fingerprints of distant fingers such as the middle finger and the little finger are reread, the fingerprints are read one by one.

Furthermore, in the case of performing the rereading, the finger may be guided to be brought into contact with substantially the center of the operation area 5.

Moreover, it may be determined or the user may select whether to perform rereading by appropriately separating the left hand HL and the right hand HR according to the finger type and the number of fingers to be reread or to perform rereading simultaneously.

For example, in a case where any finger other than the thumb of one hand and the thumb of the other hand is an object to be reread, the thumb of one hand and the finger to be reread of the other hand are prompted to be simultaneously brought into contact with the operation area 5.

Furthermore, in a case where the number of fingers to be reread among the eight fingers other than the thumb is less than or equal to a threshold (for example, six), it is prompted that all the fingers to be reread are caused to be simultaneously brought into contact with the operation area 5.

The threshold at this time may be appropriately determined according to the size of the display unit 3 (or the size of the operation area 5) or the size of the hand to be reread.

Note that, in a case where the number of fingers to be reread out of the eight fingers other than the thumb is larger than the threshold, it is prompted to separate the fingers to be reread out of the left and right hands and be brought into contact with the operation area 5.

Moreover, in a case where only the thumbs of both hands are set as the object to be reread, the thumb of both hands is prompted to be simultaneously brought into contact with the operation area 5.

### <3-6. Processing flow for fingerprint registration>

An example of processing executed by the CPU 71 of the tablet terminal 1A for the fingerprint registration will be described.

An example of the processing flow described first corresponds to the first example of the registration mode. Furthermore, this processing flow also includes an example of giving a notification for prompting to decrease the operation speed in the fourth example or the modification of the registration mode, and processing executed when reading fails.

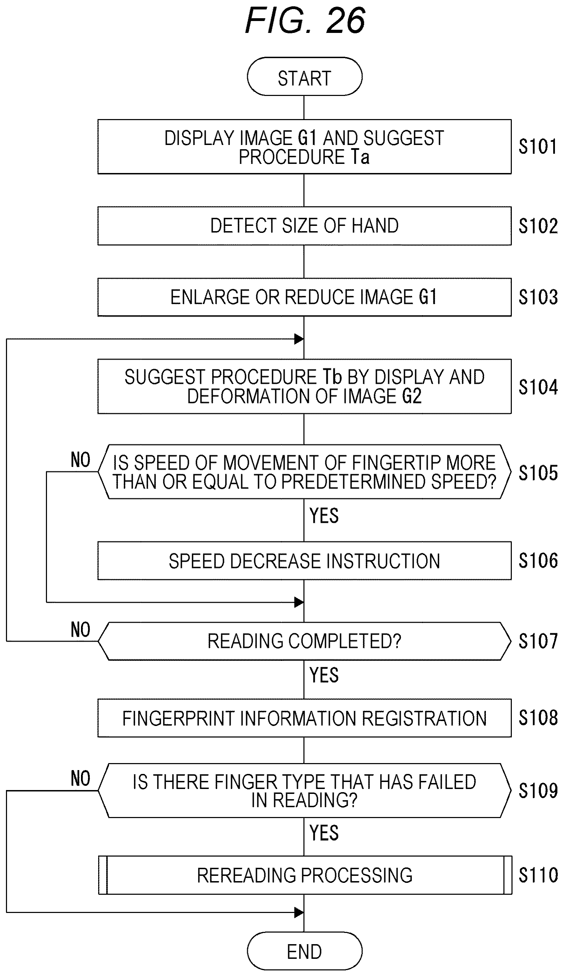

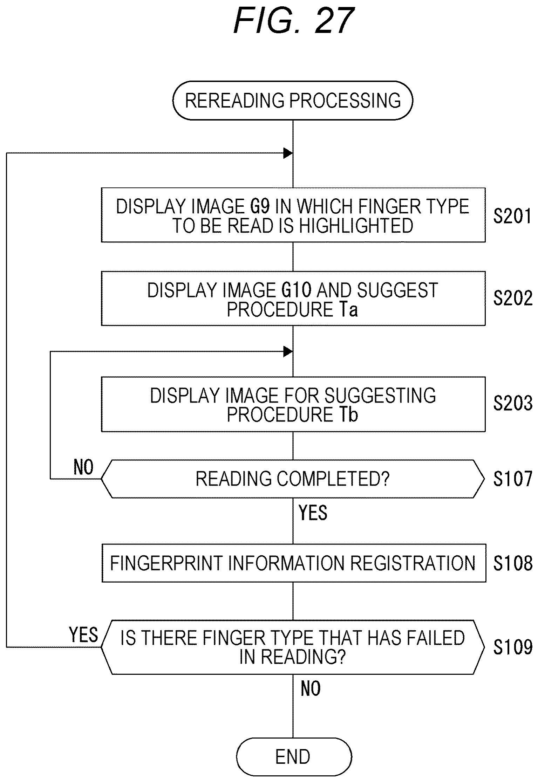

An example of a processing flow will be described with reference to Figs. 26 and 27.

In step S101, the CPU 71 prompts the execution of the procedure Ta by displaying the image G1 (see Fig. 5) in the operation area 5.

In step S102, the CPU 71 detects the size of the hand placed in the operation area 5 in accordance with the image G1.

In step S103, the CPU 71 enlarges or reduces the image G1 according to the size of the hand and displays the image G1 in the operation area 5 (see Figs. 19 and 20).

In step S104, the CPU 71 displays the image G2 (see Fig. 7) to prompt execution of the procedure Tb. The processing of step S104 prompts the procedure Tb of pursing the finger by displaying the image G2 and displaying the deformed image G2.

In step S105, the CPU 71 determines whether or not the speed of the movement of the finger is more than or equal to a predetermined speed. Note that the CPU 71 may evaluate the sharpness of the fingerprint image being generated by the fingerprint imaging processing instead of determining the speed of the finger by this determination processing. That is, in a case where the sharpness is less than or equal to a predetermined value, the CPU 71 makes the "YES" determination in the processing of step S105.

In a case where it is determined that the speed of the movement of the finger is more than or equal to the predetermined speed, the CPU 71 displays, for example, an image as illustrated in Fig. 21 as a speed decrease instruction in step S106.

On the other hand, in a case where it is determined that the speed of the movement of the finger is less than the predetermined speed, the CPU 71 does not execute the processing of step S106.

In step S107, the CPU 71 determines whether or not the fingerprint reading processing has been completed.

The CPU 71 repeatedly executes the processing from step S104 to step S106 until the fingerprint reading processing is completed.

Note that the determination processing in step S107 is to determine that the reading of the fingerprint of a predetermined area or more on the ball of the finger or the fingertip has been completed, for example, and the success or failure of the reading result does not matter.

In a case where it is determined that the reading processing has been completed, the CPU 71 proceeds to step S108 and registers fingerprint information. The fingerprint information registered here is fingerprint information about the finger type that has been appropriately read, and the fingerprint image and the finger type are registered in association with each other.

In step S109, the CPU 71 determines whether or not there is a finger type that has failed in reading. In a case where there is a finger type that has failed to be read, the CPU 71 proceeds to step S110 and performs rereading processing.

On the other hand, in a case where there is no finger type that has failed in reading, the CPU 71 ends the series of processing illustrated in Fig. 26 without executing the processing of step S110. Note that, in a case where only one hand has been registered for the fingerprint information, the processing from step S101 to step S110 is executed again for the other hand.

A specific processing example of the rereading processing in step S110 is illustrated in Fig. 27. In the example illustrated in Fig. 27, the fingerprints of the thumb and the other fingers are simultaneously read.

Note that processing similar to that in Fig. 26 will be denoted by the same step number, and description thereof will be omitted as appropriate.

In step S201, the CPU 71 displays the image G9 (see Fig. 22) in which the finger type to be read is highlighted in the operation area 5.

The CPU 71 prompts the execution of the procedure Ta by displaying the image G10 (see Fig. 23) in the operation area 5 in step S202.

In step S203, the CPU 71 displays, in the operation area 5, an image for executing the procedure Tb for changing the posture of the hand so that the fingers are pursed while the palm is floating.

In step S107, the CPU 71 determines whether or not the fingerprint reading processing has been completed. In a case where the reading processing has not been completed, the CPU 71 continues to read the fingerprint by continuously executing step S203.

In a case where it is determined that the fingerprint reading processing has been completed, the CPU 71 registers fingerprint information in step S108. The fingerprint information registered here is for the finger type for which the reading processing has succeeded.

In step S109, the CPU 71 determines whether or not there is a finger type that has failed in reading, and in a case where there is a finger type that has failed in reading, the series of processing subsequent to step S201 is executed again.

On the other hand, in a case where it is determined that the reading process has succeeded for all the finger types to be read, the CPU 71 ends the series of processing illustrated in Figs. 26 and 27.

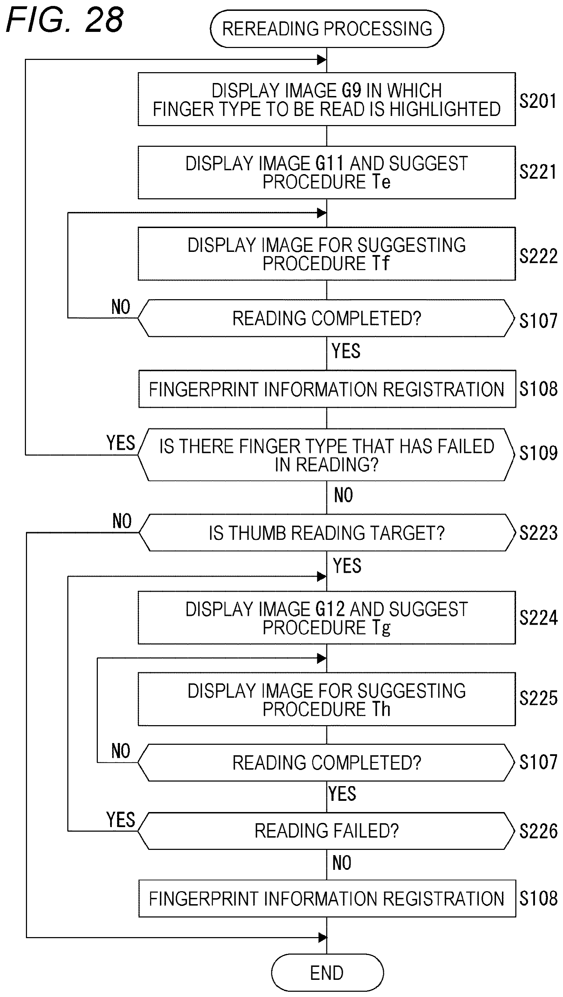

Next, another example of the rereading processing in step S110 of Fig. 26 is illustrated in Fig. 28. In the example illustrated in Fig. 28, reading of fingerprints of a thumb and other fingers is separately performed.

Note that processing similar to processing in Figs. 26 and 27 is denoted by the same step number, and description thereof is omitted as appropriate.

In step S201, the CPU 71 displays an image G9 (see Fig. 22) in which the reading target finger type is highlighted in the operation area 5.

In step S221, the CPU 71 displays the image G11 (see Fig. 24) to execute a procedure Te of placing the finger type other than the thumb among the finger types to be read in the operation area 5.

In step S222, the CPU 71 displays an image for executing the procedure Tf of releasing the palm from the operation area 5 and raising the fingertip in the operation area 5.

The CPU 71 determines whether or not the reading processing has been completed in step S107, registers fingerprint information on the finger type whose reading has been normally completed in step S108, and determines whether or not there is a finger type whose reading has failed in step S109.

In a case where it is determined that there is a finger type that has failed in reading, the CPU 71 performs a series of processing from step S201 to step S108 again.

On the other hand, in a case where it is determined that there is no finger type that has failed in reading, the CPU 71 determines whether or not the thumb is a reading target in step S223.

In a case where it is determined that the thumb is not the reading target, that is, in a case where the thumb is not included in the finger type determined as the reading failure in step S109 in Fig. 26, the CPU 71 ends the series of processing illustrated in Figs. 26 and 28.

On the other hand, in a case where it is determined that the thumb is the reading target, the CPU 71 displays the image G12 (see Fig. 25) in the operation area 5 in order to execute the procedure Tg of placing the reading target thumb in the operation area 5 in step S224.

In subsequent step S225, the CPU 71 displays an image G6 (see Fig. 16) for executing the procedure Th of coming in contact with the operation area 5 with the fingertip of the thumb raised in the operation area 5.

The CPU 71 determines whether or not the reading has been completed in step S107, and executes the processing of step S225 again in a case where it is determined that the reading has not been completed, and executes the processing of step S226 in a case where it is determined that the reading has been completed.

In step S226, the CPU 71 determines whether or not the reading has failed. In a case where it is determined that the reading has failed, the processing returns to step S224, and the processing of reading the fingerprint of the thumb is executed again.

On the other hand, in a case where it is determined that the reading has succeeded, the fingerprint information is registered in step S108, and the series of processing illustrated in Figs. 26 and 28 is ended.

Note that, in a case where the fingerprint information of both hands is registered at a time as in the second example of the registration mode, the image G1 illustrated in Fig. 12 is displayed in step S103 of Fig. 26, and the image G2 in which Fig. 6 is a two-hand version is displayed and deformed, thereby guiding the user to execute the procedure Tb.

Furthermore, in the case of the registration mode in which only the ball of the user's finger or the fingertip is brought into contact with the operation area 5 from start to finish, the processing of steps S101, S102, and S103 illustrated in Fig. 26 is omitted, and the image G2 is displayed in step S104, thereby executing the procedure Tc and the procedure Tb.

Then, in a case of guiding to execute the procedure Td after the procedure Tc and before the procedure Tb, it is possible to suitably read the fingerprint of the thumb by displaying the image G2, the image G2', and the image obtained by deforming the image G2' in the operation area 5 instead of step S104 illustrated in Fig. 26.

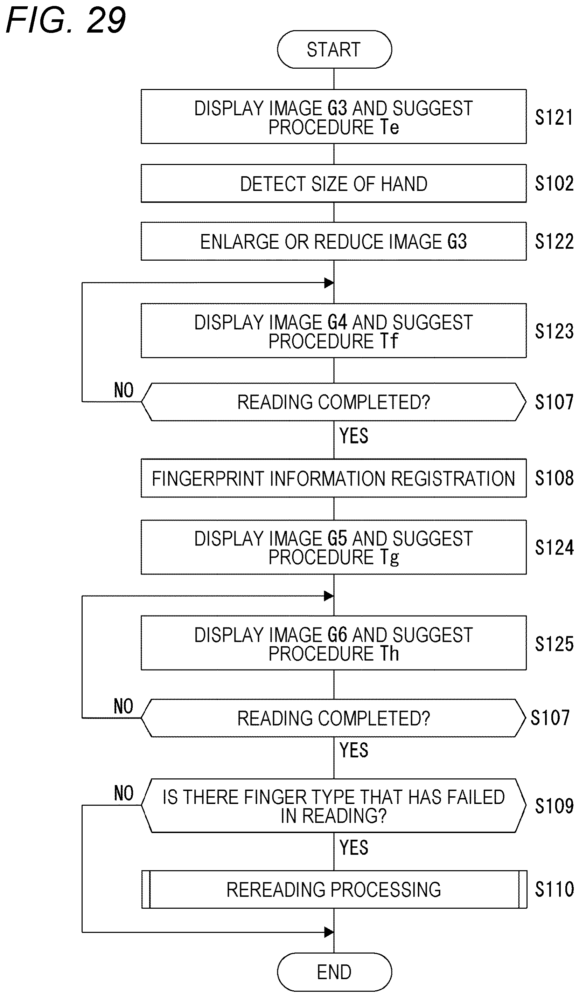

An example of a processing flow to be described next corresponds to the third example of the registration mode (see Fig. 29). Furthermore, this processing flow also includes a fourth example of the registration mode and processing executed when the reading fails.

In step S121 of Fig. 29, the CPU 71 prompts the execution of the procedure Te by displaying the image G3 (see Fig. 13) in the operation area 5.

Subsequently, the PCU 71 executes steps S102 and S122 to enlarge or reduce the image G3 on the basis of the size of the detected hand and display the enlarged or reduced image G3 in the operation area 5.

In step S123, the CPU 71 displays the image G4 (see Fig. 14) to urge execution of the procedure Tf. The processing in step S123 displays the image G4 and the deformed image G4 to prompt an operation of sequentially bringing the finger into contact with the operation area 5 from the ball portion to the tip portion of the finger.

In step S107, the CPU 71 determines whether or not the fingerprint reading processing has been completed.

The CPU 71 repeatedly executes the processing of step S123 until the fingerprint reading processing is completed.

Note that the CPU 71 may determine whether or not the speed of the movement of the finger is more than or equal to a predetermined speed, and perform processing of making a notification as necessary (processing corresponding to step S105 and step S106 in Fig. 26) after the processing of step S123.

In a case where it is determined that the fingerprint reading processing has been completed, the CPU 71 registers fingerprint information in step S108.

In step S124, the CPU 71 displays the image G5 (see Fig. 15) in the operation area 5 to urge the execution of the procedure Tg of bringing the thumb into contact with the operation area 5.

In step S125, the CPU 71 displays the image G6 (see Fig. 16) in the operation area 5, thereby urging the procedure Th of sequentially bringing the thumb into contact with the operation area 5 from the ball portion to the tip portion.

In step S107, the CPU 71 determines whether or not the fingerprint reading processing has been completed.

The CPU 71 repeatedly executes the processing of step S125 until the fingerprint reading processing is completed.

In step S109, the CPU 71 determines whether or not there is a finger type that has failed in reading. In a case where there is a finger type that has failed to be read, the CPU 71 proceeds to step S110 and performs rereading processing. Since the rereading processing has been described with reference to Figs. 27 and 28, redundant description is avoided.

On the other hand, in a case where there is no finger type that has failed in reading, the CPU 71 ends the series of processing illustrated in Fig. 29 without executing the processing of step S110. Note that, in a case where the fingerprint information is registered only in one hand, a series of processing subsequent to step S121 in Fig. 29 is executed for the other hand.

### <4. Processing after fingerprint registration>

The tablet terminal 1A as the information processing apparatus 1 performs various processing using the registered fingerprint information. Here, some examples will be described.

### <4-1. Update of fingerprint information>

The fingerprint information stored in the storage unit 79 by the fingerprint registration processing described above is used as a comparison target for determining the type of the newly read fingerprint in the processing to be described later. In the following description, processing of comparing the read fingerprint information with the registered fingerprint information, which is processing executed by the specification processing unit F5, will be referred to as "fingerprint matching processing".

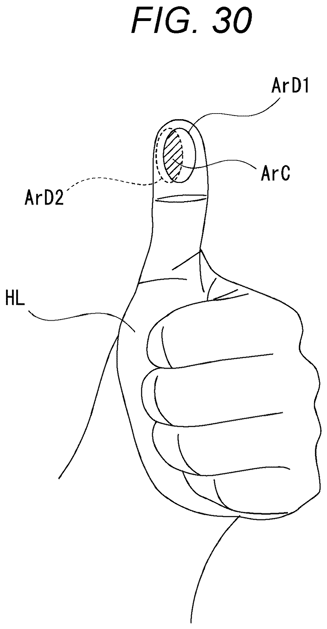

The finger-side contact area ArD1 in contact with the operation area 5 during the fingerprint matching processing may be different from the finger-side contact area ArD2 in contact with the operation area 5 during registration. For example, Fig. 30 illustrates the thumb of the left hand HL, but as illustrated, the finger-side contact area ArD1 and the finger-side contact area ArD2 are different areas partially overlapping each other.

At this time, in the fingerprint matching processing, it is possible to specify that the finger type read in the fingerprint matching processing is the thumb of the left hand HL by comparing a common area ArC (a hatched area in Fig. 30) which is a common area of the finger-side contact area ArD1 and the finger-side contact area ArD2.

Here, in a case where the finger-side contact area ArD1 and the finger-side contact area ArD2 are different areas, the fingerprint registration processing unit F3 performs update processing of fingerprint information using the finger-side contact area ArD2.

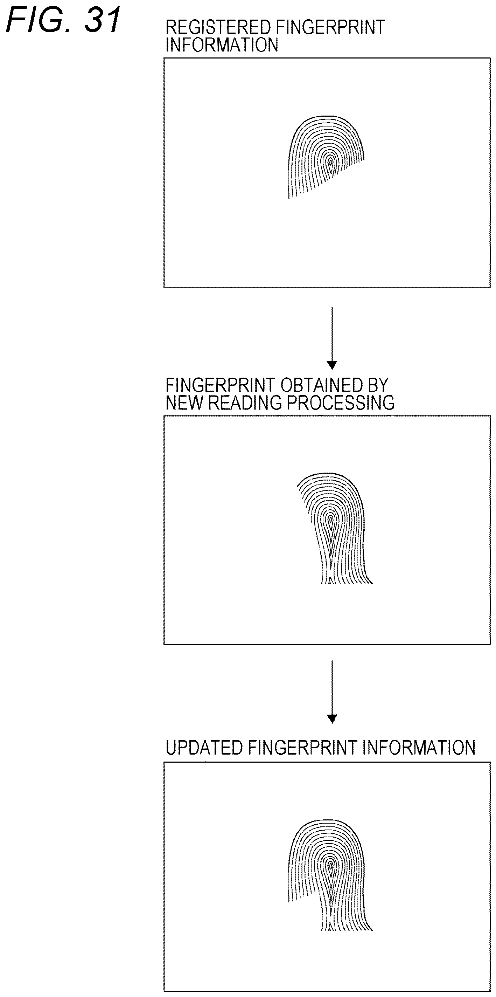

Specifically, as illustrated in Fig. 31, the fingerprint information is updated by adding a fingerprint for an area (unregistered area) not included in the registered fingerprint information in the fingerprint obtained by the new reading processing, and the updated fingerprint information is stored in the storage unit 79.

Therefore, it is possible to register a fingerprint over a wide area for each finger type, and it is possible to enrich fingerprint information.

Furthermore, in a case where the common area ArC described above is too small in the fingerprint matching processing, the matching fails, but the possibility that the fingerprint matching processing fails can be reduced by enriching the fingerprint information, and the efficiency of the fingerprint matching processing can be improved.

Moreover, as the update processing proceeds, even if the user is in contact with the operation area 5 with any part of the finger, the finger type is normally recognized, so that usability can be improved.

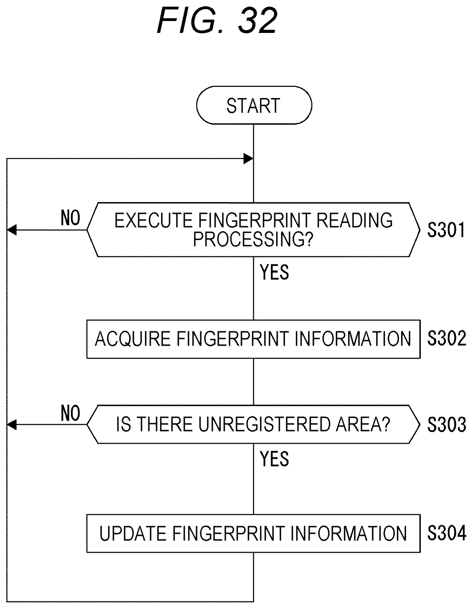

Fig. 32 illustrates an example of processing executed by the CPU 71 of the tablet terminal 1A in this example.

In step S301, the CPU 71 determines whether or not fingerprint reading processing has been executed. The processing of step S301 is repeated until the reading processing is executed.

Note that the present invention is not limited thereto, and each processing after step S302 in Fig. 32 may be executed with execution of the reading processing as a trigger.

In the case of determining that the reading processing has been executed, the CPU 71 acquires the fingerprint information from the storage unit 79 in step S302.

The CPU 71 compares the fingerprint newly read in step S302 with the fingerprint information, and determines whether or not there is an unregistered area.

In a case where there is no unregistered area, the CPU 71 returns to the processing of step S301.

On the other hand, in a case where there is an unregistered area, the CPU 71 updates the fingerprint information stored in the storage unit 79 on the basis of the unregistered area in step S304.

After ending the processing of step S304, the CPU 71 returns to step S301.

### <4-2. First example regarding use of fingerprint information>

The tablet terminal 1A in this example determines whether the tablet terminal 1A is held vertically or horizontally by using the registered fingerprint information. Specifically, the use mode of the user is determined such that the orientation of the image displayed on the display unit 3 is an appropriate orientation.

For such vertical-horizontal determination, it is conceivable to use a sensing result of an inertial measurement unit (IMU) in which a speed sensor, an acceleration sensor, an angular velocity sensor, and the like are combined. The IMU is provided, for example, as the above-described input unit 76.

However, only by using the sensing result of the IMU, it is not possible to distinguish between a state in which the tablet terminal 1A is gripped in the horizontal orientation (horizontally long state) in a normal sitting state and a state in which the tablet terminal 1A is gripped in the vertical orientation (vertically long state) while lying down, and there is a possibility that an image is displayed on the display unit 3 in an orientation that is not appropriate for the user.

According to this configuration, the CPU 71 of the tablet terminal 1A functions as the specification processing unit F5 and the correspondence processing unit F6.

Here, the specification processing unit F5 performs processing of specifying the finger type of a finger of the user that is in contact with the display unit 3 from the fingerprint information.

Furthermore, the correspondence processing unit F6 determines the orientation of the finger using the read fingerprint and fingerprint information, and sets and displays the orientation of the image (screen) to be displayed on the display unit 3.

In the following example, a case where the fingerprint of the right hand HR of the user is read will be described.

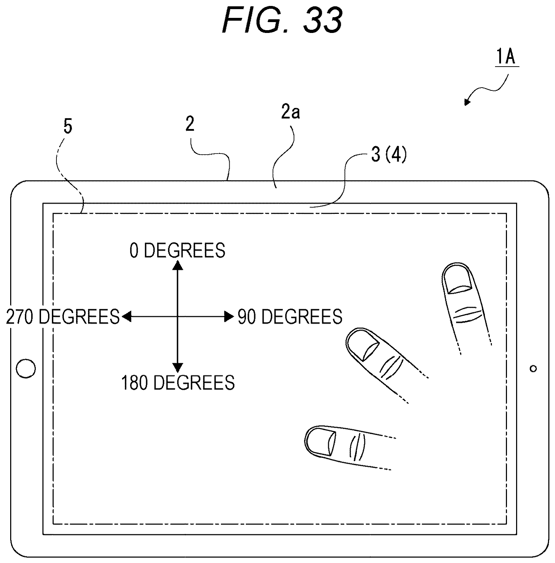

Fig. 33 illustrates the orientation of the finger in a case where the tablet terminal 1A is gripped so that it is oriented horizontally with respect to the user. Here, the angle is set clockwise with the upper side of the horizontally long tablet terminal 1A as 0 degrees.

In a case where the tablet terminal 1A is gripped in the horizontal orientation, the orientation of the finger is operated in a range of 270 degrees to 360 degrees (0 degrees).

Note that a side located on the upper side of the housing unit 2 in a case where the tablet terminal 1A is oriented horizontally is defined as an upper side 2a.

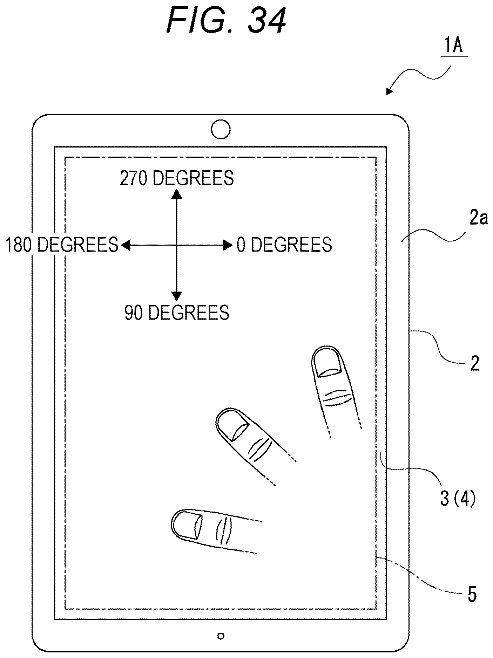

Fig. 34 illustrates the orientation of the finger in a case where the tablet terminal 1A is gripped so that it is oriented vertically with respect to the user and the upper side 2a is located on the right side.

In a case where the tablet terminal 1A is gripped vertically in a mode in which the upper side 2a is located on the right side, the orientation of the finger is operated in a range of 180 degrees to 270 degrees.

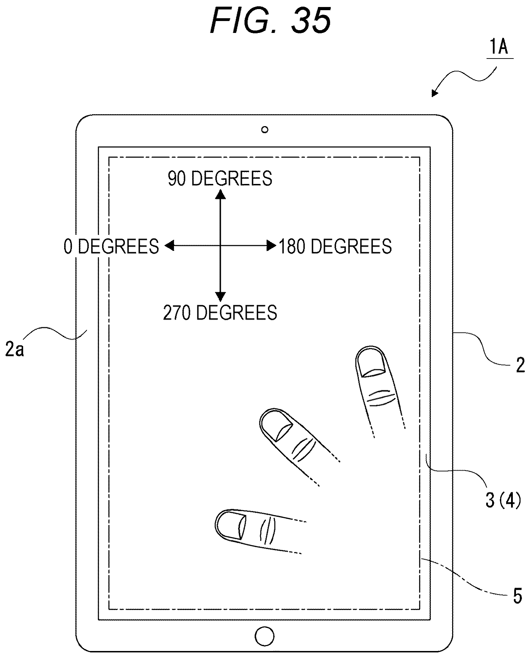

Fig. 35 illustrates the orientation of the finger in a case where the tablet terminal 1A is gripped so that it is oriented vertically with respect to the user and the upper side 2a is located on the left side.

In a case where the tablet terminal 1A is gripped vertically in a mode in which the upper side 2a is located on the left side, the orientation of the finger is operated in a range of 0 degrees to 90 degrees.

In this manner, the orientation of the fingerprint, that is, the orientation of the finger is determined from the detected fingerprint, the gripping mode is estimated on the basis of the angle information, and the orientation of the image to be displayed on the display unit 3 is set.

Therefore, even if the user operates the tablet terminal 1A in any posture, it is possible to always display an image in an orientation suitable for the user.

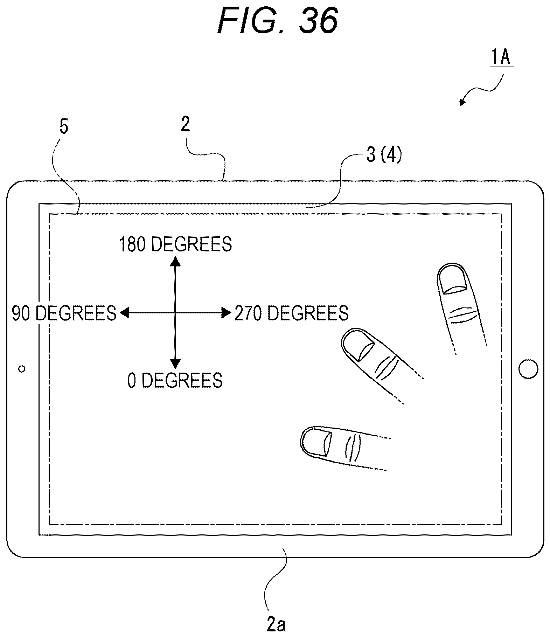

Note that even if the user grips the tablet terminal 1A horizontally and upside down, it is possible to perform appropriate display for the user by displaying the image upside down by estimating from the orientation of the fingerprint that the orientation of the finger is operated in the range of 90 degrees to 180 degrees as illustrated in Fig. 36.

Note that, in a case where the orientation (angle) of the fingerprint is a multiple of 90 such as 0 degrees, 90 degrees, 180 degrees, and 270 degrees, the determination result of the vertical-horizontal determination may be determined to either one. For example, in a case where the orientation of the fingerprint is 90 degrees, either vertical holding with the upper side 2a on the left side or horizontal holding with the upper side 2a upside down may be adopted as the determination result.

Furthermore, in a case where the orientation of the fingerprint is a multiple of 90, the vertical-horizontal determination based on the operation may not be performed. In this case, the vertical-horizontal determination is performed in a case where the angle of the fingerprint becomes a number other than a multiple of 90 by the subsequent operation.

Moreover, for example, in a case where the orientation of the fingerprint is detected between 90 degrees and 180 degrees from a state where the orientation of the fingerprint is detected between 0 degrees and 90 degrees, it is not necessary to rotate the image until the orientation of the fingerprint is continuously detected between 90 degrees and 180 degrees a predetermined number of times.

This makes it possible to prevent unintended rotation from being performed by a single operation.

Furthermore, in order to cope with an application in which a fingerprint can be detected at an unexpected angle, on/off of the function may be settable.

Note that, in a case where the specified finger type is the left hand HL, it is determined that the tablet terminal 1A is gripped in the horizontal orientation in a case where the angle of the fingerprint is 0 degrees to 90 degrees.

Furthermore, in a case where the angle of the fingerprint is 270 degrees to 0 degrees, it is determined that the tablet terminal 1A is gripped in the vertical direction in which the upper side 2a is located on the right side.

Moreover, in a case where the angle of the fingerprint is 90 degrees to 180 degrees, it is determined that the tablet terminal 1A is gripped in the vertical direction in which the upper side 2a is located on the left side.

Furthermore, in a case where the angle of the fingerprint is 180 degrees to 270 degrees, it is determined that the tablet terminal 1A is gripped in the horizontal orientation with the upper side 2a located on the lower side.

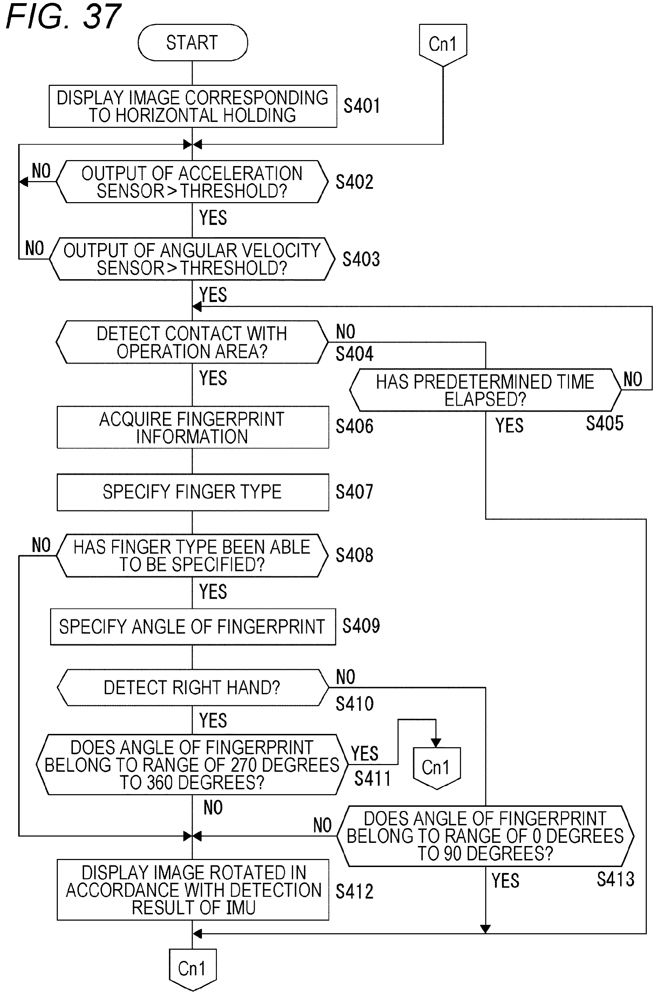

Fig. 37 illustrates an example of processing executed by the CPU 71 when vertical and horizontal determination of the screen is performed. Note that a connector Cn1 illustrated in the drawing indicates connection of processing.

In step S401, the CPU 71 displays an image corresponding to horizontal holding. This processing is basically performed in response to the tablet terminal 1A being horizontally held.

In step S402, the CPU 71 determines whether or not the output of the acceleration sensor is larger than a threshold. Then, in a case where it is determined that the output of the acceleration sensor is larger than the threshold, the CPU 71 determines whether or not the output of the angular velocity sensor is larger than a threshold in subsequent step S403.

The thresholds in step S402 and step S403 do not have to be the same.

The processing in steps S402 and S403 is processing for detecting whether or not the attitude of the tablet terminal 1A has changed by a predetermined amount or more while the user holds the tablet terminal 1A.

The processing in steps S402 and S403 is repeated until the determination results in steps S402 and S403 are both "YES".

On the other hand, in a case where the determination results in step S402 and step S403 are both "YES", the CPU 71 proceeds to step S404 and determines whether or not contact with the operation area 5 has been detected.

In a case where the operation on the operation area 5 has not been detected, the CPU 71 determines in step S405 whether or not the non-detection state of the operation has continued for a predetermined time. In a case where the predetermined time has not elapsed, the CPU 71 executes the processing of step S404 again.

The processing in steps S404 and S405 is processing for detecting that the user has not operated the operation area 5 for a predetermined time. In a case where the user has not operated the operation area 5 for the predetermined time (step S405: YES determination), the CPU 71 returns to the processing of step S402 again without rotating the image displayed on the display unit 3.

In the case of detecting the operation in which the user touches the operation area 5 within the predetermined time, that is, in a case where the determination is YES in step S404, the CPU 71 acquires the registered fingerprint information from the storage unit 79 in step S406.

In step S407, the CPU 71 performs fingerprint matching processing using the read fingerprint and fingerprint information to specify a finger type.

In step S408, the CPU 71 determines whether or not the finger type has been able to be specified. In a case where the finger type has not been able to be specified, the CPU 71 proceeds to step S412 described later and displays the rotated image on the display unit 3.

On the other hand, in a case where the finger type has been able to be specified, the CPU 71 specifies an angle of the fingerprint (finger) in step S409.

In step S410, the CPU 71 determines whether or not the detected finger type is the finger of the right hand HR. In a case where the finger is the finger of the right hand HR, the CPU 71 determines whether or not the angle of the fingerprint belongs to a range of 270 degrees to 360 degrees in step S411.

In a case where the fingerprint of the right hand HR is anywhere from 270 degrees to 360 degrees, the CPU 71 returns to step S402 without executing the processing of step S412, that is, without rotating the image displayed on the display unit 3.

On the other hand, in a case where the fingerprint of the right hand HR does not belong to the range of 270 degrees to 360 degrees, the CPU 71 proceeds to step S412 and performs processing of rotating the image in accordance with the sensing result of the IMU, that is, the detection result of the acceleration sensor or the angular velocity sensor and displaying the image on the display unit 3. Therefore, for example, an image suitable for the gripping mode illustrated in Fig. 34, Fig. 35, or Fig. 36 is displayed.

In a case where it is determined in step S410 that the detected finger type is a finger of the left hand HL (step S410: NO determination), the CPU 71 determines in step S413 whether or not the angle of the fingerprint belongs to a range of 0 degrees to 90 degrees.

In a case where the fingerprint of the left hand HL belongs to the range of 0 degrees to 90 degrees, the CPU 71 does not execute the processing of step S412, that is, does not rotate the image displayed on the display unit 3, and returns to step S402.

On the other hand, in a case where the fingerprint of the left hand HL does not belong to the range of 0 degrees to 90 degrees, the CPU 71 proceeds to step S412 and performs processing of rotating the image in accordance with the sensing result of the IMU and displaying the image on the display unit 3. Therefore, for example, an image suitable for the gripping mode illustrated in Fig. 34, Fig. 35, or Fig. 36 is displayed.

By the CPU 71 executing the series of processing illustrated in Fig. 37, the screen is not rotated only by rotating the tablet terminal 1A. Then, by bringing the finger into contact with the operation area 5, the image is appropriately rotated according to the gripping mode of the user and displayed on the display unit 3.

Note that, in a case where it is determined in the determination processing of step S405 that the predetermined time has elapsed, the CPU 71 may execute processing of rotating the image according to detection by the acceleration sensor and the angular velocity sensor. That is, the image may be rotated such that the upper side of the four sides on the display unit 3 of the tablet terminal 1A coincides with the upper side of the image.

Similarly, in a case where the finger type cannot be specified in step S408, the CPU 71 may rotate the image such that the upper end of the display unit 3 of the tablet terminal 1A coincides with the upper end of the image.

By performing such rotation processing, the user can also perform a conventional operation of rotating the screen only by inclining the tablet terminal 1A without performing an operation of bringing the finger into contact with the operation area 5.

Note that the above-described example is a description of the information processing apparatus 1 as the tablet terminal 1A that is basically handled in the horizontal orientation.

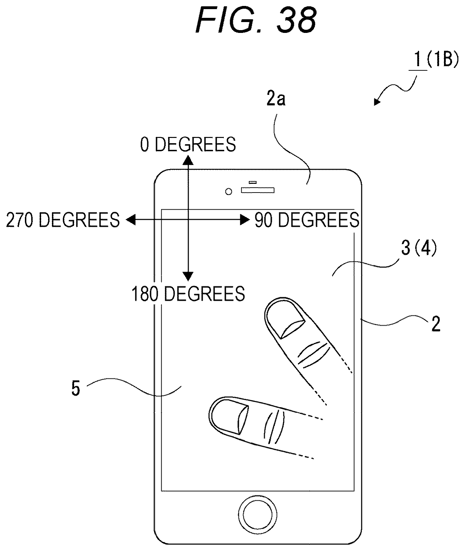

As for the information processing apparatus 1 such as the smartphone 1B that is basically handled in the vertical direction, as illustrated in Fig. 38, in a case where the angle of the fingerprint of the right hand HR is 270 degrees to 360 degrees, it is determined that the information processing apparatus 1 is gripped in the vertical direction in which the upper side 2a is located above.

Then, in a case where the angle of the fingerprint of the right hand HR is 180 degrees to 270 degrees, it is determined that the information processing apparatus 1 is gripped in the horizontal orientation in which the upper side 2a is located on the right side. In a case where the angle of the fingerprint is 0 degrees to 90 degrees, it is determined that the information processing apparatus 1 is gripped in the horizontal orientation in which the upper side 2a is located on the left side. In a case where the angle of the fingerprint is 90 degrees to 180 degrees, it is determined that the information processing apparatus 1 is gripped in the vertical direction in which the upper side 2a is located on the lower side.

Note that, in a case where a predetermined button (or icon) is operated in the tablet terminal 1A in the sleep state, the sleep state (or locked state) may be canceled in a case where the fingerprint matching processing is performed and the matching is successful. In such a case, at the time of the fingerprint matching processing for the finger used for the operation to cancel the sleep state, the angle of the fingerprint may be calculated together, and the screen rotation after the sleep cancellation may be performed.

That is, after completing the fingerprint matching processing for the finger used for the operation to cancel the sleep state, the CPU 71 may perform each processing shown in steps S409 to S413.

### <4-3. Second example regarding use of fingerprint information>

The tablet terminal 1A in the present example determines the orientation of the captured image using the fingerprint information registered at the time of imaging using the tablet terminal 1A.

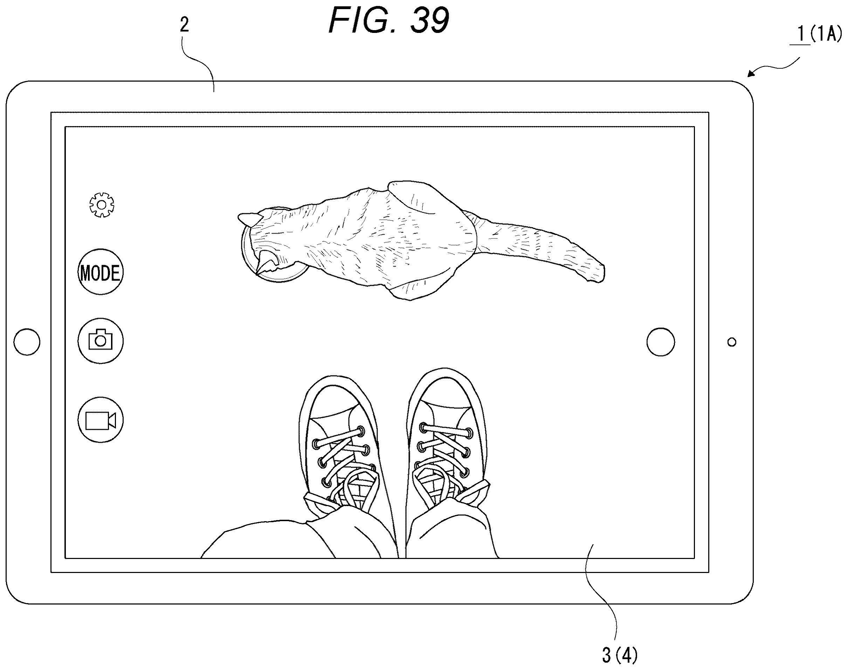

For example, as illustrated in Fig. 39, there is a case where imaging is performed while keeping the attitude of the tablet terminal 1A substantially horizontal, such as a case where a cat at the feet of the user is imaged.

In such a case, there is a high possibility that the orientation of the captured image cannot be appropriately determined on the basis of the output data of the IMU.

In this case, the angle of the fingerprint is specified by collating the fingerprint of the finger operated when an imaging button is pressed, and the orientation of imaging is determined according to the angle.

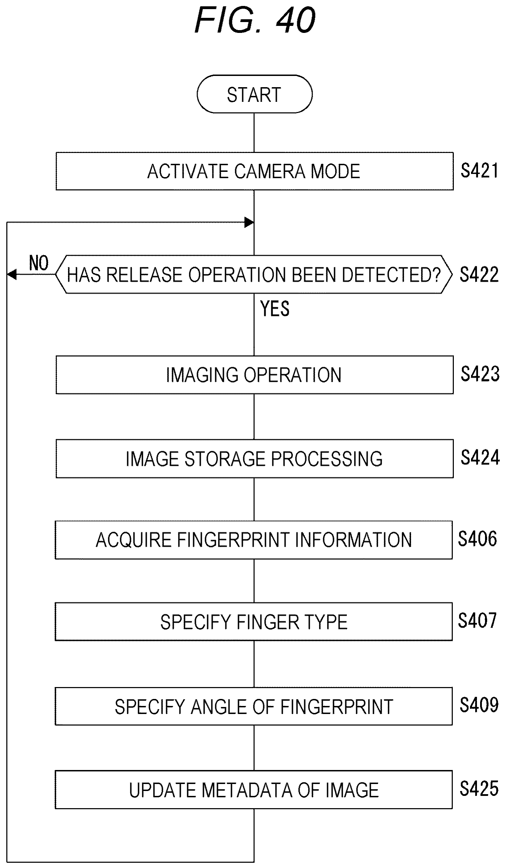

Fig. 40 illustrates an example of processing executed by the CPU 71 of the tablet terminal 1A in this example. Note that the processing illustrated in Fig. 40 is processing executed by the CPU 71 in response to detection of the operation of activating the camera mode.

Furthermore, processing similar to the processing described with reference to Fig. 37 is denoted by the same step numbers, and description thereof will be omitted as appropriate.

In step S421, the CPU 71 activates the camera mode.

In step S422, the CPU 71 determines whether or not the release operation has been detected.

In a case where it is determined that the release operation has not been detected, the CPU 71 executes the processing of step S422 again.

Note that, in a case where an operation other than the release operation is detected while the processing of step S422 is repeatedly executed, the CPU 71 returns to step S422 after executing the corresponding processing.

In a case where it is determined that the release operation has been detected, the CPU 71 realizes the imaging operation in step S423. Therefore, various types of signal processing are performed on the image data output from the image sensor to obtain image data.

In step S424, the CPU 71 performs processing of storing the image data in the storage unit 79.

The CPU 71 acquires the fingerprint information from the storage unit 79 in step S406, and specifies the finger type of the finger used for the release operation by the fingerprint matching processing in step S407.

In step S409, the CPU 71 specifies the angle of the fingerprint.

In step S425, the CPU 71 specifies a capturing orientation from the angle of the fingerprint and updates the metadata of the image. For example, as illustrated in Fig. 33, in a case where the angle of the fingerprint of the thumb of the right hand HR is between 270 degrees and 360 degrees, the orientation of the captured image is set such that the upper side 2a is on the upper side.

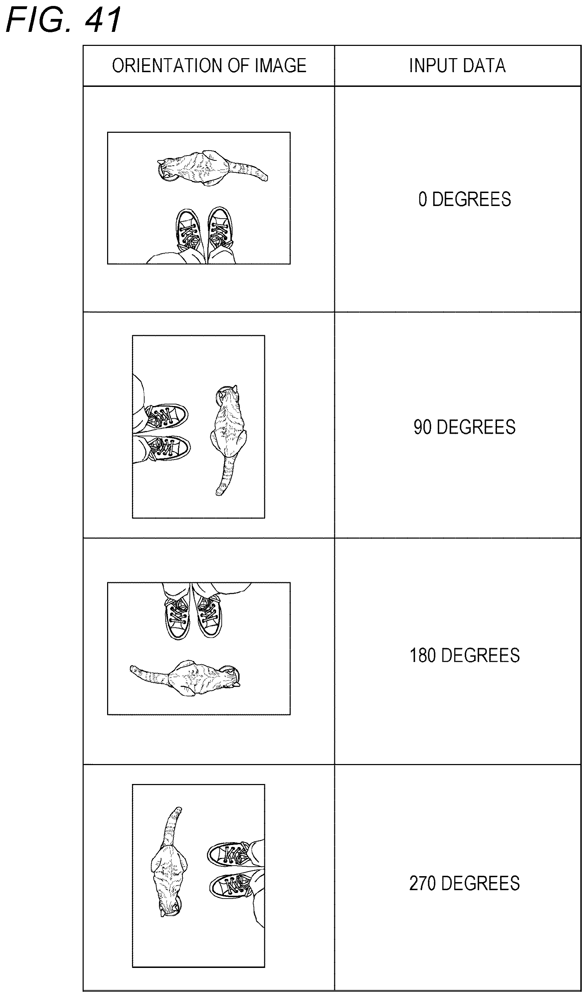

Therefore, for example, "0 degree" is set as the metadata of the image data (see Fig. 41).

Furthermore, as illustrated in Fig. 34, in a case where the angle of the fingerprint is between 180 degrees and 270 degrees, the orientation of the captured image is set such that the upper side 2a is on the right side.

Therefore, for example, "90 degrees" is set as the metadata of the image data (see Fig. 41).

Furthermore, as illustrated in Fig. 36, in a case where the angle of the fingerprint is between 0 degrees and 90 degrees, the orientation of the captured image is set such that the upper side 2a is on the left side.

Therefore, for example, "270 degrees" is set as the metadata of the image data (see Fig. 41).

Moreover, as illustrated in Fig. 35, in a case where the angle of the fingerprint is between 90 degrees and 180 degrees, the orientation of the captured image is set such that the upper side 2a is on the lower side.

Therefore, for example, "180 degrees" is set as the metadata of the image data (see Fig. 41).

After updating the metadata in step S425, the CPU 71 detects the release operation again in step S422.

Note that, in a case where an operation to end the camera mode is detected during the execution of each processing, the CPU 71 ends the camera mode regardless of the processing being executed and ends the series of processing illustrated in Fig. 40.

Note that, as illustrated in Fig. 40, by executing the processing of specifying the angle of the fingerprint in step S409 after the imaging operation in step S423, it is possible to prevent occurrence of a lag in the imaging operation. Therefore, imaging can be performed at an appropriate timing.

### <4-4. Third example regarding use of fingerprint information>

In the present example, the smartphone 1B is taken as an example of the information processing apparatus 1.

In the smartphone 1B, a finger type used at the time of operating the smartphone 1B is specified to determine whether the operation is one-hand operation or two-hand operation.

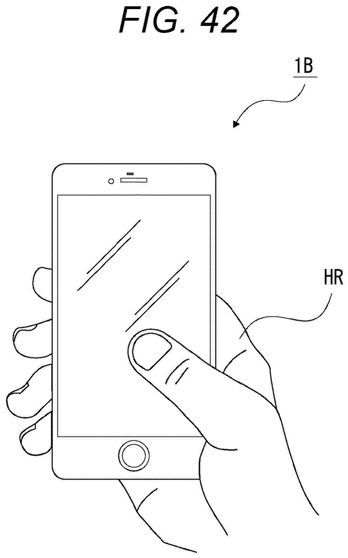

For example, as illustrated in Fig. 42, in a case where one-hand operation is performed to operate the smartphone 1B with the right hand HR while holding the smartphone 1B with the right hand HR, an area easily operated with the right hand HR is an area on the right side or the lower side of the display unit 3.

Consequently, the CPU 71 of the smartphone 1B shifts the image to be displayed on the display unit 3 to the lower right side in the case of detecting the one-hand operation of the right hand HR.

Similarly, in a case where a one-hand operation of operating the smartphone 1B with the left hand HL while holding the smartphone 1B with the left hand HL is performed, an area easily operated with the left hand HL is the left side or the lower side of the display unit 3. Consequently, the CPU 71 of the smartphone 1B shifts the image to be displayed on the display unit 3 to the lower left in the case of detecting the one-hand operation of the left hand HL.

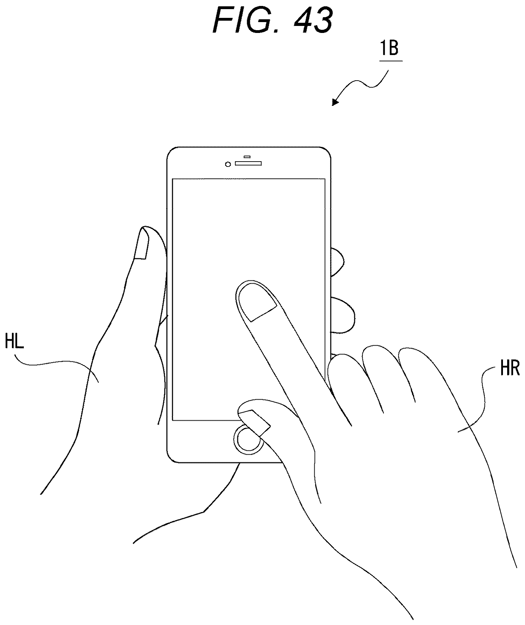

Furthermore, as illustrated in Fig. 43, in a case where a two-hand operation to operate the smartphone 1B with one hand while holding the smartphone 1B with the other hand is performed, there is no difference in ease of operation anywhere on the display unit 3.

Consequently, the CPU 71 of the smartphone 1B displays an image on the entire display unit 3.

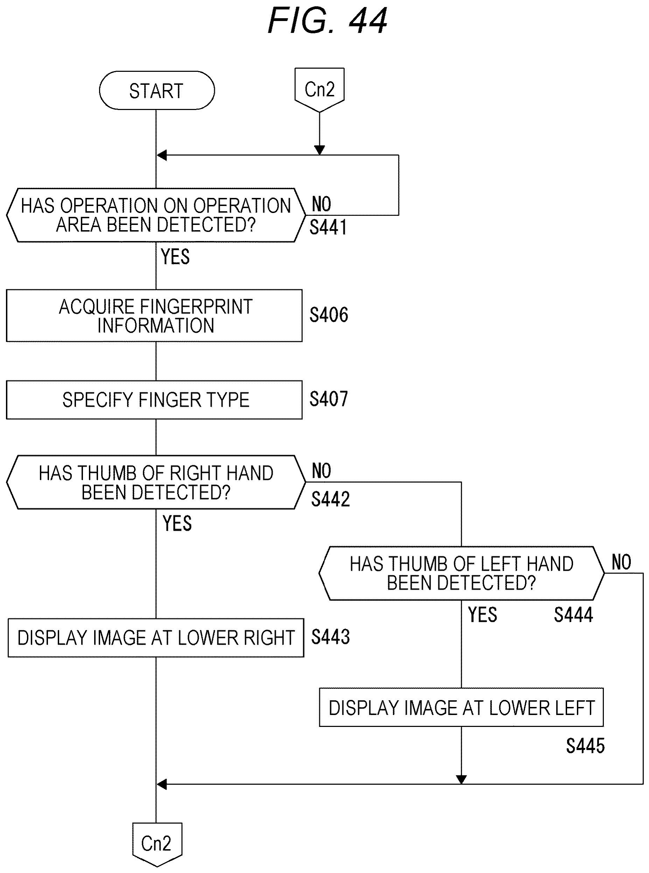

Fig. 44 illustrates an example of processing executed by the CPU 71 of the smartphone 1B in this example. Note that processing similar to that in Fig. 37 will be denoted by the same step number, and description thereof will be omitted as appropriate. Furthermore, a connector Cn2 illustrated in the drawing indicates connection of processing.

The CPU 71 of the smartphone 1B determines whether or not an operation on the operation area 5 has been detected in step S441.

The CPU 71 repeats the processing of step S441 until the operation on the operation area 5 is detected.

In a case where it is determined that an operation on the operation area 5 has been detected, the CPU 71 acquires fingerprint information from the storage unit 79 in step S406.

In step S407, the CPU 71 specifies the finger type used for the operation by performing fingerprint matching processing.

In step S442, the CPU 71 determines whether or not the thumb of the right hand HR has been detected. In a case where it is determined that the operation with the thumb of the right hand HR has been performed, the CPU 71 displays the image on the display unit 3 to be biased toward the lower right in step S443 (see Fig. 42).

Thereafter, the CPU 71 returns to step S441 again.

On the other hand, in a case where it is determined in step S442 that the thumb of the right hand HR has not been detected, the CPU 71 proceeds to step S444 and determines whether or not the thumb of the left hand HL has been detected. In a case where it is determined that the operation using the thumb of the left hand HL has been performed, the CPU 71 displays the image on the display unit 3 to be biased toward the lower left in step S445.

After step S445 or after it is determined in step S444 that the thumb of the left hand HL has not been detected, the CPU 71 returns to step S441 again.

Note that, in a case where it is determined in step S444 that the thumb of the left hand HL has not been detected, the CPU 71 determines that an operation with both hands (see Fig. 43) is performed.

### <4-5. Fourth example regarding use of fingerprint information>

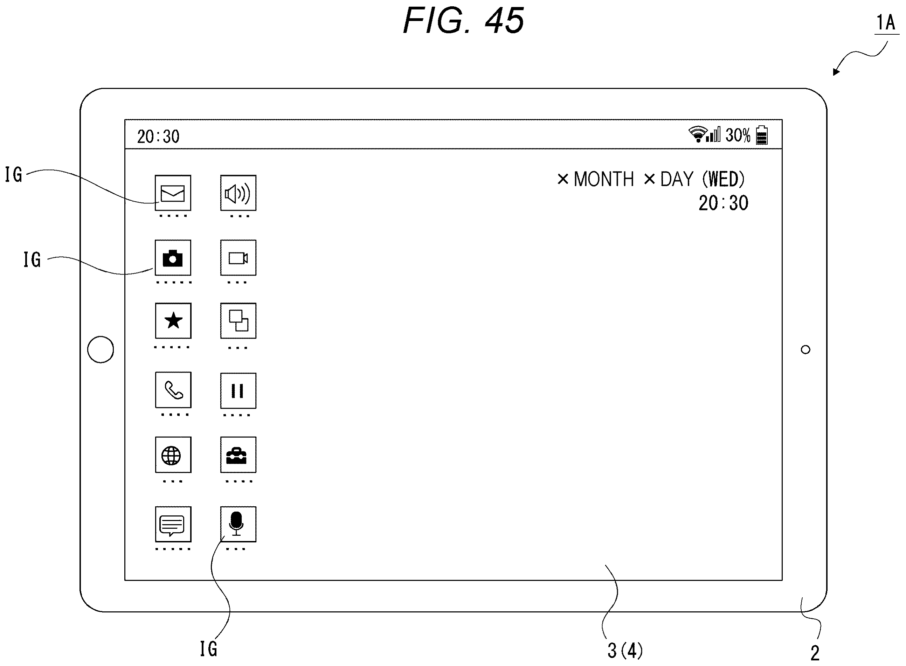

On the home screen of the tablet terminal 1A, an icon image IG for activating an application is disposed (see Fig. 45).

In a case where the user taps the icon image IG or the like, an application associated with the icon image IG is activated.

After the application is activated, an application activation screen is displayed on the display unit 3. At this time, it is conceivable to provide a plurality of types of images to be displayed as a startup screen depending on the application.

In the tablet terminal 1A in the present example, the screen after activation is made different according to the finger type used for the activation operation of the application.

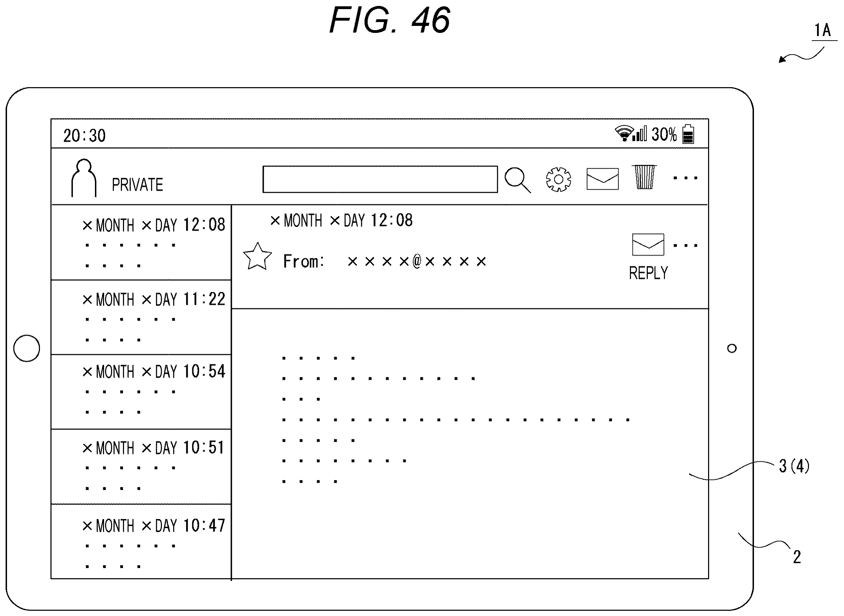

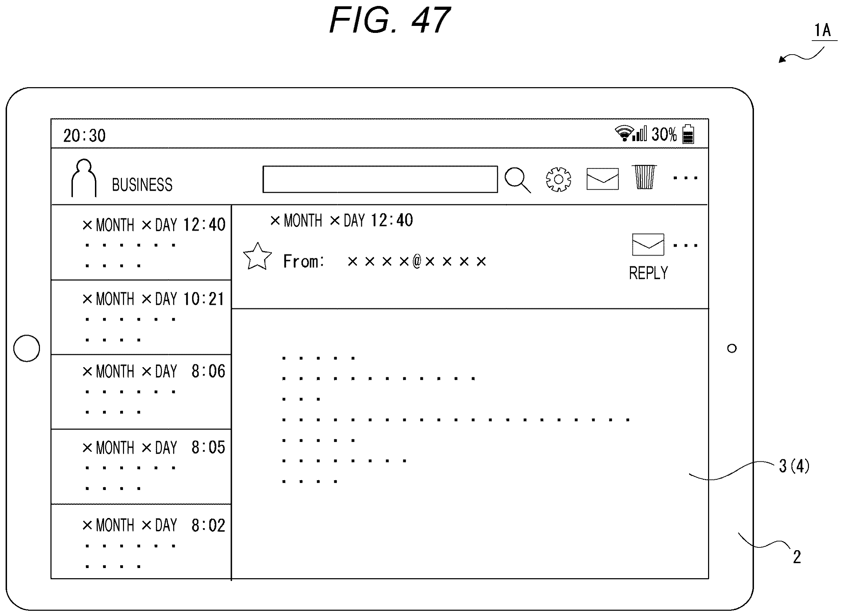

For example, in a case where an activation operation of the mail application is performed with the thumb of the right hand HR, the home screen in a state of logging in to the private account is displayed (see Fig. 46). Furthermore, in a case where the activation operation of the mail application is performed with the index finger of the right hand HR, the home screen in a state of being logged in to the work account is displayed (see Fig. 47).

Note that the finger type is specified by reading the fingerprint at the time of the activation operation of the application, and at the same time, the fingerprint authentication can also serve as the login operation of the account.

That is, in a case where the activation operation is performed with the thumb of the right hand HR, the authentication processing for the private account is performed using the fingerprint of the thumb, so that the home screen is displayed in a state of being logged in to the private account.

Furthermore, in a case where the activation operation is performed with the index finger of the right hand HR, the authentication processing for the work account is performed using the fingerprint of the index finger, so that the home screen is displayed in a state of being logged in to the work account.

That is, both the activation operation and the authentication operation can be performed, and usability can be improved.

Note that it is not necessary to associate the finger type and the account on a one-to-one basis. For example, the thumb and the index finger of the right hand HR may be associated with the private account, and the middle finger, the ring finger, the little finger of the right hand HR, and the five fingers of the left hand HL may be associated with the work account.

Furthermore, the accounts may be changed by the five fingers of the right hand HR and the five fingers of the left hand HL. Thus, various aspects are conceivable.

Examples of other applications include a social networking service (SNS) application. Among users who use the SNS, there are not a few users who separately use a plurality of accounts.

According to the present example, the activation operation and the login operation can be performed using 10 finger types including 5 fingers of the right hand HR and 5 fingers of the left hand HL. Consequently, even in the case of the same SNS, it is possible to perform activation and login of 10 accounts with a simple operation.

In addition to this, it is conceivable to make the finger type and the activation mode different in various applications such as a news application having a tab for each category and a game application using a plurality of accounts.

For example, in the case of the news application, the tab to be displayed at the time of activation can be changed according to the finger type instead of switching the account.

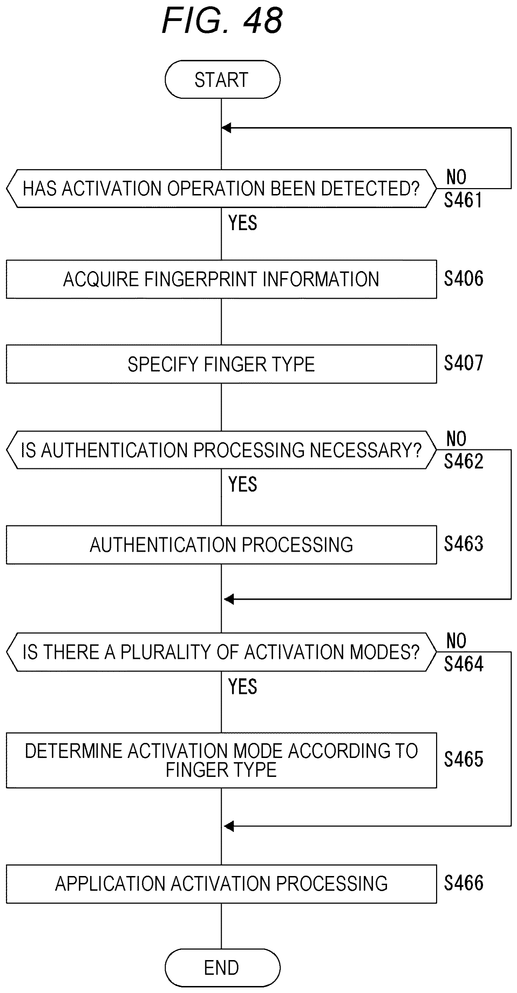

Fig. 48 illustrates an example of processing executed by the CPU 71 of the tablet terminal 1A in this example. Note that processing similar to that in Fig. 37 will be denoted by the same step number, and description thereof will be omitted as appropriate.

In step S461, the CPU 71 of the tablet terminal 1A determines whether an activation operation for a predetermined application has been detected. The CPU 71 repeats the processing of step S461 until the activation operation is detected.

Note that each processing subsequent to step S406 in Fig. 48 may be executed with detection of the activation operation as a trigger.

In a case where it is determined that the activation operation has been detected, the CPU 71 acquires fingerprint information from the storage unit 79 in step S406.

Furthermore, in step S407, the CPU 71 specifies the finger type used for the activation operation by performing fingerprint matching processing.

In step S462, the CPU 71 determines whether or not the authentication processing is necessary. For example, when a mail application or an SNS application requiring login is an activation target, it is determined that the authentication processing is necessary.

Note that the CPU 71 may determine that the authentication processing is unnecessary in the case of displaying the authentication screen after activation. For example, this corresponds to a case where authentication is performed using an identification (ID) and a password without using biometric authentication.

In a case where it is determined that the authentication processing is unnecessary, the CPU 71 avoids the processing of step S463.

In a case where it is determined that the authentication processing is necessary, the CPU 71 executes the authentication processing in step S463.

Although not illustrated, in a case where the authentication processing fails, the CPU 71 may return to step S461 through error display or the like without executing the processing of step S464.

In a case where the authentication is successful, the CPU 71 determines in step S464 whether or not there is a plurality of activation modes in the application to be activated.

In a case where it is determined that there is not a plurality of activation modes, the CPU 71 performs application activation processing in a predetermined mode in step S466.

On the other hand, in a case where it is determined that there is a plurality of activation modes, the CPU 71 determines the activation mode according to the finger type in step S465.

Then, in step S466, the CPU 71 activates the application in an activation mode according to the finger type.

After ending the processing of step S466, the CPU 71 executes a program corresponding to the activated application.

Note that, in the present example, an example has been described in which the application is activated in an activation mode according to the finger type used for the activation operation of the application.

The present invention is not limited to this, and a finger type used for an unlock operation of the tablet terminal 1A may be determined, and one pane may be selected from a plurality of panes according to the finger type and displayed as a screen after being unlocked.

For example, in a case where a shortcut of a work-related application is disposed in a certain pane and a shortcut of a hobby-related application is disposed in another certain pane, it is possible to perform different display by using different finger types for the unlock operation.

Consequently, unlocking can be performed without showing information that is not desired to be shown, so that privacy can be protected.

### <4-6. Fifth example regarding use of fingerprint information>

In the present example, the tablet terminal 1A as the information processing apparatus 1 performs braille input. At this time, conventionally, six different areas for braille input are provided on the display unit 3, and the presence or absence of input of each point constituting the braille is determined according to the presence or absence of input to each area.

However, in this aspect, it is difficult for a user with weak eyesight to perform an accurate operation on the six different areas, and it is difficult to perform an appropriate braille input. In particular, in a braille input using a virtual input button disposed on the display unit 3 of the tablet terminal 1A instead of a braille input machine provided with a physical button for input, it is difficult to discriminate the operation area 5 by touch, and such a tendency is remarkable.

Furthermore, there are at least two types of modes of the braille input using the tablet terminal 1A.

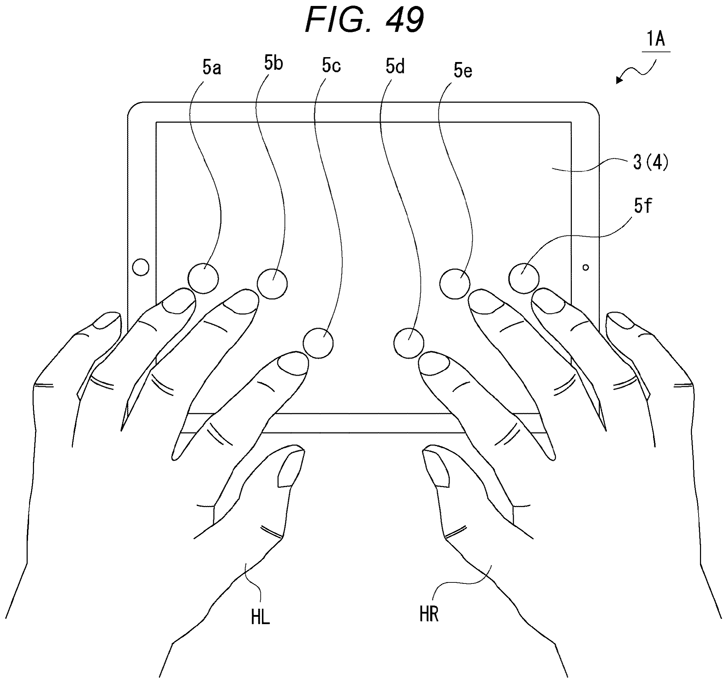

One is a desk placement mode as illustrated in Fig. 49. In the desk placement mode, a first operation area 5a that is easy to operate with the ring finger of the left hand HL, a second operation area 5b that is easy to operate with the middle finger of the left hand HL, a third operation area 5c that is easy to operate with the index finger of the left hand HL, a fourth operation area 5d that is easy to operate with the index finger of the right hand HR, a fifth operation area 5e that is easy to operate with the middle finger of the right hand HR, and a sixth operation area 5f that is easy to operate with the ring finger of the right hand HR are set on the display unit 3.

The first operation area 5a to the sixth operation area 5f are disposed side by side apart from each other in the left-right direction, thereby facilitating input.

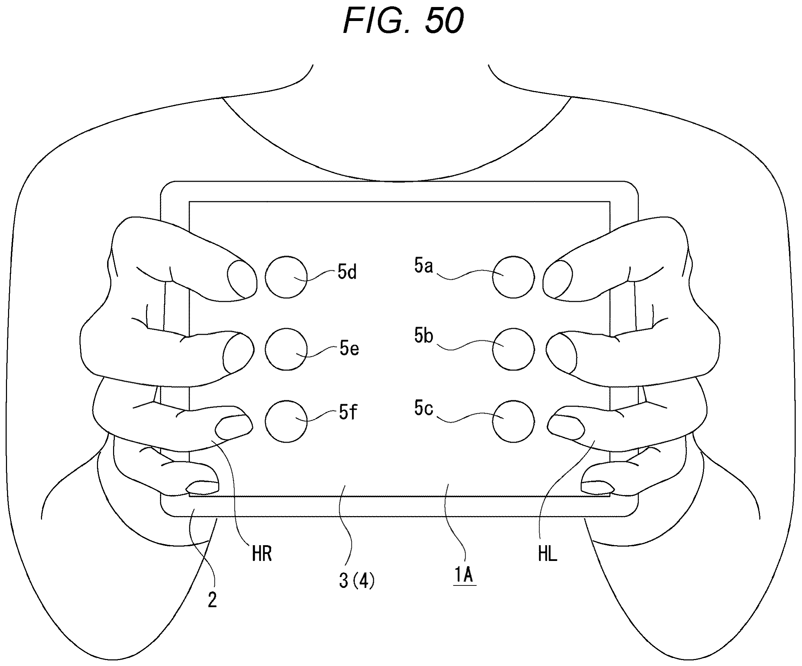

As illustrated in Fig. 50, the second input mode is a two-handed mode. In the two-handed mode, the first operation area 5a, the second operation area 5b, and the third operation area 5c operated by the left hand HL are disposed on the right side of the display unit 3 so as to be vertically separated from each other. Furthermore, the fourth operation area 5d, the fifth operation area 5e, and the sixth operation area 5f operated by the right hand HR are disposed on the left side of the display unit 3 so as to be vertically separated from each other.

As described above, since it is necessary to make the arrangement of each operation area 5 different according to the mode to be used, it is necessary to switch the mode by a user operation or to automatically determine the mode according to the attitude of the tablet terminal 1A.

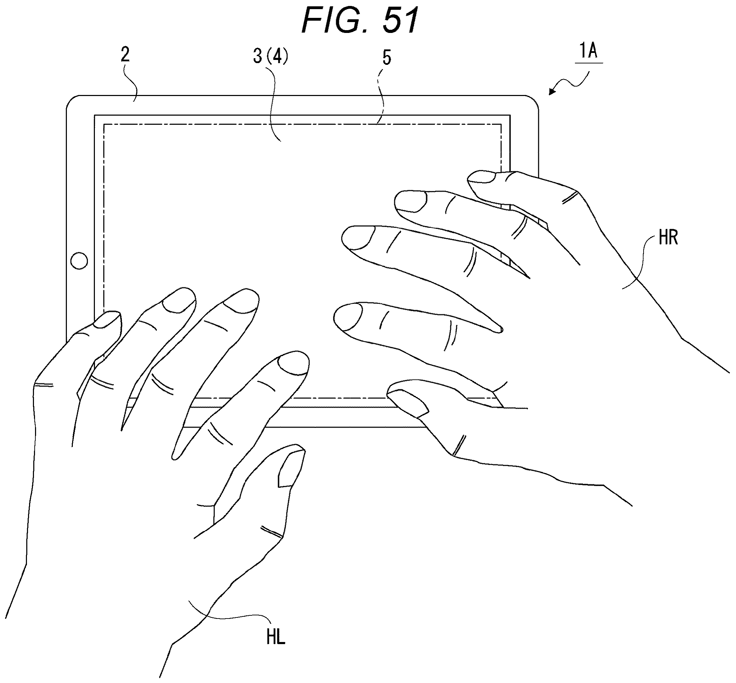

In the tablet terminal 1A having the present configuration, the wide operation area 5 is set over substantially the entire display unit 3 without providing the operation area 5 for each finger type (see Fig. 51).

Then, the braille input is performed according to the finger type brought into contact with the operation area 5. Consequently, for example, even in a case where different finger types are brought into contact with the same place, the input point in the braille is different according to the finger type, so that the user can perform the braille input without being conscious of the operation area 5.

Furthermore, since the operation area 5 is not provided for each finger type, even if the desk placement mode and the two-handed mode are switched, it is not necessary to change the user interface in the display unit 3, and further, the processing load of the tablet terminal 1A can be reduced.

Furthermore, it is possible to assign a finger type (for example, a thumb) that is not used to input the six points constituting the braille to the kanji conversion operation. Then, since the operation using the finger type can be performed anywhere in the operation area 5, the input can be performed in the posture of the hand according to the user's preference.

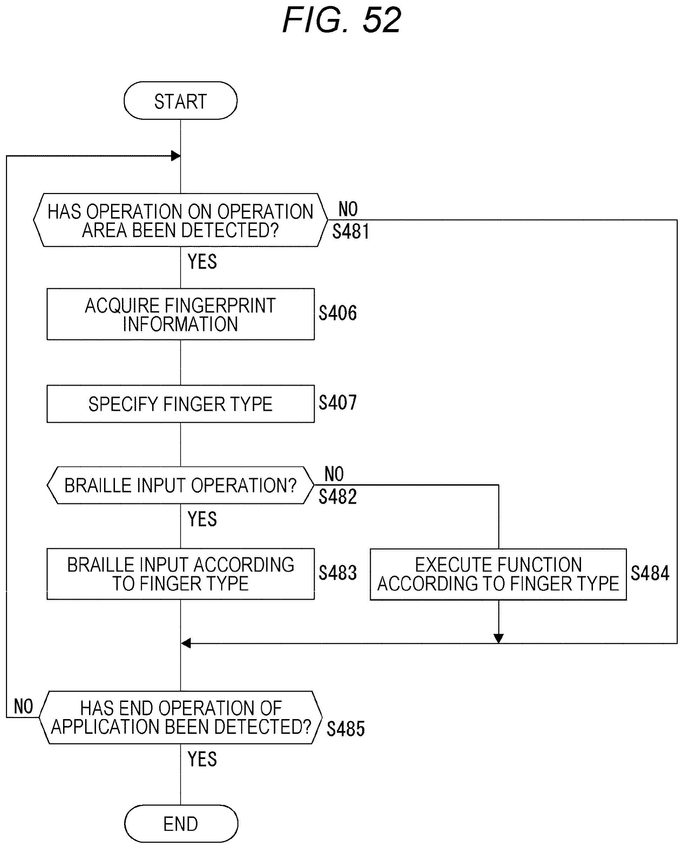

Fig. 52 illustrates an example of processing executed by the CPU 71 of the tablet terminal 1A in the braille input of this example. Note that processing similar to the processing described with reference to Fig. 37 is denoted by the same step number, and description thereof will be omitted as appropriate.

In step S481, the CPU 71 determines whether or not an operation on the operation area 5 has been detected.

In a case where the operation on the operation area 5 has not been detected, the CPU 71 further determines whether or not the end operation of the application that performs the braille input has been detected in step S485.

In a case where the end operation of the application has been detected, the CPU 71 ends the series of processing illustrated in Fig. 52.

Furthermore, in a case where the end operation of the application has not been detected, the CPU 71 returns to the processing of step S481 again.

In a case where the operation on the operation area 5 is detected in step S481, the CPU 71 acquires the fingerprint information from the storage unit 79 in step S406, and specifies the finger type by the fingerprint matching processing in step S407. In the specification processing of step S407, in a case where there is a plurality of fingers in contact with the operation area 5, a plurality of finger types is specified.

In step S482, the CPU 71 determines whether the detected finger type is used for the braille input operation. In a case where the finger type used for the braille input operation is detected, the CPU 71 makes a YES determination in step S482.

In this case, the CPU 71 performs, in step S483, the braille input according to the detected finger type, and proceeds to step S485.

On the other hand, in a case where the detected finger type is not used for the braille input operation and NO is determined in step S482, the CPU 71 proceeds to step S484 and executes a function according to the finger type.

The function according to the finger type is, for example, a Chinese character conversion operation, an operation of deleting one character from characters being input, an operation of inputting a space, or the like.

Note that, in a case where an operation that is not the finger type for executing the braille input and is not the finger type for executing the specific function is detected, it is possible to prevent an erroneous operation due to erroneous contact by ignoring the operation.

After executing step S484, the CPU 71 proceeds to step S485.

### <5. Guidance to fingerprint registration>

In the tablet terminal 1A, the above-described various processing can be implemented by performing fingerprint registration.

Here, processing for prompting the user to register a fingerprint will be described.

For example, in a case where the user changes the posture while holding the tablet terminal 1A in a state where no fingerprint is registered, the vertical-horizontal determination is performed according to the output of the IMU, and the screen rotation processing is performed as necessary.

In a case where the rotation processing does not conform to the user's intention, the user performs an operation of setting the automatic rotation function to OFF, an operation of rotating the screen again, or the like within a predetermined time such as within several seconds after the rotation processing is performed.

In a case where such an operation is detected, processing for notifying the user that there is a more convenient function is executed in the tablet terminal 1A.

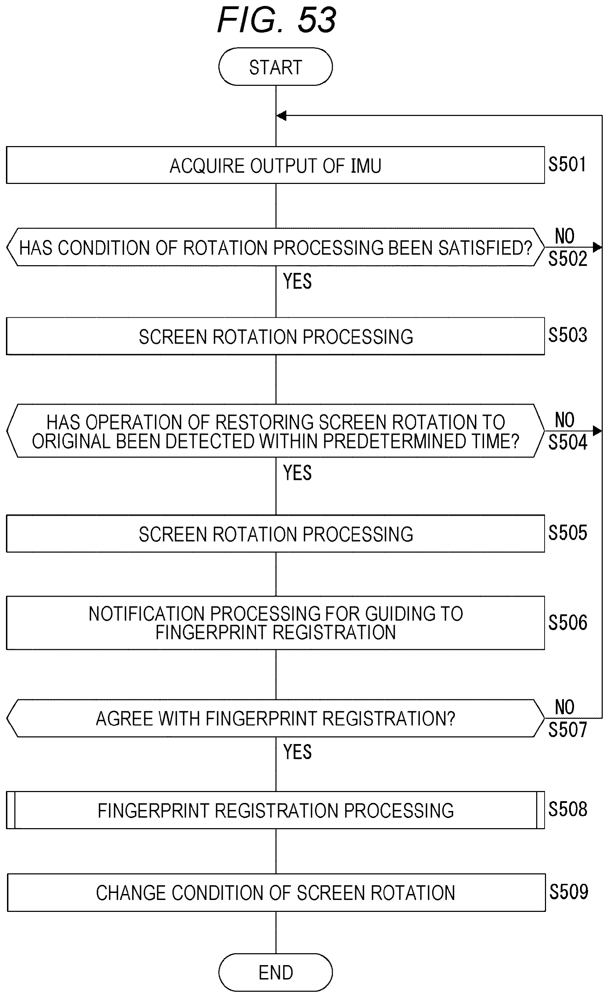

Specifically, an example of processing executed by the CPU 71 of the tablet terminal 1A is illustrated in Fig. 53.

In step S501, the CPU 71 acquires a sensing result of the IMU.

In step S502, the CPU 71 determines whether or not the execution condition of the rotation processing has been satisfied on the basis of the sensing result.

In a case where it is determined that the execution condition of the rotation processing has not been satisfied, the CPU 71 returns to the processing of step S501.

On the other hand, in a case where it is determined that the execution condition of the rotation processing has been satisfied, that is, when it has been detected that the tablet terminal 1A is tilted by a certain angle or more, the CPU 71 performs the screen rotation processing in step S503.

Subsequently, in step S504, the CPU 71 determines whether or not an operation of restoring the screen rotation to the original state has been detected within a predetermined time. This operation corresponds to, for example, an operation of returning the tablet terminal 1A to the original attitude, an operation of setting the automatic rotation function of the screen to OFF, and the like.

In a case where it is determined that such an operation has not been detected, the CPU71 returns to the processing of step S501.

On the other hand, in a case where it is determined that such an operation has been detected, the CPU 71 proceeds to step S505, performs screen rotation processing for returning the screen to the original orientation, and performs notification processing for guiding to fingerprint registration in the following step S506.

Subsequently, in step S507, the CPU 71 determines whether or not the user has agreed with the fingerprint registration.

For example, in the notification processing for guiding to fingerprint registration (step S506), for example, a message for notifying the user that fingerprint registration is convenient, a button for transitioning to fingerprint registration, and the like are presented to the user.

In a case where the user does not operate the button for transitioning to fingerprint registration, the CPU 71 determines NO in the determination processing of step S507. In this case, the CPU 71 returns to the processing of step S501.

On the other hand, in a case where the button operation has been performed, the CPU 71 makes a YES determination in step S507, and performs fingerprint registration processing in subsequent step S508.

In the fingerprint registration processing, for example, the processing as illustrated in each of Figs. 26 to 29 is executed by the CPU 71.

In step S509, the CPU 71 performs processing of changing the screen rotation condition, specifically, processing of changing the condition so as to determine the screen rotation by using the orientation of the fingerprint.

Therefore, screen rotation (for example, the processing illustrated in Fig. 37) according to the orientation of the fingerprint is performed in the subsequent operations, and unnecessary screen rotation can be suppressed to improve convenience for the user.

As can be understood from the above description, the series of processing illustrated in Fig. 53 is processing executed in a case where the function of performing screen rotation according to the angle of the fingerprint is set to OFF or in a case where the fingerprint is not registered.

### <6. First summary>

As described above, the information processing apparatus 1 such as the tablet terminal 1A and the smartphone 1B according to the present technology includes the UI processing unit F1 that performs the user interface processing for causing a plurality of fingers set as a fingerprint registration target to be simultaneously brought into contact with the operation area 5, the reading processing unit F2 that reads the fingerprints of the plurality of fingers in contact with the operation area 5, and the fingerprint registration processing unit F3 that performs the processing of registering the read fingerprint and the type (finger type) of the finger in association with each other for each of the plurality of fingers.

In this configuration, it is possible to register fingerprints of the plurality of fingers at a time by bringing the plurality of fingers into contact with the operation area 5.

Therefore, it is possible to reduce a procedure for registering fingerprints of the plurality of fingers, and it is possible to improve convenience. Furthermore, it is possible to shorten the time required for fingerprint registration of the plurality of fingers.

Note that the UI processing unit F1 performs the display processing so as to obtain the correspondence relationship between the finger type in contact with the operation area 5 and the read fingerprint, so that the type of the finger brought into contact with the operation area 5 can be specified in a case where the user in contact with the operation area 5 after the registration. Therefore, for example, the processing can be changed according to the type of the finger performing the operation.

Consequently, even with the same tap operation, it is possible to perform different processing depending on the type of finger, and thus, it is possible to properly use various operations without complicating the operation procedure, and it is possible to improve convenience.

As described with reference to Fig. 2 and the like, the UI processing unit F1 in the information processing apparatus 1 may perform, as the user interface processing, the display processing for prompting the first procedure (procedure C) of bringing only the ball portions of the plurality of fingers in contact with the operation area 5.

Therefore, since the screen-side contact area ArG is reduced, the processing of specifying the area with which the fingerprint portion is in contact from the contact area is unnecessary or simplified.

Consequently, the processing load on the information processing apparatus 1 can be reduced.

As described with reference to Fig. 2 and the like, the UI processing unit F1 in the information processing apparatus 1 may perform, as the user interface processing, the display processing for prompting the second procedure (procedure B) of sliding the contact area in the ball portion of the finger close to the center of the palm on the operation area 5 after the first procedure (procedure C).

In a case where only the ball portion of the finger is brought into contact with the operation area 5, the finger-side contact area ArD is an area narrower than the ball portion. Specifically, in the first procedure (procedure C), the tip portion (fingertip) continuing to the ball portion of the finger does not come into contact with the operation area 5. By prompting the second procedure (procedure B) of pursing the finger after the first procedure (procedure C), the tip portion of the finger is also in contact with the operation area 5, so that the fingerprint can be widely read.

Consequently, even if the finger-side contact area ArD deviates from that at the time of registration in the fingerprint matching after the fingerprint is registered, the possibility of normal matching can be increased.

As described with reference to Figs. 10 and 11 and the like, the UI processing unit F1 in the information processing apparatus 1 may perform display processing for prompting a procedure (procedure D) of sliding the ball portion of the thumb so that the angle formed by the index finger and the thumb increases between the first procedure (procedure C) and the second procedure (procedure B).

In a case where the ball portion of each finger is in contact with the operation area 5, only the outer side surface of the hand is in contact with the operation area 5 with respect to the thumb. Therefore, there is a possibility that only a fingerprint of a narrow area of the thumb is registered.

However, according to the present configuration, by sandwiching the procedure D of sliding only the thumb or only the thumb and the little finger toward the user side (front side) before shifting to the second procedure (procedure B) in which the finger is pursed after the first procedure (procedure C), the operation area 5 is also brought into contact with the center of the ball portion of the thumb, so that the fingerprint of the thumb can be suitably read.

Consequently, it is possible to increase the possibility that the fingerprint matching is appropriately performed in a case where the operation using the thumb is performed.

As described with reference to each of Figs. 5 to 8, the UI processing unit F1 in the information processing apparatus 1 may perform, as the user interface processing, processing for causing the entire hand including the ball portions and the palm of the plurality of fingers to be simultaneously brought into contact with the operation area 5.

Therefore, it is possible to make the finger-side contact area ArD larger than a case where only the ball portion of the finger is brought into contact with the operation area 5.

Consequently, the portion to be read in the fingerprint can be enlarged.

Furthermore, the posture of the hand when the user comes in contact with the operation area 5 for fingerprint registration can be kept substantially constant, and the fingerprint reading accuracy can be improved.

As described with reference to Figs. 19, 20, and the like, the information processing apparatus 1 may include the estimation processing unit F4 that estimates the size of the hand including the finger brought into contact with the operation area 5, and the UI processing unit F1 may change the display according to the size of the hand.

Therefore, the user can appropriately bring the palm or the ball of the finger into contact with the contact area according to the instruction, and the fingerprint reading accuracy can be improved.

As described with reference to each of Figs. 5 to 12, in the information processing apparatus 1, the plurality of fingers set as a fingerprint registration target may include at least five fingers of one of the right and left hands.

According to this configuration, it is possible to simultaneously read and register fingerprints of 5 fingers of one hand or 10 fingers of both hands.

Consequently, it is possible to shorten the work time and improve the work efficiency in the case of performing fingerprint registration for each finger.

As described with reference to each of Figs. 13 to 18, in the information processing apparatus 1, the plurality of fingers set as a fingerprint registration target may not include the thumb.

In a case where the user takes a posture in which the thumb and the other finger are simultaneously brought into contact with the operation area 5, only the side surface of the ball portion of the thumb is brought into contact with the operation area 5. Consequently, the fingerprint of the thumb cannot be suitably read.

According to this configuration, it is possible to reduce the possibility of incomplete fingerprint reading by bringing the plurality of fingers not including the thumb into contact with the operation area 5.

As described with reference to each of Figs. 13 to 18, the UI processing unit F1 in the information processing apparatus 1 may perform, as the user interface processing, the first user interface processing (Fig. 13, Fig. 14) for reading the fingerprints of the four fingers and the second user interface processing (Fig. 15, Fig. 16) for reading the fingerprints of only the thumbs.

According to this configuration, for example, fingerprint registration can be performed for four or eight fingers excluding the thumb, and subsequently fingerprint registration can be performed for each of the left and right thumbs or for two thumbs at the same time.

In particular, by separating the thumb from other fingers, it is possible to easily take a posture in which most of the ball portion of the thumb is brought into contact with the operation area 5, and it is possible to widely read the fingerprint of the thumb.

As described with reference to each of Figs. 22 to 25, the UI processing unit F1 in the information processing apparatus 1 may perform the user interface processing for causing the unreadable finger to be brought into contact with the operation area 5 in a case where at least a part of the plurality of fingers has not been normally read.

Therefore, the user is provided with an opportunity to register again the fingerprint that cannot be read. Consequently, the user can continue the operation until the fingerprint of the registration target finger is normally read.

As described with reference to Fig. 22 and the like, the UI processing unit F1 in the information processing apparatus 1 may perform the user interface processing for notifying the unreadable finger.

By performing the notification for causing the user to recognize the unreadable finger, the user can recognize the rereading target finger, and the fingerprint registration work efficiency can be improved.

As described with reference to each of Figs. 30 to 32, the information processing apparatus 1 may include the specification processing unit F5 that specifies the type of a finger on the basis of the fingerprint read by the fingerprint reading processing after the fingerprint registration and the registered information (fingerprint information), and the fingerprint registration processing unit F3 may acquire corresponding fingerprint information on the basis of the specified type of the finger and update the fingerprint information using the fingerprint read after the registration.

For example, a further part of the ball portion of the finger brought into contact with the operation area 5 at the time of registration is registered as the fingerprint information. Then, the fingerprint reading processing is appropriately performed in the operation after the registration. Then, in a case where information other than the registration information is included in the read fingerprint in the fingerprint reading processing after the registration, in other words, in a case where information about a peripheral area of the registered fingerprint is included, the registration information is updated, whereby the fingerprint having a larger area is registered.

Therefore, subsequent fingerprint matching can be easily performed, and the probability of occurrence of a matching error can be reduced.

As described with reference to each of Figs. 33 to 52, the information processing apparatus 1 may include the specification processing unit F5 that specifies the type of the finger on the basis of the fingerprint read by the fingerprint reading processing after the registration and the registered information, and the correspondence processing unit F6 that changes the contents of the corresponding processing according to the specified type (finger type) of the finger.

Therefore, after the fingerprint is registered, processing of specifying the type of the finger used for the operation from the fingerprint is executed. Then, by changing the processing according to the type of the finger used for the operation, the user can change the type of operation and the like only by changing the finger used for the operation.

Consequently, a more complicated operation can be performed with a simple operation, and convenience is improved.

As described with reference to each of Figs. 33 to 38, the specification processing unit F5 in the information processing apparatus 1 may specify the angle of the finger on the basis of the fingerprint read by the fingerprint reading processing after registration and the registered information, and the correspondence processing unit F6 may execute the processing of causing the display unit 3 to display the image for vertical orientation in a case where the angle of the finger belongs to the first range, and may execute the processing of causing the display unit 3 to display the image for horizontal orientation in a case where the angle of the finger belongs to the second range different from the first range.

Note that, when the upper side of the tablet terminal 1A used horizontally long so that the longitudinal direction is horizontal is set to 0 degrees, the first range is a range of 270 degrees to 360 degrees or a range of 90 degrees to 180 degrees for the left hand HL, and a range of 180 degrees to 270 degrees or a range of 0 degrees to 90 degrees for the right hand HR.

Furthermore, the first range is set to a range of 0 degrees to 90 degrees or a range of 180 degrees to 270 degrees for the left hand HL and a range of 270 degrees to 360 degrees or a range of 90 degrees to 180 degrees for the right hand HR when the upper side is set to 0 degrees in the smartphone 1B used in a vertically long manner so that the lateral direction is horizontal.

Furthermore, when the upper side of the tablet terminal 1A used horizontally long so that the longitudinal direction is horizontal is set to 0 degrees, the second range is set to a range of 0 degrees to 90 degrees or a range of 180 degrees to 270 degrees for the left hand HL and a range of 270 degrees to 360 degrees or a range of 90 degrees to 180 degrees for the right hand HR.

Furthermore, the second range is set to a range of 270 degrees to 360 degrees or a range of 90 degrees to 180 degrees for the left hand HL and a range of 180 degrees to 270 degrees or a range of 0 degrees to 90 degrees for the right hand HR when the upper side is set to 0 degrees in the smartphone 1B used in a vertically long manner so that the lateral direction is horizontal.

Therefore, the gripping mode of the information processing apparatus 1 can be specified according to whether the angle of the finger that operated belongs to the first range or the second range, and an image such as a screen can be displayed on the display unit 3 in an orientation suitable for the gripping mode.

Consequently, since the image is displayed in the optimum orientation without the user performing the ON/OFF operation of the screen rotation function or the manual screen rotation operation, the convenience can be improved.

As described with reference to Figs. 33 to 36 and Figs. 39 to 41, the specification processing unit F5 in the information processing apparatus 1 may specify the angle of the finger on the basis of the fingerprint read by the fingerprint reading processing after registration and the registered information (fingerprint information), and the correspondence processing unit F6 may set the orientation information in the captured image (for example, as metadata) on the basis of the angle of the finger.

In a case where the imaging target is at the feet or the like, since the orientation of the camera included in the information processing apparatus 1 is downward in the vertical direction, it is difficult to estimate the orientation of the captured image from the information of the IMU at the time of imaging or the like.

According to this configuration, for example, the imaging orientation of the user can be estimated by the orientation of the finger when the icon image used for the release operation is tapped, and the orientation of the captured image can be appropriately set.

As described with reference to Fig. 40 and the like, the specification processing unit F5 in the information processing apparatus 1 may execute the processing of specifying the angle of the finger after the processing of capturing the captured image.

In a case where the imaging processing is performed after the angle of the finger is specified, there is a possibility that the optimal imaging timing is missed.

However, according to the present configuration, since the angle of the finger is determined after the imaging processing is finished and the orientation information of the image is set to, for example, Exif information or the like of the captured image, the imaging timing can be prevented from being unnecessarily delayed.

As described with reference to each of Figs. 42 to 44, the specification processing unit F5 in the information processing apparatus 1 may specify whether the operation mode is the one-hand operation or the two-hand operation on the basis of the specified finger type, and the correspondence processing unit F6 may display an image on the right side of the display unit 3 in a case where the operation mode is specified as the one-hand operation using the right hand HR, and may display an image on the left side of the display unit 3 in a case where the operation mode is specified as the one-hand operation using the left hand HL. In the case of one-hand operation, the operation is often performed using the thumb. Then, in the case of one-hand operation using the thumb, it is difficult for the thumb of the right hand HR to reach the left area of the display unit 3, and it is difficult for the thumb of the left hand HL to reach the right area of the display unit 3. Furthermore, the thumb is less likely to reach the upper portion than the lower portion of the display unit 3.

According to this configuration, it is possible to specify whether the finger used for the operation in the case of the one-hand operation is the finger of the right hand HR or the finger of the left hand HL.

Consequently, the image to be displayed on the display unit 3 can be appropriately offset in one of the left and right directions, and the operability of the operation of coming into contact with the display unit 3 can be improved.

Furthermore, the operability may be further improved by not only moving the image to the left and right but also moving the image to the lower side.

As described with reference to each of Figs. 42 to 44, the specification processing unit F5 in the information processing apparatus 1 may specify the operation as one-hand operation in a case where the specified type of the finger is the thumb, and may specify the operation as two-hand operation in a case where the specified type of the finger is other than the thumb.

Therefore, one-hand operation and two-hand operation can be appropriately specified in a normal use mode. Consequently, it is possible to appropriately improve the operability at the time of the one-hand operation described above.

As described with reference to each of Figs. 45 to 48, the reading processing unit F2 in the information processing apparatus 1 may read the fingerprint of the finger used for the operation after registration, and in a case where the operation after registration is the activation operation of the specific application, the correspondence processing unit F6 may make the activation mode of the specific application different according to the specified type of the finger.

For example, as described above, when the mail application is activated, in a case where a tap operation is performed with the thumb, a mail screen when logging in with a private account is displayed, and in a case where an operation is performed with the index finger, a mail screen when logging in with a company account is displayed.

Furthermore, in a case where a plurality of accounts is operated in the same SNS, different accounts are allocated for each finger, whereby the SNS screen in a state of being logged in with different accounts according to the type of finger used for the tap operation of the SNS icon is displayed.

Therefore, the user can activate the application in a desired manner with a simple operation, and convenience is improved.

As described with reference to each of Figs. 49 to 52, the UI processing unit F1 in the information processing apparatus 1 may include the specification processing unit F5 that performs the user interface processing of setting the braille input area that is an area that receives contact of one or more fingers and is not divided corresponding to each point of the braille, and specifies the type of one or more fingers on the basis of fingerprints of one or more fingers read by the fingerprint reading processing after registration in the braille input area and the registered information; and the braille input analysis processing unit F7 that specifies a character input as braille according to the specified type of one or more fingers.

For example, in a case where six areas for braille input are separately set, and the type of the input braille is determined by determining the presence or absence of an operation on the area, an accurate operation on the area is required. However, it is difficult for people with visual disabilities to accurately operate individual areas.

According to this configuration, the braille input area, which is a common input area for each point, is provided instead of the area divided for each point of the braille. Then, the user changes the finger to be brought into contact with the braille input area according to the point desired to be input in the braille, thereby discriminating the type of finger and performing the braille input.

Consequently, since the accuracy of the operation of the braille input is unnecessary, the ease of the operation can be greatly improved, and the convenience of the user can be improved.

Furthermore, in the braille input mode, the screen-side contact area ArG with which the finger used for the braille input is in contact is different between the state of being placed on a desk and the state of being held with both hands, and thus, it is necessary to individually prepare an interface according to the input mode in the related art.

However, according to the present configuration, since the type of the finger brought into contact with the braille input area (for example, the entire operation area 5) is automatically determined in any input mode, there is no need to prepare an interface individually, and the processing load can be reduced. Moreover, even if a finger that is not used for input comes into contact with the braille input area during input, the finger is ignored, so that erroneous input can be prevented.

The UI processing unit F1 in the information processing apparatus 1 may perform user interface processing for giving a notification for prompting fingerprint registration in response to display switching between the image for vertical orientation and the image for horizontal orientation being performed twice or more within a predetermined time.

In a case where the rotation determination of the screen is performed only by the IMU, there is a possibility that the screen rotation is frequently performed only by the user changing the posture.

Therefore, in a case where such a plurality of times of screen rotation in a short time is detected, it is possible to provide an environment in which unnecessary screen rotation processing is avoided by notifying the user that there is a function of appropriately determining the viewing posture of the user by fingerprint registration.

Furthermore, in a case where the user accepts fingerprint registration, it is not necessary to perform unnecessary screen rotation processing, and it is possible to reduce the processing load of the information processing apparatus 1.

In an information processing method according to the present technology, the information processing apparatus 1 performs: user interface processing for simultaneously bringing a plurality of fingers set as a fingerprint registration target into contact with the operation area 5; processing of reading fingerprints of the plurality of fingers, which have been brought into contact with the operation area 5, respectively; and processing of, for each of the plurality of fingers, registering the read fingerprint and the type of the finger in association with each other.

A program according to the present technology causes the information processing apparatus 1 to execute: user interface processing for simultaneously bringing a plurality of fingers set as a fingerprint registration target into contact with the operation area 5; processing of reading fingerprints of the plurality of fingers, which have been brought into contact with the operation area 5, respectively; and processing of, for each of the plurality of fingers, registering the read fingerprint and the type of the finger in association with each other.

The above-described various actions and effects can be obtained by such a program and information processing method.

Note that such a program can be recorded in advance in an HDD as a recording medium built in equipment such as a computer apparatus, a ROM in a microcomputer including a CPU, and the like.

Alternatively, the program may be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program can be installed from the removable recording medium into a personal computer or the like, or can be downloaded from a download site through a network such as a local area network (LAN) or the Internet.

Note that the effects described in the present specification are merely examples and are not restrictive, and other effects may also be produced.

Furthermore, the above-described examples may be combined in any way, and the above-described various actions and effects may be obtained even in a case where various combinations are used.

### <7. Assignment of fingerprint>

After the fingerprint of each finger type is registered, by associating each function provided by the application with the finger type, it is possible to activate a different function only by changing the finger used for the operation.

Here, an example of a user interface for assigning each function and a fingerprint will be described.

The fingerprints assigned to the respective functions are left and right finger types. Furthermore, the function to which the fingerprint of each finger type is assigned includes not only an application-specific function but also a function common regardless of the application and provided by an operating system (OS) (an external function for the application). The function provided by the OS corresponds to, for example, a function of terminating an application, a function of deactivating an application and displaying a home screen, a function of switching to another application being activated or a favorite application, and the like.

### <7-1. First UI example of assignment processing>

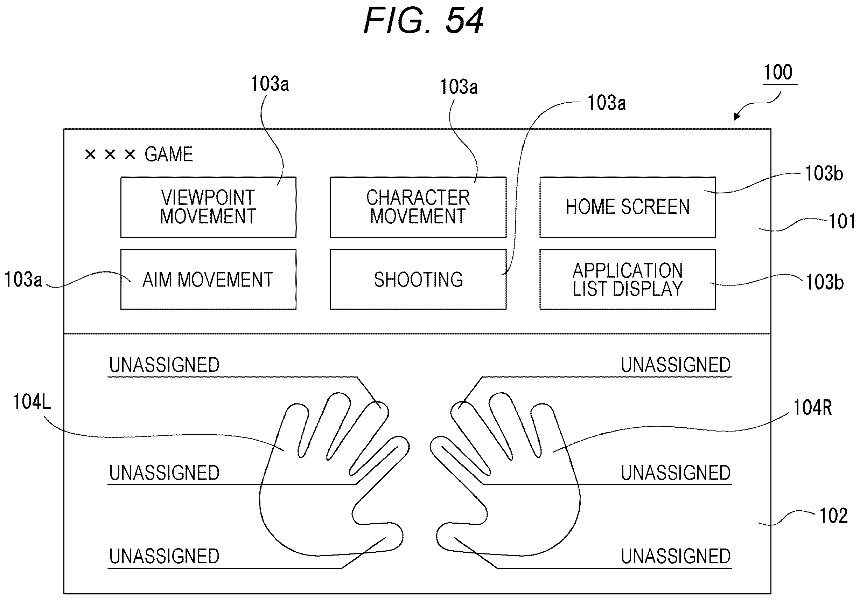

A first UI example of the assignment processing will be described with reference to Fig. 54. Note that Fig. 54 illustrates an assignment screen 100 that is a screen (image) displayed on the display unit 3 of the tablet terminal 1A.

The assignment screen 100 is provided with a functional area 101 and a hand image display area 102.

In the functional area 101, each function to which the fingerprint is assigned is visually recognizable, and a button operator 103 for associating the fingerprint and the function is disposed.

As illustrated in Fig. 54, the button operator 103 may include not only a button operator 103a for an application-specific function but also a button operator 103b for a function outside the application.

The hand image display area 102 is an area where the image of the hand for displaying the assignment result is displayed, and in the example of Fig. 54, a right hand image 104R imitating the right hand HR and a left hand image 104L imitating the left hand HL are displayed.

In the hand image display area 102, the relationship between the finger type and the function to which the finger type is assigned can be visually recognized. Note that the example illustrated in Fig. 54 illustrates a state in which each finger type is not assigned. Furthermore, six types of fingers that can be assigned are the thumb, the index finger, and the middle finger of both hands. Note that this is an example, and all the 10 fingers may be assigned, or only the thumb and the index finger may be assigned.

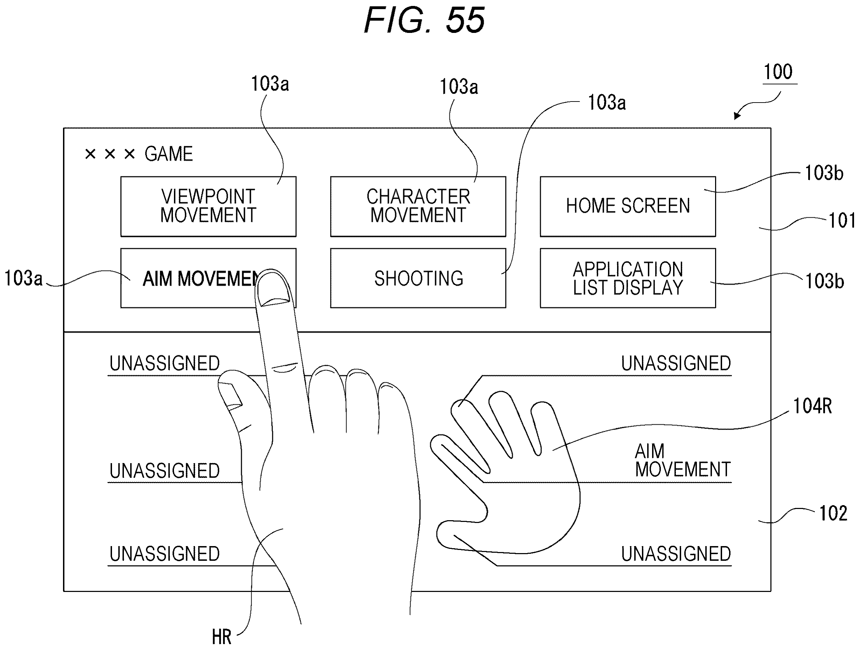

The assignment operation is an association operation of associating a fingerprint with a function on the basis of fingerprint information. The assignment operation will be described. For example, when the button operator 103 described as "aim movement" is pressed with the index finger of the right hand HR in the state illustrated in Fig. 54, the tablet terminal 1A specifies that the finger type used for the operation is the index finger of the right hand HR from the reading result of the fingerprint, and the index finger of the right hand HR is assigned to the aim movement function (see Fig. 55).

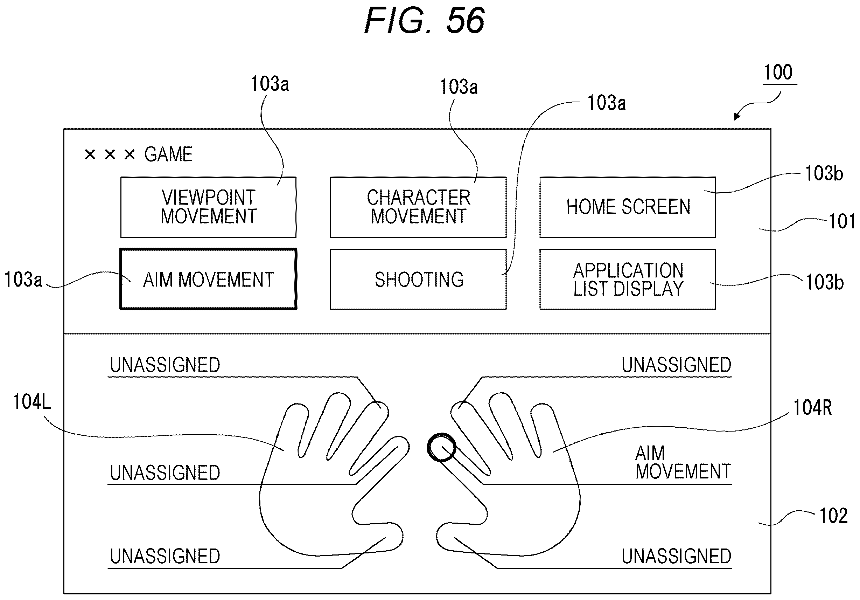

Note that, in order to indicate that the assignment processing based on the operation is completed, as illustrated in Fig. 56, the button operator 103 (in the example, the operator described as "aim movement") and the assigned finger type (in the example, the index finger of the right hand HR) for the function targeted for the assignment processing may be highlighted.

As the highlight display, animation display in which the button operator 103a moves to the image portion of the fingertip of the finger type to be assigned in the right hand image 104R or the left hand image 104L may be performed. At this time, the original button operator 103a may remain displayed during animation display of the button operator 103a, or may be hidden to give an impression that the original button operator 103a has moved.

The highlight display ends when a predetermined condition is satisfied, for example, a lapse of a predetermined time, execution of the next assignment operation, a tap operation on an area excluded from the target of the assignment operation, or the like.

Note that, in addition to the highlight display for the assignment operation, the button operator 103a for the assigned function may be highlighted to be displayed separately from the button operator 103a for the unassigned function.

As a mode of the highlight display, for example, various modes such as a mode of surrounding with a colored thick line and a mode of blinking display can be considered.

The assignment operation by the user may be, for example, only a tap operation on the button operator 103. That is, even if another operation such as an operation of swiping the button operator 103 is performed, the finger type is not assigned to the function.

Therefore, it is possible to reduce the possibility of performing the assignment operation by mistake.

Furthermore, since the swipe operation or the like is more likely to fail in reading the fingerprint than the tap operation, it is possible to avoid occurrence of an event in which reading of the fingerprint cannot be normally performed in the assignment operation of the user by configuring not to accept the swipe operation or the like as the assignment operation in the first place.

Note that, in the assignment operation, the time for bringing the fingertip into contact with the operation area 5 can be shortened as compared with the operation at the time of fingerprint registration described above. This is because, while the fingerprint imaging processing is carefully performed (for example, many images are captured) to store clear fingerprint information in the storage unit 79 at the time of fingerprint registration, the fingerprint reading processing in the assignment operation is sufficient as long as the fingerprint matching processing can be performed, and the reading time can be shortened.

A similar thing applies to the use of the fingerprint information described above in each example.

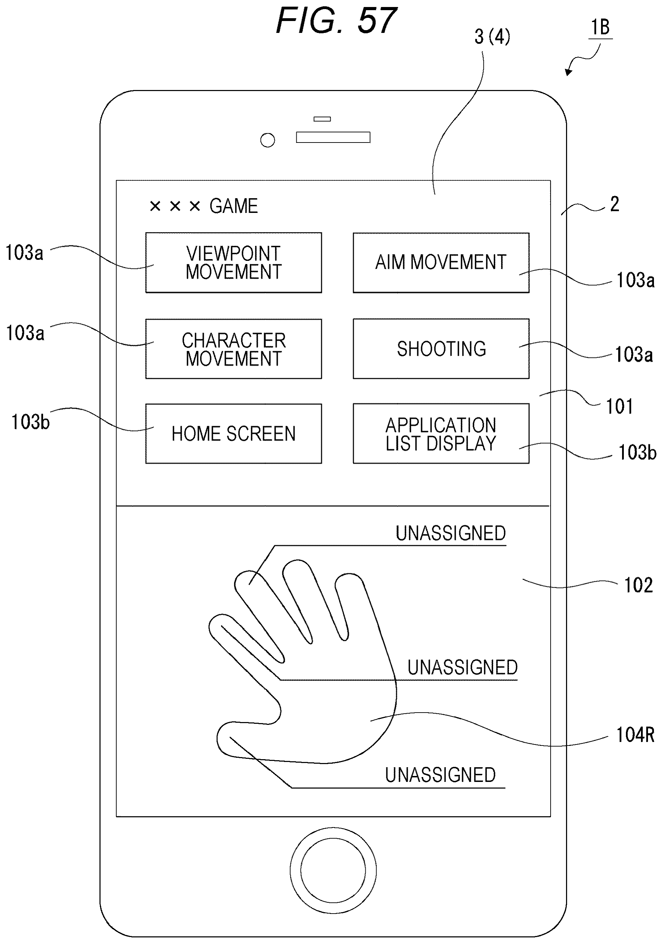

Fig. 54 and the like illustrate an example in which both the right hand image 104R and the left hand image 104L are displayed in the hand image display area 102, but only one of the right hand image 104R and the left hand image 104L may be displayed depending on the size of the display unit 3 (see Fig. 57).

For example, in the display unit 3 of the smartphone 1B, as illustrated in Fig. 57, the right hand image 104R and the left hand image 104L are alternately displayed in a time division manner.

Then, in a case where the assignment operation is performed, if the assigned finger type is of the right hand HR, the right hand image 104R is displayed in the hand image display area 102, and if the assigned finger type is of the left hand HL, the left hand image 104L is displayed in the hand image display area 102.

Note that the CPU 71 of the information processing apparatus 1 may acquire information on the size (or resolution) of the display unit 3 from the storage unit 79 or the like, and select one of a mode of displaying images of both hands illustrated in Fig. 54 and a mode of displaying an image of one hand illustrated in Fig. 57 according to the size of the display unit 3.

Note that, in the assignment operation, an assignment operation for a function or fingerprint already assigned may be performed.

For example, in a case where the assignment operation is performed using a fingerprint (finger type) different from the fingerprint already assigned to the assigned function, the user may be notified that the finger type to be assigned has been changed, or the user may be notified that there is an already assigned finger type. In a case where the user is notified that there is an already assigned finger type, a display for allowing the user to select whether or not to change the assigned finger type may be further performed.

Furthermore, in the state illustrated in Fig. 56, by performing a tap operation on the image portion of the index finger of the right hand HR with a different finger type, the assignment processing may be performed so as to transfer the function assigned to the index finger of the right hand HR to the new finger type tapped. Moreover, in a case where another function is assigned to the finger type that has newly performed the tap operation, the assignment processing may be performed such that the assigned function is exchanged. Alternatively, the assignment processing may be performed such that the same function is assigned to both the already assigned finger and the finger type for which the tap operation is newly performed.

Furthermore, in a case where a drag operation is performed with a portion indicating the function assigned to the index finger of the right hand HR in Fig. 56 (a character portion of "aim movement" drawn from the image of the index finger of the right hand HR in Fig. 56) as a start point and an unassigned character display portion drawn from another finger as an end point, the assignment processing may be performed so as to change the finger type to which the function of aim movement is assigned or increase the finger type to which the function of aim movement is assigned.

Note that the content of the assignment processing may be different between the assignment operation for the functional area 101 and the assignment operation for the hand image display area 102.

For example, in the assignment operation for the functional area 101, the function is only assigned to the finger type for which the new assignment operation has been performed without performing the assignment processing for the already assigned finger type. On the other hand, in the assignment operation for the hand image display area 102, an operation of changing the assigned finger type is possible. Furthermore, even in the assignment operation for the same hand image display area 102, the content of the assignment processing may be changed between the image portion of the fingertip and the character portion drawn therefrom.

Furthermore, a plurality of types of assignment operations may be provided, and various types of assignment operations such as a tap operation, a drag operation, a double tap operation, a triple tap operation, and a long tap operation can be considered. Then, the content of the assignment processing may be changed according to the operation type.

For example, in a case where a long tap operation is performed, a selection window for allowing the user to select which assignment processing is to be performed may be displayed.

Note that, in a case where the assignment operation is performed again in the same combination as the combination of the assigned function and the finger type, a display notifying that the assignment has already been performed may be performed to the user. Therefore, the user can recognize that the assignment operation is invalid and perform the intended assignment operation again.

By performing an operation different from the assignment operation on the button operator 103a, the finger type to which the function to be associated with the button operator 103a to be operated is assigned may be highlighted, or the function description of the function may be displayed.

The operation different from the assignment operation is, for example, a long tap operation in a case where the assignment operation is a tap operation.

### <7-2. Second UI example of assignment processing>

A second UI example is, for example, a UI example in the smartphone 1B including the small display unit 3.

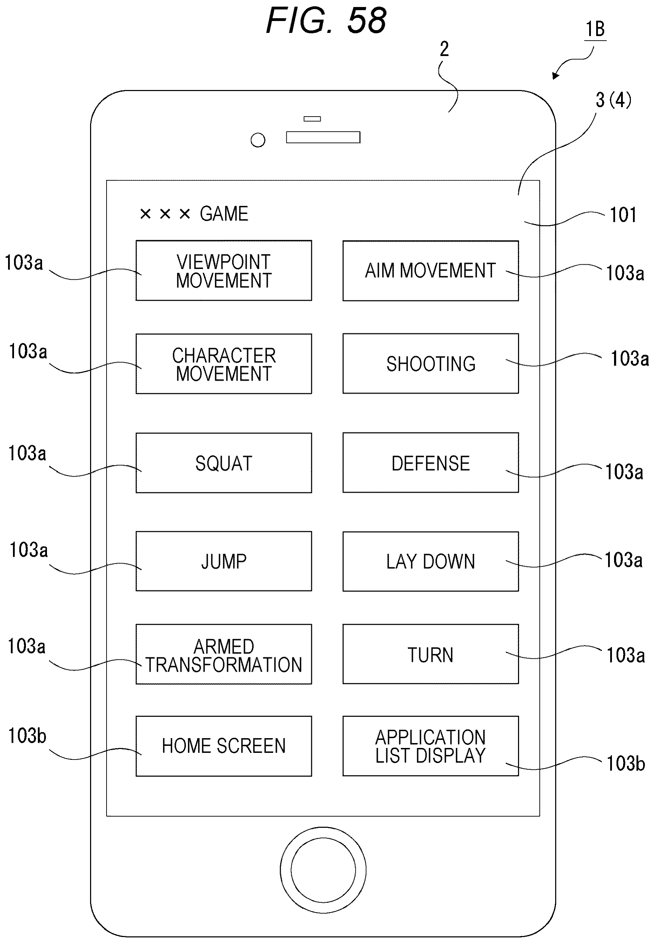

For example, the assignment screen 100 includes only the functional area 101 in which the button operator 103 is disposed (see Fig. 58).

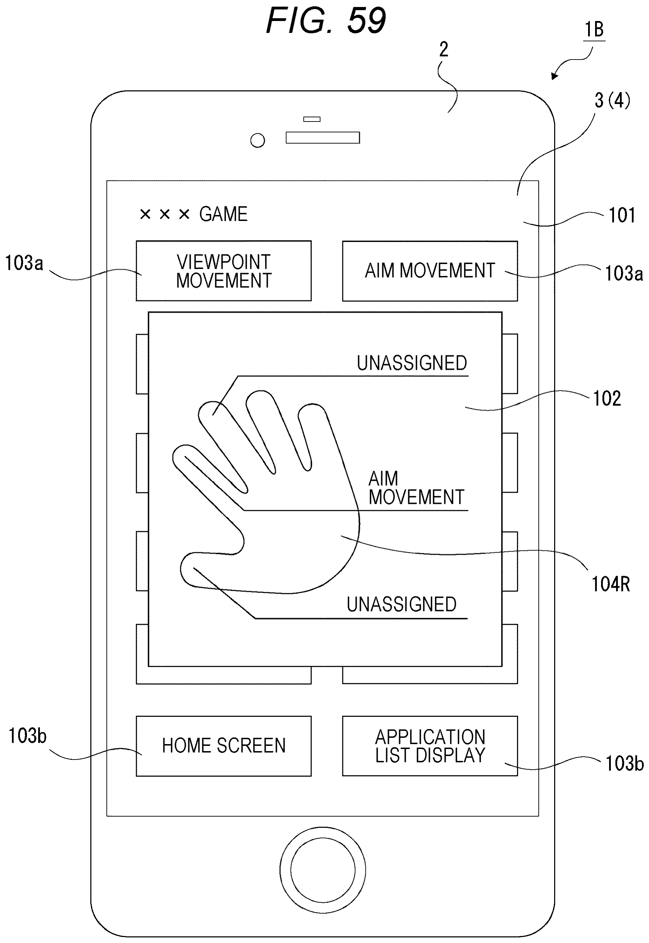

Then, when the user performs a tap operation on the button operator 103 or the like, the hand image display area 102 is superimposed and displayed on the functional area 101 as illustrated in Fig. 59. Fig. 59 illustrates that the right hand image 104R is superimposed and displayed in the hand image display area 102, and the index finger is assigned to the aim movement function by the current assignment processing.

As the hand image display area 102 is appropriately superimposed and displayed in this manner, it is possible to perform effective information presentation even with the small display unit 3.

### <7-3. Modification of UI example of assignment processing>

In the example described above, an example of associating the finger type used for the assignment operation and the function has been described. Not limited to this, for example, by performing an operation of dragging the button operator 103 disposed in the functional area 101 illustrated in Fig. 54 to any finger of the right hand image 104R or the left hand image 104L disposed in the hand image display area 102, the finger type and the function may be assigned regardless of the finger type used for the operation.

Therefore, in the assignment operation, it is not necessary to consider the finger type used for the operation.

Note that the drag operation as the assignment operation may be an operation of dragging a finger area in the image of the hand to the button operator 103.

### <7-4. Processing flow related to assignment processing>

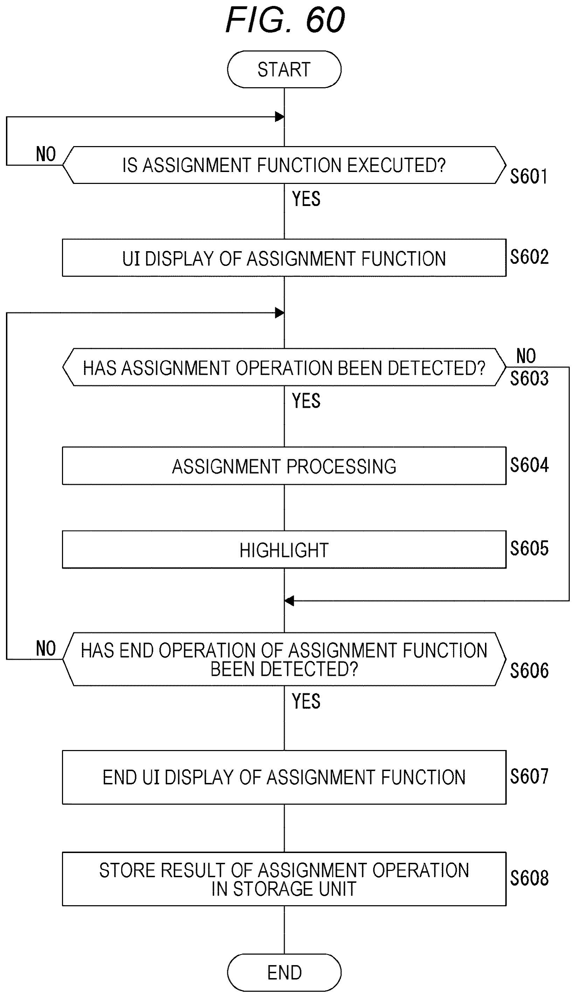

Fig. 60 illustrates an example of the assignment processing executed by the CPU 71.

In step S601, the CPU 71 determines whether or not a condition for executing the assignment function has been satisfied.

For example, in response to a menu operation or the like for assigning a fingerprint to a function, the CPU 71 makes a YES determination in step S601.

In a case where the assignment function is not executed, the CPU 71 repeats the processing of step S601.

On the other hand, in a case where it is determined that the assignment function is executed, the CPU 71 displays the UI of the assignment function, specifically, the assignment screen 100 illustrated in Fig. 54, Fig. 57, Fig. 58, or the like on the display unit 3 in step S602.

Note that when step S602 is executed, information indicating the size of the display unit 3 may be acquired, and a UI to be displayed as the assignment function may be selected on the basis of the acquired information.

In step S603, the CPU 71 determines whether or not an assignment operation has been detected. As described above, the assignment operation is an operation of tapping the button operator 103 for the function to be assigned with the finger type to be assigned, an operation of dragging the button operator 103 to the right hand image 104R, or the like.

In a case where it is determined that the assignment operation has been detected, the CPU 71 performs both processing of step S604 and step S605.

On the other hand, in a case where it is determined that the assignment operation has not been detected, the CPU 71 proceeds to step S606 without performing both the processing.

In step S604, the CPU 71 performs assignment processing according to the user operation. Specifically, the fingerprint is associated with the function targeted for the assignment operation so that a specific function expresses according to the operation using a specific finger type.

In step S605, the CPU 71 highlights the function or the finger type targeted for the assignment operation. Note that execution of the processing of step S605 is not essential.

In step S606, the CPU 71 determines whether or not an end operation of the assignment function has been detected. The end operation of the assignment function is, for example, a case where a result of the assignment operation is applied to end the assignment function.

In a case where it is determined that the end operation of the assignment function has been detected, the CPU 71 ends the UI display of the assignment function in step S607, and stores the result of the assignment operation in the storage unit 79 or the like in step S608.

Furthermore, in a case where it is determined that the end operation of the assignment function has not been detected, the CPU 71 returns to the processing of step S603 again.

Note that, as the end operation of the assignment function, an operation to end without reflecting the result of the assignment operation, such as pressing of a cancel button, may be performed.

In this case, the CPU 71 ends the series of processing illustrated in Fig. 60 without performing the processing of step S608.

### <7-5. Mode of assignment screen>

Some examples of the display mode of the assignment screen 100 will be described.

### <7-5-1. First example of assignment screen>

In the first example of the display mode of the assignment screen 100, the assignment screen 100 is displayed from the setting screen provided by the OS installed in the tablet terminal 1A or the smartphone 1B.

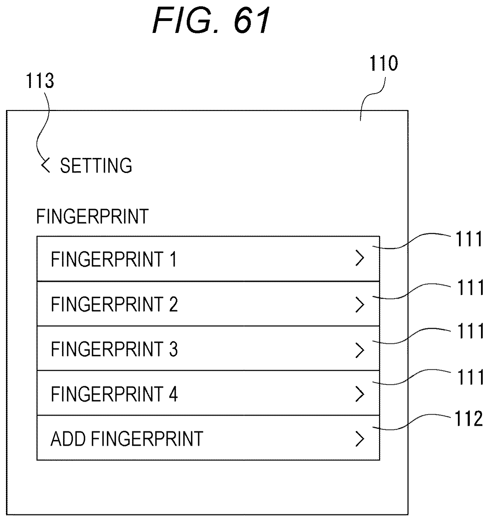

When a predetermined item on the setting screen is tapped, for example, a fingerprint setting screen 110 (see Fig. 61) is displayed on the display unit 3 of the tablet terminal 1A.

On the fingerprint setting screen 110, a fingerprint setting menu 111 including "fingerprint 1", "fingerprint 2", "fingerprint 3" and the like, and a fingerprint addition menu 112 for newly adding a fingerprint are disposed.

The fingerprint setting menu 111 is, for example, an item for setting a fingerprint for each user who uses the tablet terminal 1A. For example, "fingerprint 1" is an item for assigning a fingerprint of a father, and "fingerprint 2" is an item for assigning a fingerprint of a mother.

Furthermore, a return button 113 for returning to the previous screen is disposed at the upper part of the fingerprint setting screen 110.

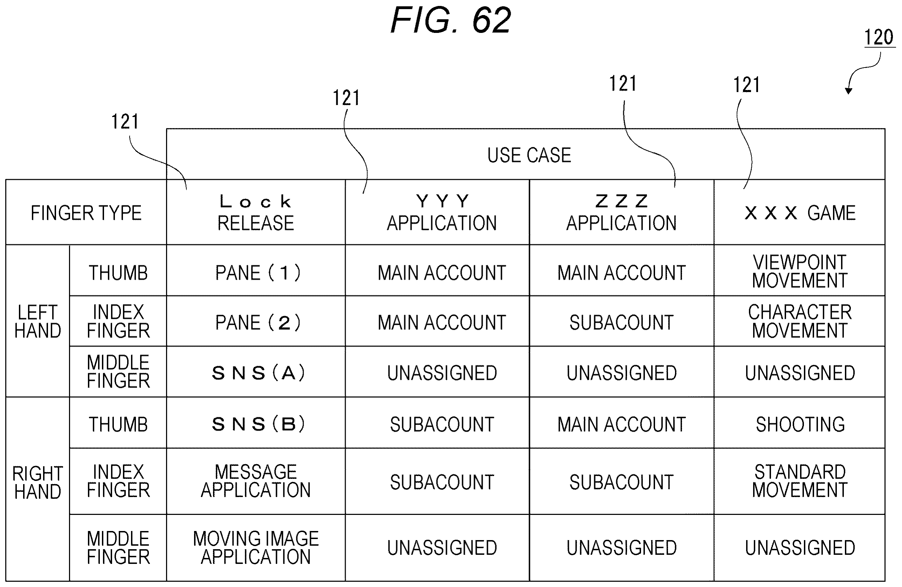

When the user presses any one of the fingerprint setting menu 111, an assignment list screen 120 (see Fig. 62) is displayed on the display unit 3.

The assignment list screen 120 is, for example, a tabular screen, and the correspondence relationship between the finger type that can be assigned and the assigned function for each use case can be seen at a glance.

Furthermore, on the assignment list screen 120, a user name or the like targeted for the fingerprint assignment processing may be displayed.

Note that, in the present example, a total of six finger types are to be assigned: three of the thumb, index finger, and middle finger of the left hand HL, and three of the thumb, index finger, and middle finger of the right hand HR.

However, the present invention is not limited thereto, and 10 left and right finger types may be assigned to each function, or only four finger types of the thumb and the index finger may be assigned.

Furthermore, the finger type that can be assigned may be different for each use case.

In the tablet terminal 1A in this example, fingerprint authentication can be used for unlocking, and the screen displayed after the unlocking is different according to the finger type used for the unlocking operation.

For example, in a case where the operation to unlock the tablet terminal 1A is performed using the thumb of the left hand HL, a pane having a name of "pane (1)" is displayed from a plurality of panes provided as a screen after being unlocked.

Furthermore, in a case where the unlock operation of the tablet terminal 1A is performed using the index finger of the left hand HL, a pane having a name of "pane (2)" is displayed as a screen after the unlock.

That is, a different pane can be displayed only by changing the finger type used for unlocking.

Furthermore, in a case where the unlock operation is performed using the middle finger of the left hand HL, the SNS of "A" which is a specific application is activated as the screen after the unlock.

Then, in a case where the unlock operation is performed using the middle finger of the right hand HR, an arbitrary application can be activated only by changing the finger type used for the unlock operation, for example, a moving image application is displayed in an activated state.

On the assignment list screen 120, a plurality of use cases is arranged side by side. Individual use cases such as "Lock release", "YYY application", "ZZZ application", and "XXX game" are provided as an operator 121 for transitioning to the assignment screen 100, and the user can perform a tap operation on each item name.

When the user operates the operator 121 displayed as "XXX game", for example, the assignment screen 100 illustrated in Fig. 54, Fig. 57, Fig. 58, or the like described above is displayed on the display unit 3.

### <7-5-2. Second example of assignment screen>

In the second example of the display mode of the assignment screen 100, the fingerprint assignment screen 100 for the application is displayed during activation of the application.

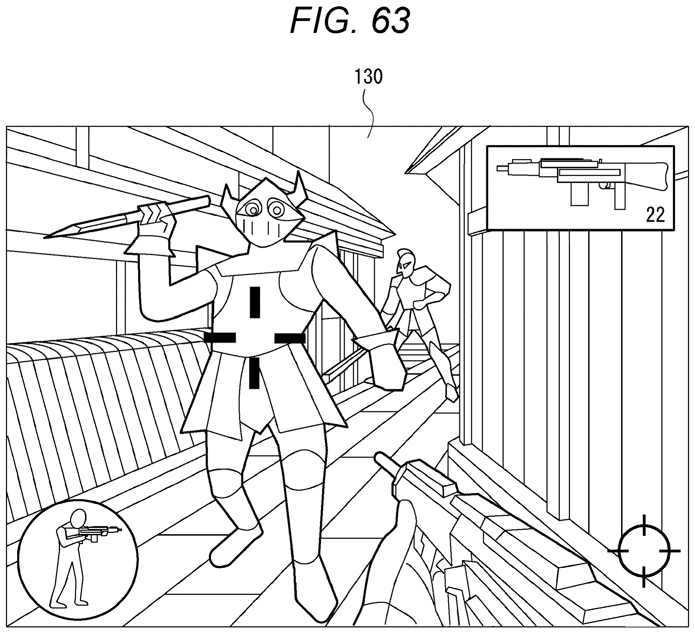

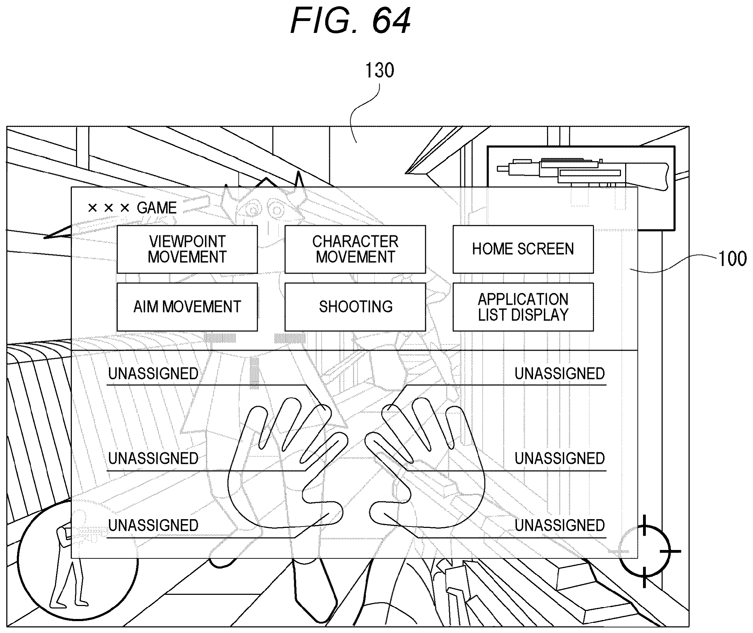

For example, Fig. 63 is a game screen 130 on which "XXX game" is being played. In this state, when an operation for assigning a fingerprint, for example, a setting change operation is performed, as illustrated in Fig. 64, the assignment screen 100 (for example, refer to Fig. 54) is superimposed and displayed on the game screen 130.

At this time, as illustrated in Fig. 64, the assignment screen 100 may be displayed in a translucent manner so that the game screen 130 may be faintly visible.

For example, by displaying the right hand image 104R and the left hand image 104L disposed on the assignment screen 100 in a translucent manner, it is possible to perform the fingerprint assignment operation while grasping the game situation.

Note that, although the button operator 103 is opaque in Fig. 64, the button operator 103 may also be displayed translucently.

The display mode of the assignment screen 100 is applicable not only to the game application but also to other applications such as an SNS and a moving image.

### <7-6. Activation of function based on assignment>

During the activation of the application, the CPU 71 specifies the finger type used for the operation, and realizes the function associated with the finger type on the basis of the result of the assignment processing.

However, even during the activation of the application, there is a possibility of conflict with an external function such as a function (OS function) provided by the OS, such as a swipe operation of lowering the notification bar to display the notification list, an operation of displaying the home screen, or an operation of switching to another application.

For example, in a case where the swipe operation is performed using the finger type assigned to a viewpoint moving function near the notification bar, a mode of displaying the details of the notification bar and a mode of activating the viewpoint moving function on the game screen 130 can be considered.

For example, the OS function may be basically prioritized.

Furthermore, in a case where the finger type not assigned to the viewpoint moving function is used, the OS function may be prioritized, and only in a case where the finger type assigned to the viewpoint moving function is used, the OS function may not be activated and the viewpoint moving function may be activated.

Furthermore, the OS function may be activated only in a case where an operation is performed using, for example, a little finger that is not used for the operation of the application, and the OS function may not be activated in a case where another finger type is used.

Furthermore, in the operation of the application, there may be a series of operations that can be easily operated by the user. For example, in the case of a game application, the shooting operation is performed immediately after the viewpoint movement operation is performed.

Such a series of operations may be determined to be a series of operations, and only during that time, the function in the application may be activated with priority over the OS function.

### <8. Second summary>

As described above, the information processing apparatus 1 such as the tablet terminal 1A and the smartphone 1B according to the present technology includes the UI processing unit F1 that performs the user interface processing for performing the association operation that associates the type of a finger (finger type) with the function to be executed (external function such as the application-specific function or the OS function), the reading processing unit F2 that detects the association operation with respect to the operation area 5 and reads the fingerprint of the finger used for the association operation, the specification processing unit F5 that specifies the type of the finger used for the association operation on the basis of the read fingerprint and the registered fingerprint information, and the association processing unit F8 that associates the specified type of the finger with the function selected in the association operation.

Therefore, in a case where the function to be activated can be changed according to the type of the finger, the correspondence relationship between the function and the type of the finger can be determined as intended by the user.

Consequently, the usability of the function can be improved for the user, and the convenience can be improved.

As described with reference to each of Figs. 54 to 59, the UI processing unit F1 in the information processing apparatus 1 may perform processing of displaying the button operator 103 (103a, 103b) for each function as the user interface processing, and the association processing unit F8 may associate the type of finger used for the association operation for selecting the button operator 103 with the function of associating with the button operator 103.

The user can associate a finger with a function only by tapping the button operator 103 with an arbitrary finger.

Consequently, the association operation can be performed with a simple operation, and the convenience can be improved.

As described with reference to Fig. 56 and the like, the UI processing unit F1 in the information processing apparatus 1 may perform processing of displaying the image of the hand (the right hand image 104R or the left hand image 104L) in which the type of the finger can be identified, and in a case where the type of the finger is associated with the function, display of emphasizing the type of the finger associated using the image of the hand may be performed.

Therefore, the user can confirm whether the intended association has been made. Consequently, the function can be expressed as intended by the user.

As described with reference to Figs. 54, 57, and the like, the UI processing unit F1 in the information processing apparatus 1 may determine which one of the image of one hand (either the right hand image 104R or the left hand image 104L) and the image of both hands (both the right hand image 104R and the left hand image 104L) is to be displayed as the image of the hand on the basis of the size of the display unit 3.

Therefore, the image of the hand is displayed in an appropriate size according to the size of the display unit 3. Consequently, an easily viewable image of the hand is presented to the user, the user can easily grasp the type of the finger actually associated according to the association operation, and the work efficiency can be improved.

As described with reference to Figs. 58 and 59 and the like, the UI processing unit F1 in the information processing apparatus 1 may display the image of the hand for a predetermined time from the timing when the type of the finger is associated with the function, and may hide the other time.

By displaying the image of the hand only at the time of association, the appeal of the association result can be enhanced. Consequently, it is possible to prevent overlooking of the association result and improve the work efficiency.

As described with reference to Figs. 54, 61, 62, and the like, the UI processing unit F1 in the information processing apparatus 1 may perform processing of displaying, in a list, results of finger type association with respect to functions for each use case, and may perform user interface processing for a use case selected in a case where one of the use cases is selected.

By displaying a list of association results for each use case, the user can quickly grasp unregistered functions and types of fingers.

Consequently, unnecessary association operation can be prevented, and work efficiency can be improved.

As described with reference to Figs. 63, 64, and the like, the UI processing unit F1 in the information processing apparatus 1 may perform the user interface processing in a case where the setting change operation prepared in the application being activated is performed.

For example, in a case where a setting icon is operated in each application such as a game application, a setting operator for associating a function with each type of finger is provided in a menu item.

Then, when the user operates the setting operator, a user interface (for example, the assignment screen 100) for associating the type of finger with the function is superimposed and displayed on the game screen 130 or the like.

Consequently, the user can perform the association operation without terminating the application, and convenience is improved.

As described with reference to Fig. 64 and the like, the UI processing unit F1 in the information processing apparatus 1 may perform processing of displaying the image of the hand that can identify the type of the finger in a translucent manner.

In a case where the assignment screen 100 is superimposed on the application screen (for example, the game screen 130), the application screen is made visible on the background, so that the association operation can be performed while grasping the status of the application.

As described with reference to Fig. 54 and the like, in a case where the finger type is associated with the function provided by a specific application, the association processing unit F8 in the information processing apparatus 1 may set the function to be associated with at least some of the finger types to be an external function (for example, an OS function) other than the function provided by the specific application.

Therefore, for example, the finger type can be assigned to some functions provided by the OS.

Consequently, for example, in a case where the user places importance on the SNS or mail function, even when a specific application such as a game is being executed, it is possible to activate the function of posting to the SNS or the function of browsing email by a simple operation using a specific finger.

Consequently, usability for a specific application can be improved.

The information processing apparatus 1 includes the correspondence processing unit F6 that executes a function associated with the type of the finger specified by the specification processing unit F5 on the basis of the fingerprint read after association and the fingerprint information registered, and the correspondence processing unit F6 may not execute the external function in a case where the type of the finger specified by the specification processing unit F5 during activation of the specific application is other than the type of the finger associated with the external function.

For example, even when a specific application is being executed, some operations for activating some functions provided by the OS can be executed. For example, an operation of switching to a mode for executing a specific application in the background and displaying the home screen, an operation such as processing of displaying details of the notification bar, and the like correspond to the external functions.

According to the present configuration, by associating a specific finger with such an operation, an external function is not executed even if an operation is performed using other fingers.

Therefore, it is possible to prevent screen switching and the like not intended by the user from occurring, and it is possible to provide a good operation environment suitable for the application.

In an information processing method according to the present technology, the information processing apparatus 1 performs: user interface processing for performing an association operation of associating a type of a finger with a function to be executed; processing of detecting the association operation for the operation area 5 and reading a fingerprint of the finger used for the association operation; processing of specifying the type of the finger used for the association operation on the basis of the read fingerprint and registered fingerprint information; and processing of associating the specified type of the finger with the function selected in the association operation.

A program according to the present technology causes the information processing apparatus 1 to execute: user interface processing for performing an association operation of associating a type of a finger with a function to be executed; processing of detecting the association operation for the operation area 5 and reading a fingerprint of the finger used for the association operation; processing of specifying the type of the finger used for the association operation on the basis of the read fingerprint and registered fingerprint information; and processing of associating the specified type of the finger with the function selected in the association operation.

The above-described various actions and effects can be obtained by such a program and information processing method.

Note that such a program can be recorded in advance in an HDD as a recording medium built in equipment such as a computer apparatus, a ROM in a microcomputer including a CPU, and the like.

Alternatively, the program can be temporarily or permanently stored (recorded) in a removable recording medium such as a flexible disk, a CD-ROM, an MO disk, a DVD, a Blu-ray (registered trademark) disk, a magnetic disk, a semiconductor memory, or a memory card. Such a removable recording medium can be provided as so-called package software.

Furthermore, such a program can be installed from the removable recording medium into a personal computer or the like, or can be downloaded from a download site via a network such as a LAN or the Internet.

Note that the effects described in the present specification are merely examples and are not restrictive, and other effects may also be produced.

Furthermore, the above-described examples may be combined in any way, and the above-described various actions and effects may be obtained even in a case where various combinations are used.

### <9. Part 1 of present technology>

The present technology can also adopt the following configurations.
(1) An information processing apparatus including:
   a UI processing unit that performs user interface processing for simultaneously bringing a plurality of fingers set as a fingerprint registration target into contact with an operation area;
   a reading processing unit that reads each of fingerprints of the plurality of fingers brought into contact with the operation area; and
   a fingerprint registration processing unit that performs, for each of the plurality of fingers, processing of making a registration of the read fingerprint and a type of the finger in association with each other.
(2) The information processing apparatus according to (1) described above, in which
   the UI processing unit performs, as the user interface processing, display processing for prompting a first procedure of bringing only ball portions of the plurality of fingers into contact with the operation area.
(3) The information processing apparatus according to (2) described above, in which
   the UI processing unit performs, as the user interface processing, display processing for prompting a second procedure of sliding a contact area in the ball portions on the operation area so as to approach a center of a palm after the first procedure.
(4) The information processing apparatus according to (3) described above, in which
   the UI processing unit performs display processing for prompting a procedure of sliding the ball portion of a thumb so that an angle formed by an index finger and the thumb becomes large between the first procedure and the second procedure.
(5) The information processing apparatus according to (2) described above, in which
   the UI processing unit performs, as the user interface processing, processing for simultaneously bringing an entire hand including the ball portions of the plurality of fingers and a palm into contact with the operation area.
(6) The information processing apparatus according to any one of (1) described above to (5) described above, further including
   an estimation processing unit that estimates a size of a hand including the fingers brought into contact with the operation area,
   in which the UI processing unit changes display according to the size of the hand.
(7) The information processing apparatus according to any one of (1) to (6), in which
   the plurality of fingers includes at least five fingers of one of right and left hands.
(8) The information processing apparatus according to any one of (1) described above to (6) described above, in which
   the plurality of fingers does not include a thumb.
(9) The information processing apparatus according to (8) described above, in which
   the UI processing unit performs, as the user interface processing, first user interface processing for reading fingerprints of four fingers other than the thumb and second user interface processing for reading a fingerprint of only the thumb.
(10) The information processing apparatus according to any one of (1) described above to (9) described above, in which
   in a case where at least some of the plurality of fingers cannot be normally read, the UI processing unit performs user interface processing for bringing the fingers that cannot be read into contact with an operation area.
(11) The information processing apparatus according to (10), in which
   the UI processing unit performs user interface processing for providing notification of the fingers that cannot be read.
(12) The information processing apparatus according to any one of (1) described above to (11) described above, further including
   a specification processing unit that specifies a type of the finger on the basis of a fingerprint read by fingerprint reading processing after the registration and information of which the registration is made,
   in which the fingerprint registration processing unit acquires corresponding fingerprint information on the basis of the specified type of the finger and updates the fingerprint information using the fingerprint read after the registration.
(13) The information processing apparatus according to any one of (1) described above to (12) described above, further including:
   a specification processing unit that specifies a type of the finger on the basis of a fingerprint read by fingerprint reading processing after the registration and information of which the registration is made; and
   a correspondence processing unit that changes contents of corresponding processing according to the specified type of the finger.
(14) The information processing apparatus according to (13) described above, in which
   the specification processing unit specifies an angle of the finger on the basis of the fingerprint read by fingerprint reading processing after the registration and the information of which the registration is made; and
   the correspondence processing unit executes processing of causing a display unit to display an image for vertical orientation in a case where the angle of the finger belongs to a first range, and executes processing of causing the display unit to display an image for horizontal orientation in a case where the angle of the finger belongs to a second range different from the first range.
(15) The information processing apparatus according to (13) described above, in which
   the specification processing unit specifies an angle of the finger on the basis of the fingerprint read by fingerprint reading processing after the registration and the information of which the registration is made, and
   the correspondence processing unit sets orientation information to a captured image on the basis of the angle of the finger.
(16) The information processing apparatus according to (15) described above, in which
   the specification processing unit executes processing of specifying the angle of the finger after processing of capturing the captured image.
(17) The information processing apparatus according to (13) described above, in which
   the specification processing unit specifies whether an operation mode is one-hand operation or two-hand operation on the basis of the specified type of the finger, and
   the correspondence processing unit displays an image on a right side of a display unit in a case where the operation mode is specified as the one-hand operation using a right hand, and displays an image on a left side of the display unit in a case where the operation mode is specified as the one-hand operation using a left hand.
(18) The information processing apparatus according to (17) described above, in which
   the specification processing unit specifies one-hand operation in a case where the specified type of the finger is a thumb, and specifies two-hand operation in a case where the specified type of the finger is other than the thumb.
(19) The information processing apparatus according to (13) described above, in which
   the reading processing unit reads a fingerprint of a finger used for an operation after the registration, and
   in a case where the operation after the registration is an activation operation of a specific application, the correspondence processing unit makes an activation mode of the specific application different according to the specified type of the finger.
(20) The information processing apparatus according to any one of (1) described above to (19) described above, in which
   the UI processing unit performs user interface processing of setting a braille input area that is an area that receives contact of one or a plurality of fingers and is not divided to correspond to each point of braille, and
   the information processing apparatus further includes:
      a specification processing unit that specifies types of the one or plurality of fingers on the basis of fingerprints of the one or plurality of fingers read by fingerprint reading processing after the registration in the braille input area and information of which the registration is made; and
      a braille input analysis processing unit that specifies characters input as braille according to the specified types of the one or plurality of fingers.
(21) The information processing apparatus according to (14) described above, in which
   the UI processing unit performs user interface processing for giving a notification for prompting fingerprint registration in response to display switching between the image for vertical orientation and the image for horizontal orientation being performed twice or more within a predetermined time.
(22) An information processing method by an information processing apparatus, the information processing method including:
   user interface processing for simultaneously bringing a plurality of fingers set as a fingerprint registration target into contact with an operation area;
   processing of reading each of fingerprints of the plurality of fingers brought into contact with the operation area; and
   processing of, for each of the plurality of fingers, making a registration of the read fingerprint and a type of the finger in association with each other.
(23) A program for causing an information processing apparatus to execute:
   user interface processing for simultaneously bringing a plurality of fingers set as a fingerprint registration target into contact with an operation area;
   processing of reading each of fingerprints of the plurality of fingers brought into contact with the operation area; and
   processing of, for each of the plurality of fingers, making a registration of the read fingerprint and a type of the finger in association with each other.

### <10. Part 2 of present technology>

The present technology can also adopt the following configurations.
(1) An information processing apparatus including:
   a UI processing unit that performs user interface processing for performing an association operation of associating a type of a finger with a function to be executed;
   a reading processing unit that detects the association operation with respect to an operation area and reads a fingerprint of a finger used for the association operation;
   a specification processing unit that specifies a type of the finger used for the association operation on the basis of the read fingerprint and registered fingerprint information; and
   an association processing unit that associates the specified type of the finger with the function selected in the association operation.
(2) The information processing apparatus according to (1) described above, in which
   the UI processing unit performs, as the user interface processing, processing of displaying a button operator for each function, and
   the association processing unit associates a type of the finger used for the association operation of selecting the button operator with a function of associating with the button operator.
(3) The information processing apparatus according to (2) described above, in which
   the UI processing unit performs processing of displaying an image of a hand capable of identifying a type of a finger, and
   in a case where the type of the finger is associated with the function, performs display of emphasizing the associated type of the finger by using the image of the hand.
(4) The information processing apparatus according to (3) described above, in which
   the UI processing unit determines which one of an image of one hand and an image of both hands is to be displayed as the image of the hand on the basis of a size of a display unit.
(5) The information processing apparatus according to any one of (3) described above to (4) described above, in which
   the UI processing unit displays the image of the hand for a predetermined time from a timing at which the type of the finger is associated with the function, and does not display the image of the hand for other times.
(6) The information processing apparatus according to any one of (1) described above to (5) described above, in which
   the UI processing unit performs processing of indicating, in a list, an association result of a type of the finger with respect to the function for each of use cases, and
   performs the user interface processing for a use case selected in a case where one of the use cases is selected.
(7) The information processing apparatus according to any one of (1) described above to (5) described above, in which
   the UI processing unit performs the user interface processing in a case where a setting change operation prepared in an application being activated is performed.
(8) The information processing apparatus according to (7) described above, in which
   the UI processing unit performs processing of displaying an image of a hand capable of identifying a type of a finger in a translucent manner.
(9) The information processing apparatus according to any one of (1) described above to (8) described above, in which
   in a case where the association processing unit associates a type of a finger with a function provided by a specific application, a function to be associated with for at least some of types of a finger includes an external function other than the function provided by the specific application.
(10) The information processing apparatus according to (9) described above, further including
   a correspondence processing unit that executes a function associated with a type of a finger specified by the specification processing unit on the basis of a fingerprint read after association and the registered fingerprint information,
   in which the correspondence processing unit does not execute the external function in a case where the type of the finger specified by the specification processing unit during activation of the specific application is other than a type of a finger associated with the external function.
(11) An information processing method by an information processing apparatus, the information processing method including:
   user interface processing for performing an association operation of associating a type of a finger with a function to be executed;
   processing of detecting the association operation with respect to an operation area and reading a fingerprint of a finger used for the association operation;
   processing of specifying a type of the finger used for the association operation on a basis of the read fingerprint and registered fingerprint information; and
   processing of associating the specified type of the finger with the function selected in the association operation.
(12) A program for causing an information processing apparatus to execute:
   user interface processing for performing an association operation of associating a type of a finger with a function to be executed;
   processing of detecting the association operation with respect to an operation area and reading a fingerprint of a finger used for the association operation;
   processing of specifying a type of the finger used for the association operation on the basis of the read fingerprint and registered fingerprint information; and
   processing of associating the specified type of the finger with the function selected in the association operation.

### REFERENCE SIGNS LIST

- 1: Information processing apparatus
- 1A: Tablet terminal (information processing apparatus)
- 1B: Smartphone (information processing apparatus)
- 3: Display unit
- 5: Operation area
- 77: Display unit
- 101: Functional area
- 102: Hand image display area
- 103, 103a, 103b: Button operator
- F1: UI processing unit
- F2: Reading processing unit
- F3: Fingerprint registration processing unit
- F4: Estimation processing unit
- F5: Specification processing unit
- F6: Correspondence processing unit
- F7: Braille input analysis processing unit
- F8: Association processing unit

## Claims

1. An information processing apparatus comprising:
a UI processing unit that performs user interface processing for simultaneously bringing a plurality of fingers set as a fingerprint registration target into contact with an operation area;
a reading processing unit that reads each of fingerprints of the plurality of fingers brought into contact with the operation area; and
a fingerprint registration processing unit that performs, for each of the plurality of fingers, processing of making a registration of the read fingerprint and a type of the finger in association with each other.

2. The information processing apparatus according to claim 1, wherein
the UI processing unit performs, as the user interface processing, display processing for prompting a first procedure of bringing only ball portions of the plurality of fingers into contact with the operation area.

3. The information processing apparatus according to claim 2, wherein
the UI processing unit performs, as the user interface processing, display processing for prompting a second procedure of sliding a contact area in the ball portions on the operation area so as to approach a center of a palm after the first procedure.

4. The information processing apparatus according to claim 3, wherein
the UI processing unit performs display processing for prompting a procedure of sliding the ball portion of a thumb so that an angle formed by an index finger and the thumb becomes large between the first procedure and the second procedure.

5. The information processing apparatus according to claim 2, wherein
the UI processing unit performs, as the user interface processing, processing for simultaneously bringing an entire hand including the ball portions of the plurality of fingers and a palm into contact with the operation area.

6. The information processing apparatus according to claim 1, further comprising
an estimation processing unit that estimates a size of a hand including the fingers brought into contact with the operation area,
wherein the UI processing unit changes display according to the size of the hand.

7. The information processing apparatus according to claim 1, wherein
the plurality of fingers includes at least five fingers of one of right and left hands.

8. The information processing apparatus according to claim 1, wherein
the plurality of fingers does not include a thumb.

9. The information processing apparatus according to claim 8, wherein
the UI processing unit performs, as the user interface processing, first user interface processing for reading fingerprints of four fingers other than the thumb and second user interface processing for reading a fingerprint of only the thumb.

10. The information processing apparatus according to claim 1, wherein
in a case where at least some of the plurality of fingers cannot be normally read, the UI processing unit performs user interface processing for bringing the fingers that cannot be read into contact with an operation area.

11. The information processing apparatus according to claim 10, wherein
the UI processing unit performs user interface processing for providing notification of the fingers that cannot be read.

12. The information processing apparatus according to claim 1, further comprising
a specification processing unit that specifies a type of the finger on a basis of a fingerprint read by fingerprint reading processing after the registration and information of which the registration is made,
wherein the fingerprint registration processing unit acquires corresponding fingerprint information on a basis of the specified type of the finger and updates the fingerprint information using the fingerprint read after the registration.

13. The information processing apparatus according to claim 1, further comprising:
a specification processing unit that specifies a type of the finger on a basis of a fingerprint read by fingerprint reading processing after the registration and information of which the registration is made; and
a correspondence processing unit that changes contents of corresponding processing according to the specified type of the finger.

14. The information processing apparatus according to claim 13, wherein
the specification processing unit specifies an angle of the finger on a basis of the fingerprint read by fingerprint reading processing after the registration and the information of which the registration is made, and
the correspondence processing unit executes processing of causing a display unit to display an image for vertical orientation in a case where the angle of the finger belongs to a first range, and executes processing of causing the display unit to display an image for horizontal orientation in a case where the angle of the finger belongs to a second range different from the first range.

15. The information processing apparatus according to claim 13, wherein
the specification processing unit specifies an angle of the finger on a basis of the fingerprint read by fingerprint reading processing after the registration and the information of which the registration is made, and
the correspondence processing unit sets orientation information to a captured image on a basis of the angle of the finger.

16. The information processing apparatus according to claim 15, wherein
the specification processing unit executes processing of specifying the angle of the finger after processing of capturing the captured image.

17. The information processing apparatus according to claim 13, wherein
the specification processing unit specifies whether an operation mode is one-hand operation or two-hand operation on a basis of the specified type of the finger, and
the correspondence processing unit displays an image on a right side of a display unit in a case where the operation mode is specified as the one-hand operation using a right hand, and displays an image on a left side of the display unit in a case where the operation mode is specified as the one-hand operation using a left hand.

18. The information processing apparatus according to claim 17, wherein
the specification processing unit specifies one-hand operation in a case where the specified type of the finger is a thumb, and specifies two-hand operation in a case where the specified type of the finger is other than the thumb.

19. The information processing apparatus according to claim 13, wherein
the reading processing unit reads a fingerprint of a finger used for an operation after the registration, and
in a case where the operation after the registration is an activation operation of a specific application, the correspondence processing unit makes an activation mode of the specific application different according to the specified type of the finger.

20. The information processing apparatus according to claim 1, wherein
the UI processing unit performs user interface processing of setting a braille input area that is an area that receives contact of one or a plurality of fingers and is not divided to correspond to each point of braille, and
the information processing apparatus further comprises:
a specification processing unit that specifies types of the one or plurality of fingers on a basis of fingerprints of the one or plurality of fingers read by fingerprint reading processing after the registration in the braille input area and information of which the registration is made; and
a braille input analysis processing unit that specifies characters input as braille according to the specified types of the one or plurality of fingers.

21. The information processing apparatus according to claim 14, wherein
the UI processing unit performs user interface processing for giving a notification for prompting fingerprint registration in response to display switching between the image for vertical orientation and the image for horizontal orientation being performed twice or more within a predetermined time.

22. An information processing method by an information processing apparatus, the information processing method comprising:
user interface processing for simultaneously bringing a plurality of fingers set as a fingerprint registration target into contact with an operation area;
processing of reading each of fingerprints of the plurality of fingers brought into contact with the operation area; and
processing of, for each of the plurality of fingers, making a registration of the read fingerprint and a type of the finger in association with each other.

23. A program for causing an information processing apparatus to execute:
user interface processing for simultaneously bringing a plurality of fingers set as a fingerprint registration target into contact with an operation area;
processing of reading each of fingerprints of the plurality of fingers brought into contact with the operation area; and
processing of, for each of the plurality of fingers, making a registration of the read fingerprint and a type of the finger in association with each other.
